(19) **Europäisches Patentamt / European Patent Office / Office européen des brevets**

(11) **EP 4 319 005 A1**

(12) # EUROPEAN PATENT APPLICATION
published in accordance with Art. 153(4) EPC

(43) Date of publication:
**07.02.2024 Bulletin 2024/06**

(21) Application number: **22799014.0**

(22) Date of filing: **11.04.2022**

(51) International Patent Classification (IPC):
$H04L\ 1/18\ ^{(2023.01)}$      $H04L\ 5/00\ ^{(2006.01)}$
$H04L\ 27/34\ ^{(2006.01)}$      $H04B\ 7/185\ ^{(2006.01)}$
$H04W\ 56/00\ ^{(2009.01)}$

(52) Cooperative Patent Classification (CPC):
**H04B 7/185; H04L 1/18; H04L 5/00; H04L 27/34; H04W 56/00**

(86) International application number:
**PCT/KR2022/005194**

(87) International publication number:
**WO 2022/234969 (10.11.2022 Gazette 2022/45)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.05.2021 KR 20210059426**

(71) Applicant: **Samsung Electronics Co., Ltd.**
**Suwon-si, Gyeonggi-do 16677 (KR)**

(72) Inventors:
• **KIM, Youngbum**
  **Suwon-si Gyeonggi-do 16677 (KR)**
• **YEO, Jeongho**
  **Suwon-si Gyeonggi-do 16677 (KR)**
• **KIM, Younsun**
  **Suwon-si Gyeonggi-do 16677 (KR)**
• **RYU, Hyunseok**
  **Suwon-si Gyeonggi-do 16677 (KR)**
• **PARK, Sungjin**
  **Suwon-si Gyeonggi-do 16677 (KR)**
• **CHOI, Seunghoon**
  **Suwon-si Gyeonggi-do 16677 (KR)**

(74) Representative: **Nederlandsch Octrooibureau**
**P.O. Box 29720**
**2502 LS The Hague (NL)**

(54) **METHOD AND DEVICE FOR INDICATING HARQ PROCESS IN WIRELESS COMMUNICATION SYSTEM**

(57)   The present disclosure relates to: a communication technique for merging IoT technology with a 5G communication system for supporting a data transmission rate higher than that of a 4G system; and a system therefor. The present disclosure can be applied to an intelligent service (for example, smart homes, smart buildings, smart cities, smart cars or connected cars, health care, digital education, retail businesses, and security-and safety-related services) on the basis of a 5G communication technology and an IoT-related technology. The present disclosure provides a method and a device for setting, indicating and operating a HARQ process ID.

FIG. 36

EP 4 319 005 A1

**Description**

**[Technical Field]**

The disclosure relates to a method and device for configuring the number of hybrid automatic repeat request (HARQ) processes and indicating an identifier (ID) value in a wireless or mobile communication system. Particularly, the disclosure relates to a method and device for using downlink and uplink HARQ processes in an environment in which the number of HARQ processes is high or variable, for example, in case that a user equipment (LTE) performs signal transmission or reception with a base station via a satellite in a satellite communication system.

**[Background Art]**

To meet the demand for wireless data traffic having increased since deployment of 4G communication systems, efforts have been made to develop an improved 5G or pre-5G communication system. Therefore, the 5G or pre-5G communication system is also called a "beyond 4G network" communication system or a "post LTE" system. The 5G communication system defined by 3GPP is called a "New Radio (NR) system".

The 5G communication system is considered to be implemented in ultrahigh frequency (mmWave) bands (e.g., 60GHz bands) so as to accomplish higher data rates. To decrease propagation loss of the radio waves and increase the transmission distance in the ultrahigh frequency bands, beamforming, massive multiple-input multiple-output (massive MIMO), full dimensional MIMO (FD-MIMO), array antenna, analog beam forming, large scale antenna techniques have been discussed in 5G communication systems and applied to the NR system.

In addition, in 5G communication systems, development for system network improvement is under way based on advanced small cells, cloud radio access networks (cloud RANs), ultra-dense networks, device-to-device (D2D) communication, wireless backhaul, moving network, cooperative communication, coordinated multi-points (CoMP), reception-end interference cancellation and the like.

In the 5G system, hybrid FSK and QAM modulation (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have also been developed.

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through connection with a cloud server, has emerged. As technology elements, such as "sensing technology", "wired/wireless communication and network infrastructure", "service interface technology", and "security technology" have been demanded for IoT implementation, a sensor network, a machine-to-machine (M2M) communication, machine type communication (MTC), and so forth have been recently researched. Such an IoT environment may provide intelligent Internet technology (IT) services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply 5G communication systems to IoT networks. For example, technologies such as a sensor network, machine type communication (MTC), and machine-to-machine (M2M) communication may be implemented by beamforming, MIMO, and array antennas. Application of a cloud radio access network (cloud RAN) as the above-described big data processing technology may also be considered an example of convergence of the 5G technology with the IoT technology.

Satellite launching costs have been dramatically decreased in the late 2010s to 2020s and thus, there have been a lot of companies that desire to provide communication services via satellites. Accordingly, a satellite network is rising as a next generation network system that complements an existing terrestrial network. There may be possibility that the satellite network will not provide a terrestrial network level of user experience. However, it is advantageous that the satellite network is capable of providing a communication service in an area where a terrestrial network is difficult to be established or in a disaster situation. In addition, it is economical since, recently, the cost of satellite launching is dramatically decreased as described above. In addition, some companies and the 3rd generation partnership project (3GPP) standard are conducting research on direct communication between a UE (e.g., a smartphone) and a satellite.

**[Disclosure of Invention]**

**[Technical Problem]**

In case that a user equipment (UE) desires to connect to a base station via a satellite in a satellite network, a high propagation delay time (propagation delay) may occur when electromagnetic waves arrive due to a long distance, such as a hundreds of km or thousands of km, or a longer, between the LTE and the satellite, and between the satellite and the base station on the ground. Generally, the propagation delay time between the UE and the satellite or the propagation delay time between the satellite and the base station in the satellite network is significantly higher than a propagation delay time that may occur when the UE and the base station directly communicate in the terrestrial network.

The legacy LTE or NR system is designed to perform retransmission in case that initial data transmission fails in the physical layer so that a reception end combines received values of the data at the initial transmission and the retransmission, and decoding is performed. To this end, HARQ feedback and retransmission may be used. This is a scheme that combines a forward error correction (FEC) scheme that additionally sends a parity bit by using an error correction code so as to correct an error and an automatic repeat request (ARQ) scheme that retransmits transmitted data, and a receiver may identify whether received data has an error, and may request retransmission from a transmitter in case that an error is present. In case of the HARQ transmission scheme, once data is transmitted, a period of time may be spent until feedback information indicating whether an error is present is transmitted again to a transmission end and thus, another data may be transmitted during the period of time. In this instance, in order to distinguish the data from other data transmitted in advance, an HARQ process may be defined and an index number may be assigned for each HARQ process. That is, other data may be mapped to HARQ processes having different indices numbers and may be transmitted. Transceivers may identify data by using the ID value of an HARQ process. In case that data is transmitted using any one HARQ process ID, a receiver may delete data transmitted previously using the same HARQ process ID from a memory (or a soft buffer) or may overwrite with new data, and may receive the new data.

That is, as many different types of data as the number of HARQ processes used by a transceiver, may be transmitted or received successively. In the case of the legacy NR system, a maximum of 16 HARQ processes are used in a downlink and an uplink and thus, 16 pieces of different data may be successively transmitted of received. However, in a non-terrestrial network (NTN), information indicating whether data transmission performed once is successfully transmitted or fails may arrive at a transmitter from a receiver after dozens to hundreds of ms and thus, continuous data transmission may be difficult by only using 16 HARQ processes. Accordingly, there may be a larger number of HARQ processes to perform data transmission or reception. To this end, there may be a method of configuring or indicating the number of HARQ processes, and indicating an HARQ process ID.

**[Solution to Problem]**

A method implemented by a user equipment (UE) according to an embodiment to overcome the above-described drawback may include an operation of transmitting, to a base station, capability information indicating whether the UE supports the number of increased hybrid automatic repeat request (HARQ) processes, an operation of receiving information for configuring the number of increased HARQ processes from the base station in case that the UE supports the number of increased HARQ processes, and an operation of performing communication with the base station based on an HARQ process identifier (ID) in association with the number of increased HARQ processes configured based on the information.

A method implemented by a base station according to an embodiment to overcome the above-described drawback may include an operation of receiving, from a LTE, capability information indicating whether the LTE supports the number of increased hybrid automatic repeat request (HARQ) processes, an operation of transmitting information for configuring the number of increased HARQ processes to the LTE in case that the LTE supports the number of increased HARQ processes, and an operation of performing communication with the UE based on an HARQ process identifier (ID) in association with the number of increased HARQ processes configured based on the information.

A UE according to an embodiment to overcome the above-described drawback may include a transceiver configured to perform signal transmission or reception and a controller connected to the transceiver, and the controller is configured to transmit, to a base station, capability information associated with whether the UE supports the number of increased hybrid automatic repeat request (HARQ) processes, to receive, from the base station, information for configuring the number of increased HARQ processes in case that the UE supports the number of increased HARQ processes, and to perform communication with the base station based on an HARQ process identifier (ID) in association with the number of increased HARQ processes configured based on the information.

A base station according to an embodiment to overcome the above-described drawback may include a transceiver configured to perform signal transmission or reception and a controller connected to the transceiver, and the controller is configured to receive, from a LTE, capability information associated with whether the UE supports the number of increased hybrid automatic repeat request (HARQ) processes, to transmit information for configuring the number of increased HARQ processes in case that the UE supports the number of increased HARQ processes, and to perform communication with the UE based on an HARQ process identifier (ID) in association with the number of increased HARQ processes configured based on the information.

**[Advantageous Effects of Invention]**

According to various embodiments proposed, an HARQ process may be efficiently configured, indicated, and operated in the state in which a large number of HARQ processes are required.

**[Brief Description of Drawings]**

FIG. 1 is a diagram illustrating a basic structure of the time-frequency domain which is a radio resource area where data or a control channel is transmitted in a downlink or an uplink of an NR system.
FIG. 2 is a diagram illustrating a control region in which a downlink control channel is transmitted in a 5G wireless communication system.
FIG. 3 is a diagram illustrating an example in which eMBB, URLLC, and mMTC data are allocated in the entire system frequency band.
FIG. 4 is a diagram illustrating an example in which eMBB, URLLC, and mMTC data are allocated in separate system frequency bands.
FIG. 5 is a diagram illustrating an example of a process in which a single transport block is divided into multiple code blocks, and CRCs are added.
FIG. 6 is a diagram illustrating a synchronization signal (SS) and a physical broadcast channel (PBCH) which are mapped in the frequency and time domain in an NR system.
FIG. 7 is a diagram illustrating symbols in which an SS/PBCH block is capable of being transmitted based on a subcarrier spacing (SCS).
FIG. 8 is a diagram illustrating a user equipment (UE) processing time based on timing advance when a LTE receives a first signal and transmits a second signal in response thereto in a 5G or NR system according to an embodiment.
FIG. 9 is a diagram illustrating an example of scheduling and transmitting data (e.g., TBs) based on slots, receiving a HARQ-ACK feedback associated with the corresponding data, and performing retransmission based on the feedback.
FIG. 10 is a diagram illustrating an example of a communication system that uses a satellite.
FIG. 11 is a diagram illustrating a revolution cycle of a communication satellite around the earth based on the altitude or height of the satellite.
FIG. 12 is a conceptual diagram of satellite-LTE direct communication.
FIG. 13 is a diagram illustrating a scenario of utilizing satellite-UE direct communication.
FIG. 14 is a diagram illustrating an example of calculation of an expected data transmission rate (throughput) in an uplink in case that an LEO satellite located at an altitude of 1200 km and a LTE on the earth perform direct communication.
FIG. 15 is a diagram illustrating an example of calculation of an expected data transmission rate (throughput) in an uplink in case that a GEO satellite located at an altitude of 35,786 km and a LTE on the earth perform direct communication.
FIG. 16 is a diagram illustrating a pathloss value based on a pathloss model between a LTE and a satellite, and a pathloss based on a pathloss model between a LTE and a base station in a terrestrial network communication.
FIG. 17 is a diagram illustrating an equation that calculates the amount of Doppler shift that a signal experiences when the signal transferred from a satellite is received by a user on the earth according to the altitude and location of the satellite and the location of the user of a UE on the earth, and a calculation result.
FIG. 18 is a diagram illustrating the speed of a satellite calculated at the altitude of the satellite.
FIG. 19 is a diagram illustrating Doppler shift that different UEs experience in a single beam that a satellite transmits to the earth.
FIG. 20 is a diagram illustrating a difference in Doppler shift incurred in a single beam, depending on the location of a satellite determined based on an elevation angle.
FIG. 21 is a diagram illustrating a latency taken from a UE to a satellite and a round trip latency among UE-satellite-base station, depending on the location of a satellite determined based on an elevation angle.
FIG. 22 is a diagram illustrating the maximum difference value in a round trip latency that differs depending on the location of a user in a single beam.

FIG. 23 is a diagram illustrating an example of the structure of information of a random access response (RAR).

FIG. 24 is a diagram illustrating an example of a relationship between a reception time of a PRACH preamble configuration resource and a reception time of an RAR in an LTE system.

FIG. 25 is a diagram illustrating an example of a relationship between a reception time of a PRACH preamble configuration resource and a reception time of an RAR in a 5G NR system.

FIG. 26 is a diagram illustrating an example of timing of a downlink frame and an uplink frame from the perspective of a LTE.

FIG. 27A is a diagram illustrating an example of continuous movement of a satellite from the perspective of a UE located on the ground of the earth or on the earth, as the satellite revolves around the earth along a satellite orbit.

FIG. 27B is a diagram illustrating an example of the structure of an artificial satellite.

FIG. 28 is a diagram schematically illustrating an example of a message transferred from a MAC layer to a physical layer in a downlink in a communication system according to various embodiments of the disclosure.

FIG. 29 is a diagram schematically illustrating an example of a message transferred from a MAC layer to a physical layer in an uplink in a communication system according to various embodiments of the disclosure.

FIG. 30 is a diagram schematically illustrating an example of the format of the MAC payload of an RAR or the MAC payload of MsgB in a communication system according to various embodiments of the disclosure.

FIG. 31 is a diagram schematically illustrating an uplink transmission operation in case that a LTE directly calculates a TA value in a communication system according to various embodiments of the disclosure.

FIG. 32 is a diagram schematically illustrating an example of a difference in propagation delay time between a terrestrial network and a satellite network in a communication system according to various embodiments of the disclosure.

FIG. 33 is a diagram schematically illustrating an example of applying a TA to a terrestrial network and a satellite network in a communication system according to various embodiments of the disclosure.

FIG. 34 is a diagram schematically illustrating an example of the maximum difference in round trip latency in case that a plurality of UEs are located in a single beam that a satellite supports in a communication system according to various embodiments of the disclosure.

FIG. 35 is a diagram schematically illustrating an example of a wireless round trip latency between a UE and a base station, which varies depending on the movement of a satellite in a communication system according to various embodiments of the disclosure.

FIG. 36 is a block diagram schematically illustrating the internal structure of a LTE according to various embodiments of the disclosure.

FIG. 37 is a block diagram schematically illustrating the internal structure of a satellite according to various embodiments of the disclosure.

FIG. 38 is a block diagram schematically illustrating the internal structure of a base station according to various embodiments of the disclosure.

FIG. 39 is a diagram schematically illustrating the structure of a base station according to various embodiments of the disclosure.

FIG. 40 is a diagram schematically illustrating the structure of a LTE according to embodiments of the disclosure.

**[Mode for the Invention]**

Hereinafter, embodiments of the disclosure will be described in detail with reference to the accompanying drawings. It should be noted that, in the drawings, the same or like elements are designated by the same or like reference signs as much as possible. Furthermore, a detailed description of known functions or configurations that may make the subject matter of the disclosure unclear will be omitted.

In describing embodiments of the disclosure, descriptions related to technical contents well-known in the art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Further, the size of each element does not completely reflect the actual size. In the drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used herein, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" or may be implemented to reproduce one or more CPUs within a device or a security multimedia card.

The new radio (NR) access technology which is a new 5G communication technology is designed to enable various services to be freely multiplexed in time and frequency resources. Accordingly, a waveform/numerology or the like and a reference signal or the like may be dynamically or freely allocated as a corresponding service is needed. In order to provide an optimal service to a user equipment (UE) in wireless communication, it is important to optimize data transmission by measuring the quality of a channel and the amount of interference. Accordingly, accurate measurement of a channel state is essential. However, unlike 4G communication in which channel and interference characteristics do not significantly change according to a frequency resource, in the case of a 5G channel, channel and interference characteristics significantly change according to a service. Accordingly, to enable separate measuring of the channel and interference characteristics, a subset in a frequency resource group (FRG) level needs to be supported. The types of services supported in the NR system may be categorized into enhanced mobile broadband (eMBB), massive machine type communications (mMTC), ultra-reliable and low-latency communications (URLLC), and the like. eMBB is a service for high-speed transmission of large-capacity data. mMTC is a service for UE power minimization and multi-UE access. URLLC is a service for high reliability and low latency. Different requirements may be applied depending on the type of service applied to a UE.

As described above, a plurality of services may be provided to a user in a communication system. In order to provide a plurality of services to a user, there is a desire for a method and a device for providing services according to respective characteristics within the same time interval.

A wireless communication system is evolving from the initial voice-based service to a broadband wireless communication system for providing high-speed and high-quality packet data services using communication standards, such as high-speed packet access (HSPA) of 3GPP, LTE {long-term evolution or evolved universal terrestrial radio access (E-UTRA)}, LTE-Advanced (LTE-A), LTE-Pro, high-rate packet data (HRPD) of 3GPP2, ultra-mobile broadband (UMB), IEEE 802.16e, and the like, as well as typical voice-based services. Furthermore, standards for 5G or new radio (NR) systems as the 5th generation wireless communication system are now under development.

As a typical example of the broadband wireless communication system, the NR system employs an orthogonal frequency division multiplexing (OFDM) scheme in a downlink (DL) and an uplink (UL). More specifically, the NR system employs a cyclic-prefix OFDM (CP-OFDM) scheme in a downlink and employs two schemes, that is, the CP-OFDM scheme and discrete Fourier transform spreading (DFT-S-OFDM) scheme in an uplink. The uplink indicates a radio link through which a user equipment (UE) or a mobile station (MS) transmits data or control signals to a base station (BS) or (gNode B), and the downlink indicates a radio link through which the base station transmits data or control signals to the UE. The above multiple access scheme separates data or control information of respective users by allocating and operating time-frequency resources for transmitting the data or control information for each user so as to avoid overlapping each other, that is, so as to establish orthogonality.

The NR system employs a hybrid automatic repeat request (HARQ) scheme in which, when decoding is unsuccessful at the initial transmission, the corresponding data is retransmitted in a physical layer. In the HARQ scheme, when a receiver fails to accurately decode data, the receiver transmits information (negative acknowledgement: NACK) informing a transmitter of the unsuccessful decoding and thus the transmitter may retransmit the corresponding data in the physical layer. The receiver may increase data reception performance by combining the data retransmitted by the transmitter with the data the decoding of which has previously failed. Also, when the receiver accurately decodes data, the receiver transmits information (acknowledgement: ACK) informing the transmitter of the successful decoding and thus the transmitter may transmit new data.

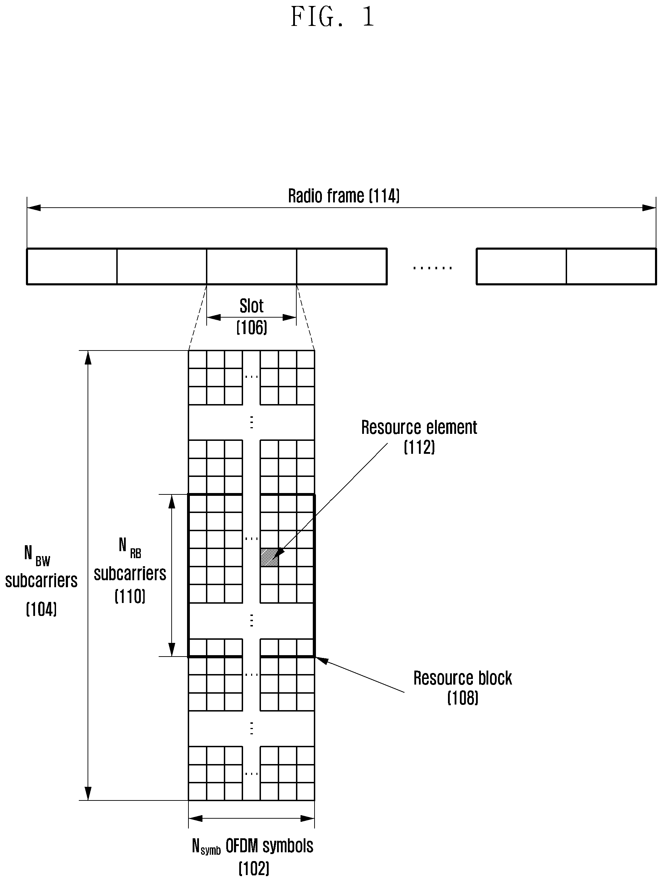

FIG. 1 is a diagram illustrating a basic structure of the time-frequency domain which is a radio resource area in which data or a control channel is transmitted in a downlink or an uplink of an NR system.

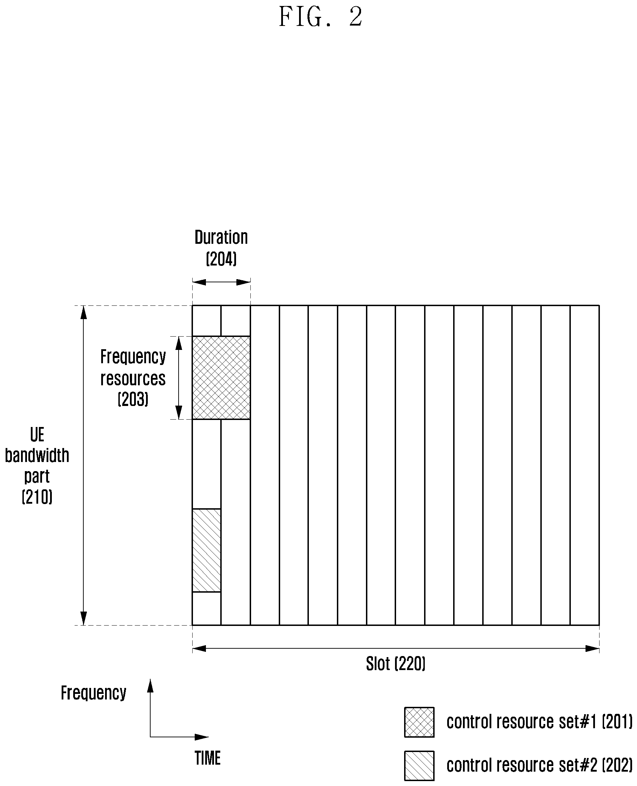

Referring to FIG. 1, the horizontal axis denotes the time domain, and the vertical axis denotes the frequency domain. The minimum transport unit in the time domain is an OFDM symbol, and Nsymb OFDM symbols 102 may be configured as a single slot 106. The length of a subframe is defined to be 1.0ms, and the length of a radio frame 114 is defined to be 10ms. The minimum transport unit in the frequency domain is a subcarrier. The entire system transmission bandwidth may include a total of N^BW subcarriers 104. One frame may be defined to be 10ms. One subframe may be defined to be 1ms and thus, one frame may include a total of 10 subframes. One slot may be defined to be 14 OFDM symbols (i.t., the number of symbols per slot $(N_{symb}^{slot}) = 14$ ). One subframe may include one or multiple slots, and the number of slots per one subframe may be different based on a set value $\mu$ configured for a subcarrier spacing. The example of FIG. 2 illustrates the case of $\mu=0$ as a subcarrier spacing set value and the case of $\mu=1$. In case of $\mu=0$, one subframe includes one slot. In case of $\mu=1$, one subframe includes two slots. That is, depending on a set value $\mu$ for a subcarrier spacing, the number of slots per subframe ( $N_{slot}^{subframe,\mu}$ ) may differ. Accordingly, the number of slots per frame ( $N_{slot}^{frame,\mu}$ ) may also differ. $N_{slot}^{subframe,\mu}$ and $N_{slot}^{frame,\mu}$ based on a subcarrier spacing set value $\mu$ may be defined as listed in Table 1 as below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

A user equipment (UE) before being radio resource control (RRC)-connected may receive, from a base station via a master information block (MIB), a configuration of an initial bandwidth part (initial BWP) for initial access. More specifically describing, at the initial access stage, the UE may receive configuration information associated with a search space and a control region (control resource set (CORESET)) in which a physical downlink control channel (PDCCH) is transmitted, in order to receive, via the MIB, system information (corresponding to remaining system information (RMSI) or system information block 1 (SIB1)) needed for initial access. Each of the control region and the search space configured via the MIB may be regarded as an identity (ID) of 0. The base station may inform the LTE of configuration information such as frequency allocation information, time allocation information, numerology, or the like in association with control region #0, via the MIB. In addition, the base station may inform the LTE of configuration information related to a monitoring cycle and an occasion associated with control region #0, that is, configuration information associated with search space #0, via the MIB. The UE may consider, as an initial bandwidth part for initial access, a frequency range configured as control region #0 obtained from the MIB. In this instance, the identity (ID) of the initial bandwidth part may be considered as 0.

The MIB may include information shown below.

MIB

```
-- ASN1START
-- TAG-MIB-START

MIB ::=                          SEQUENCE {
    systemFrameNumber                BIT STRING (SIZE (6)),
    subCarrierSpacingCommon          ENUMERATED {scs15or60, scs30or120},
    ssb-SubcarrierOffset         INTEGER (0..15),
    dmrs-TypeA-Position              ENUMERATED {pos2, pos3},
    pdcch-ConfigSIB1                 PDCCH-ConfigSIB1,
    cellBarred                       ENUMERATED {barred, notBarred},
    intraFreqReselection             ENUMERATED {allowed, notAllowed},
    spare                            BIT STRING (SIZE (1))
}


-- TAG-MIB-STOP
-- ASN1STOP
```

| MIB field descriptions |
|---|
| cell Barred<br>Value barred means that the cell is barred, as defined in TS 38.304 [20]. |
| dmrs-TypeA-Position<br>Position of (first) DM-RS for downlink (see TS 38.211 [16], clause 7.4.1.1.2) and uplink (see TS 38.211 [16], clause 6.4.1.1.3). |
| intraFreqReselection<br>Controls cell selection/reselection to intra-frequency cells when the highest ranked cell is barred, or treated as barred by the UE, as specified in TS 38.304 [20]. |
| pdcch-ConfigSIB1<br>Determines a common ControlResourceSet (CORESET), a common search space and necessary PDCCH parameters. If the field ssb-SubcarrierOffset indicates that SIB1 is absent, the field pdcch-ConfigSIB1 indicates the frequency positions where the UE may find SS/PBCH block with SIB1 or the frequency range where the network does not provide SS/PBCH block with SIB1 (see TS 38.21.3 [13], clause 13). |
| ssb-SubcarrierOffset<br>Corresponds to kSSS (see TS 38.213 [13]), which is the frequency domain offset between SSB and the overall resource block grid in number of subcarriers. (See TS 38.211 [16], clause 7.4.3.1).<br>The value range of this field may be extended by an additional most significant bit encoded within PBCH as specified in TS 38.213 [13],<br>This field may indicate that this cell does not provide SIB1 and that there is hence no CORESET#0 configured in MIB (see TS 38.213 [13], clause 13). In this case, the field pdcch-ConfigSIB1 may indicate the frequency positions where the UE may (not) find a SS/PBCH with a control resource set and search space for SIB1 (see TS 38.213 [13], clause 13). |
| subCarrierSpacingCommon<br>Subcarrier spacing for SIB1, Msg.2/4 for initial access, paging and broadcast SI-messages. If the UE acquires this MIB on an FR1 carrier frequency, the value scs15or60 corresponds to 15 kHz and the value scs30or120 corresponds to 30 kHz. If the UE acquires this MIB on an FR2 carrier frequency, the value scs15or60 corresponds to 60 kHz and the value scs30or120 corresponds to 120 kHz |
| |
| systemFrameNumber |

(continued)

| The 6 most significant bits (MSB) of the 10-bit System Frame Number (SFN). The 4 LSB of the SFN are conveyed in the PBCH transport block as part of channel coding (i.e. outside the MIB encoding), as defined in clause 7.1 in TS 38.212 [17]. |
| --- |

In a method of configuring a bandwidth part, UEs before being RRC-connected may receive configuration information associated with an initial bandwidth part via an MIB in the initial access stage. More specifically describing, a LTE may receive, from an MIB of a physical broadcast channel (PBCH), a configuration of a control region for a downlink control channel in which a downlink control information (DCI) that schedules an SIB may be transmitted. In this instance, the bandwidth of the control region configured via the MIB may be regarded as an initial bandwidth part, and the UE may receive, via the configured initial bandwidth part, a physical downlink shared channel (PDSCH) that transmits an SIB. In addition to the purpose of receiving the SIB, the initial bandwidth part may be utilized for the purpose of other system information (OSI), paging, or random access.

In case that one or more bandwidth parts are configured for a LTE, a base station may indicate changing of a bandwidth part by using a bandwidth part indicator field in DCI.

A basic resource unit in the time-frequency domain is a resource element (RE) 112, and an RE is expressed by an OFDM symbol index and a subcarrier index. A resource block (RB) 108 (or a physical resource block (PRB)) may be defined to be NRB consecutive subcarriers 110 in the frequency domain. Generally, the minimum transport unit of data is an RB. In the NR system, generally, Nsymb = 14 and NRB=12. NBW is proportional to a system transmission bandwidth. The data rate may be increased in proportion to the number of RBs scheduled for a LTE.

In the NR system, a downlink transmission bandwidth and an uplink transmission bandwidth may be different from each other in the case of an FDD system that operates a downlink and an uplink based on a frequency A channel bandwidth may be an RF bandwidth corresponding to a system transmission bandwidth. Table 2 and Table 3 show a part of the correspondence relationship of a system transmission bandwidth, a subcarrier spacing, and a channel bandwidth defined in the NR system, respectively in a frequency band lower than 6GHz and a frequency band higher than 6GHz. For example, in case of the NR system that has a channel bandwidth of 100MHz with an subcarrier spacing of 30kHz, the transmission bandwidth may include 273 RBs. N/A in the following table may be a bandwidth-subcarrier combination that is not supported by the NR system. Table 2 below shows the configuration of frequency range 1 (FR1) and Table 3 shows the configuration of FR2.

[Table 2]

| SCS (kHz) | 5MHz | 10MHz | 15MHz | 20 MHz | 25 MHz | 30 MHz | 40 MHz | 50 MHz | 60 MHz | 80 MHz | 90 MHz | 100 MHz |
| --- | --- | --- | --- | --- | --- | --- | --- | --- | --- | --- | --- | --- |
| | NRB | NRB | NRB | NRB | NRB | NRB | NRB | NRB | NRB | NRB | NRB | NRB |
| 15 | 25 | 52 | 79 | 106 | 133 | 160 | 216 | 270 | N/A | N/A | N/A | N/A |
| 30 | 11 | 24 | 38 | 51 | 65 | 78 | 106 | 133 | 162 | 217 | 245 | 273 |
| 60 | N/A | 11 | 18 | 24 | 31 | 38 | 51 | 65 | 79 | 107 | 121 | 135 |

[Table 3]

| Channel bandwidth BWChannel [MHz] | subcarrier. width | 50MHz | 100MHz | 200MHz | 400 MHz |
| --- | --- | --- | --- | --- | --- |
| Transmission bandwidth configuration NRB | 60 kHz | 66 | 132 | 264 | N/A |
| | 120 kHz | 32 | 66 | 132 | 264 |

In the NR system, a frequency range may be separately defined as FR1 and FR2, as shown in Table 4 below.

[Table 4]

| Frequency range designation | Corresponding frequency range |
| --- | --- |
| FR1 | 450 MHz - 7125 MHz |
| FR2 | 24250 MHz - 52600 MHz |

The above-mentioned ranges of FR1 and FR2 may be changed to be different, and may be applied. For example, the frequency range of FR1 may be changed to the range of 450MHz to 6000MHz and may be applied.

Subsequently, a synchronization signal (SS)/PBCH block (or SSB) in 5G will be described.

An SS/PBCH block may be a physical layer channel block including a primary SS (PSS), a secondary SS (SSS), and a PBCH. A detailed description thereof is provided as follow.

- PSS: acts as a reference signal for downlink time/frequency synchronization, and provides part of cell ID information.
- SSS: acts as a reference for downlink time/frequency synchronization, and provides the remaining cell ID information that a PSS does not provide. In addition, an SSS may act as a reference signal for demodulation of a PBCH.
- PBCH: provides essential system information needed for a LTE to perform data channel and control channel transmission or reception. The essential system information may include search space-related control information indicating radio resource mapping information of a control channel, scheduling control information associated with a separate data channel that transmits system information, and the like.
- SS/PBCH block: an SS/PBCH block includes a combination of a PSS, an SSS, and a PBCH. A single or multiple SS/PBCH blocks may be transmitted within 5ms, and each transmitted SS/PBCH block may be identified based on an index.

At the initial access stage, a UE may detect a PSS and an SSS, and may decode a PBCH. The UE may obtain an MIB from the PBCH, whereby control region #0 (corresponding to a control region having a control region index of 0) may be configured. The UE may assume that a selected SS/PBCH block and a demodulation reference signal (DMRS) transmitted in control region #0 are in a quasi co location (QCL), and may monitor control region #0. The UE may receive system information via downlink control information transmitted in control region #0. From the received system information, the UE may obtain random access channel (RACH)-related configuration information needed for initial access. The UE may transmit a physical RACH to a base station in consideration of the selected SS/PBCH index, and the base station that receives the PRACH may obtain information associated with the index of the SS/PBCH block that the UE selects. Through the above-described processes, the base station may recognize a block that the UE selects among SS/PBCH blocks and the fact that the UE monitors control region #0 related to the selected block.

Subsequently, downlink control information (DCI) in the 5G system will be described in detail.

In the 5G system, scheduling information for uplink data (or a physical uplink shared channel (PUSCH)) or downlink data (or a physical downlink shared channel (PDSCH)) may be transferred from a base station to a LTE via DCI. The LTE may perform monitoring of a DCI format for fallback and a DCI format for non-fallback in association with a PUSCH or PDSCH. The fallback DCI format may be configured as a fixed field predefined between the base station and the UE, and the non-fallback DCI format may include a configurable field. In addition, various types of DCI formats may be used, and whether a corresponding DCI is for DCI for power control, DCI for notifying a slot format indicator (SFI), or the like may be indicated for each format.

The DCI may go through a channel coding a modulation process, and may be transmitted via a PDCCH that is a physical downlink control channel. A cyclic redundancy check (CRC) is added to a DCI message payload, and the CRC may be scrambled by a radio network temporary identifier (RNTI) corresponding to a UE identity. Different RNTIs may be used depending on the purpose of a DCI message, for example, UE-specific data transmission, power control command, random access response, or the like. That is, an RNTI is not explicitly transmitted, but is transmitted by being included in a CRC calculation process. In case that a DCI message transmitted in a PDCCH is received, the UE may identify a CRC by using an allocated RNTI, and may recognize that the corresponding message is transmitted for the UE in case a CRC identification result is right. The PDCCH may be mapped to a control resource set (CORESET) configured for the UE, and may be transmitted.

For example, DCI that schedules a PDSCH associated with system information (SI) may be scrambled by an SI-RNTI. DCI that schedules a PDSCH associated with a random access response (RAR) message may be scrambled by an RA-RNTI. DCI that schedules a PDSCH associated with a paging message may be scrambled by a P-RNTI. DCI that reports a slot format indicator (SFI) may be scrambled by an SFI-RNTI. DCI that reports a transmit power control (TPC) may be scrambled by a TPC-RNTI. DCI that schedules a UE-specific PDSCH or PUSCH may be scrambled by a cell RNTI (C-RNTI).

DCI format 0_0 may be used as a fallback DCI that schedules a PUSCH. In this instance, a CRC may be scrambled by a C-RNTI. DCI format 0_0 with a CRC, scrambled by a C-RNTI, may include, for example, the following information.

[Table 5]

| | |
|---|---|
| - Identifier for DCI formats | - [1] bit |

(continued)

| | |
|---|---|
| - Frequency domain resource assignment | $\left\lceil \log_2(N_{RB}^{UL,BWP}(N_{RB}^{UL,BWP}+1)/2) \right\rceil$ bits |
| - Time domain resource assignment | - X bits |
| - Frequency hopping flag | - 1 bit. |
| - Modulation and coding scheme | - 5 bits |
| - New data indicator | - 1 bit |
| - Redundancy version - 2 bits | |
| - HARQ process number | - 4 bits |
| - TPC command for scheduled PUSCH (transmit power control command for scheduled PUSCH) | - [2] bits |
| - UL/SUL indicator (uplink/supplementary uplink (UL) indicator) | - 0 or 1 bit |

DCI format 0_1 may be used as a non-fallback DCI that schedules a PUSCH. In this instance, a CRC may be scrambled by a C-RNTI. DCI format 0_1 with a CRC, scrambled by a C-RNTI, may include, for example, the following information.

[Table 6]

- Carrier indicator - 0 or 3 bits

- UL/SUL indicator - 0 or 1 bit

- Identifier for DCI formats - [1] bits

- Bandwidth part indicator - 0, 1 or 2 bits

- Frequency domain resource assignment

    • For resource allocation type 0 , $\left\lceil N_{RB}^{UL,BWP}/P \right\rceil$ bits

    • For resource allocation type 1 , $\left\lceil \log_2(N_{RB}^{UL,BWP}(N_{RB}^{UL,BWP}+1)/2) \right\rceil$ bits

- Time domain resource assignment -1, 2, 3, or 4 bits

- VRB-to-PRB mapping (virtual resource block-to-physical resource block mapping)

            - 0 or 1 bit, only for resource allocation type 1.

• 0 bit if only resource allocation type 0 is configured;

• 1 bit otherwise.

- Frequency hopping flag - 0 or 1 bit, only for resource allocation type 1.

• 0 bit if only resource allocation type 0 is configured;

• 1 bit otherwise.

- Modulation and coding scheme - 5 bits

- New data indicator - 1 bit

- Redundancy version - 2 bits

- HARQ process number - 4 bits

- 1st downlink assignment index - 1 or 2 bits

• 1 bit for semi-static HARQ-ACK codebook :

• 2 bits for dynamic HARQ-ACK codebook with single HARQ-ACK codebook

- 2nd downlink assignment index - 0 or 2 bits

• 2 bits for dynamic HARQ-ACK codebook with two HARQ-ACK sub-codebooks ;

• 0 bit otherwise.

- TPC command for scheduled PUSCH - 2 bits

      - SRS resource indicator - $\left\lceil \log_2\left(\sum_{k=1}^{L_{max}}\binom{N_{SRS}}{k}\right) \right\rceil$ or $\left\lceil \log_2(N_{SRS}) \right\rceil$ bits

(continued)

$$\left\lceil \log_2\left( \sum_{k=1}^{L_{max}} \binom{N_{SRS}}{k} \right) \right\rceil$$ bits for non-codebook based PUSCH transmission;

$$\left\lceil \log_2\left( N_{SRS} \right) \right\rceil$$ bits for codebook based PUSCH transmission .

- Precoding information and number of layers up to 6 bits
- Antenna ports - up to 5 bits
- SRS request - 2 bits
- CSI request - 0, 1, 2, 3, 4, 5, or 6 bits
- CBG transmission information (code block group tranmsissio information) - 0, 2, 4, 6, or 8 bits
- PTRS-DMRS association (phase tracking refernece signal-demodulation reference signal association) - 0 or 2 bits.
- beta_offset indicator - 0 or 2 bits
- DMRS sequence initialization (demodulation reference signal sequence initialization) - 0 or 1 bit

DCI format 1_0 may be used as a fallback DCI that schedules a PDSCH. In this instance, a CRC may be scrambled by a C-RNTI. DCI format 1_0 with a CRC, scrambled by a C-RNTI may include, for example, the following information.

[Table 7]

- Identifier for DCI formats - [1] bit
- Frequency domain resource assignment $\left\lceil \log_2( N_{RB}^{DL,BWP} ( N_{RB}^{DL,BWP} + 1)/2) \right\rceil$ bits
- Time domain resource assignment - X bits
- VRB-to-PRB mapping - 1 bit.
- Modulation and coding scheme - 5 bits
- New data indicator - 1 bit
- Redundancy version - 2 bits
- HARQ process number - 4 bits
- Downlink assignment index - 2 bits
- TPC command for scheduled PUCCH - [2] bits
- PUCCH resource indicator (physical uplink control channel, PUCCH) resource indicator - 3 bits
- PDSCH-to-HARQ feedback timing indicator
  - [3] bits

DCI format 1_1 may be used as a non-fallback DCI that schedules a PDSCH. In this instance, a CRC may be scrambled by a C-RNTI. DCI format 1_1 with a CRC, scrambled by a C-RNTI, may include, for example, the following information.

[Table 8]

- Carrier indicator - 0 or 3 bits
- Identifier for DCI formats - [1] bits
- Bandwidth part indicator - 0, 1 or 2 bits
- Frequency domain resource assignment

  • For resource allocation type 0, $\left\lceil N_{RB}^{DL,BWP} / P \right\rceil$ bits

  • For resource allocation type 1, $\left\lceil \log_2( N_{RB}^{DL,BWP} ( N_{RB}^{DL,BWP} + 1)/2) \right\rceil$ bits
- Time domain resource assignment -1, 2, 3, or 4 bits
- VRB-to-PRB mapping - 0 or 1 bit, only for resource allocation type 1.
. 0 bit if only resource allocation type 0 is configured;

(continued)

• 1 bit otherwise.
- PRB bundling size indicator - 0 or 1 bit
- Rate matching indicator - 0, 1, or 2 bits
- ZP CSI-RS trigger - 0, 1, or 2 bits
For transport block 1 :
- Modulation and coding scheme - 5 bits
- New data indicator - 1 bit
- Redundancy version - 2 bits
For transport block 2:
- Modulation and coding scheme - 5 bits
- New data indicator - 1 bit
- Redundancy version - 2 bits
- HARQ process number - 4 bits
- Downlink assignment index - 0 or 2 or 4 bits
- TPC command for scheduled PUCCH - 2 bits
- PUCCH resource indicator - 3 bits
- PDSCH -to- HARQ_feed back timing indicator - 3 bits
- Antenna ports - 4, 5 or 6 bits
- Transmission configuration indication - 0 or 3 bits
- SRS request - 2 bits
- CBG transmission information - 0, 2, 4, 6, or 8 bits
- CBG flushing out information (code block group flushing out info.) - 0 or 1 bit
- DMRS sequence initialization - 1 bit

Hereinafter, a method of allocating a time domain resource to a data channel in a 5G communication system will be described.

A base station may configure a table associated with time domain resource allocation information associated with a downlink data channel (PDSCH) and an uplink data channel (PUSCH) for a UE via a higher layer signaling (e.g., RRC signaling). The base station may configure a table including a maximum of maxNrofDL-Allocations=16 entries (entry) in association with a PDSCH, and may configure a table including a maximum of maxNrofUL-Allocations=16 entries in association with a PUSCH. The time domain resource allocation information may include, for example, a PDCCH-to-PDSCH slot timing (a slot unit-based time interval between the point in time at which a PDCCH is received and the point in time at which a PDSCH is transmitted which is scheduled by the received PDCCH, and denoted by KO) or a PDCCH-to-PUSCH slot timing (a slot unit-based time interval between the point in time at which a PDCCH is received and the point in time at which a PUSCH is transmitted which is scheduled by the received PDCCH, and denoted by K2), information on the location and the length of a start symbol where a PDSCH or a PUSCH is scheduled in a slot, a mapping type of a PDSCH or PUSCH, and the like. For example, the information shown in the Tables 9 and 10 below may be reported from a base station to a UE.

[Table 9]

| PDSCH-TimeDomainResourceAllocationList information element |
|---|
| PDSCH-TimeDomainResourceAllocationList ::=   SEQUENCE (SIZE(1..maxNrofDL-Allocations)) OF PDSCH-TimeDomainResourceAllocation<br><br>PDSCH-TimeDomainResourceAllocation ::=   SEQUENCE {<br>    k0                                                              INTEGER(0..32)<br>OPTIONAL,     -- Need S<br>        (PDCCH-to-PDSCH timing, slot unit)<br>        mappingType                                          ENUMERATED {typeA, typeB},<br>        (PDSCH mapping type)<br>        startSymbolAndLength                          INTEGER (0..127)<br>        (PDSCH 의 start symbol and length of PDSCH)<br><br>} |

[Table 10]

| PUSCH-TimeDomainResourceAllocation information element |
|---|
| PUSCH-TimeDomainResourceAllocationList ::=     SEQUENCE (SIZE(1..maxNrofUL-Allocations)) OF PUSCH-TimeDomainResourceAllocation<br><br>PUSCH-TimeDomainResourceAllocation ::=     SEQUENCE {<br>    k2                                                      INTEGER(0..32)              OPTIONAL,<br>-- Need S<br>        (PDCCH-to-PUSCH timing, slot unit)<br>        mappingType                                          ENUMERATED {typeA, typeB},<br>        (PUSCH mapping type)<br>        startSymbolAndLength                          INTEGER (0..127)<br>        (PUSCH 의 start symbol and length of PUSCH)<br><br>} |

A base station may inform a UE of one of the entries in the table associated with the time domain resource allocation information via L1 signaling (e.g., DCI) (for example, providing indication using a 'time domain resource allocation' field in DCI). The UE may obtain the time domain resource allocation information associated with the PDSCH or PUSCH based on the DCI received from the base station.

Hereinafter, a downlink control channel in the 5G communication system will be described in detail with reference to drawings.

FIG. 2 is a diagram illustrating an example of a control region in which a downlink control channel is transmitted in the 5G wireless communication system. FIG. 2 illustrates an example of two control regions (control region #1 201 and control region #2 202) configured within a UE bandwidth part 210 in the frequency axis and one slot 220 in the time axis. The control regions 201 and 202 may be configured in a predetermined frequency resource 203 of the entire UE bandwidth part 210 in the frequency axis. In the time axis, the control region may be configured based on one or multiple OFDM symbols, which may be defined as a control region length 204 (control resource set duration). With reference to the example of FIG. 2, the control region #1 201 is configured based on a control region length of two symbols, and the control region #2 202 is configured based on a control region length of one symbol.

The above-described control region in 5G may be configured by a base station for a UE via higher layer signaling (e.g., system information, an MIB, RRC signaling). Configuring a control region for a UE may be providing information associated with the identity of the control region, the frequency location of the control region, the length of symbols of the control region, and the like. For example, the higher layer signaling may include information as shown in Table 11 below.

[Table 11]

```
ControlResourceSet ::=                    SEQUENCE {
    -- Corresponds to L1 parameter 'CORESET-ID'


    controlResourceSetId              ControlResourceSetId,
    (control area identity)
    frequencyDomainResources        BIT STRING (SIZE (45)),
    (frequency domain resource assignment information)
    duration                          INTEGER (1..maxCoReSetDuration),
    (time domain resource assignment information)
    cce-REG-MappingType                       CHOICE {
    (CCE-to-REG mapping type)
        interleaved                       SEQUENCE {


            reg-BundleSize                    ENUMERATED {n2, n3, n6},
            (REG bundle size)


            precoderGranularity               ENUMERATED {sameAsREG-bundle,
allContiguousRBs},


            interleaverSize                   ENUMERATED {n2, n3, n6}
            (interleaver size)


            shiftIndex
    INTEGER(0..maxNrofPhysicalResourceBlocks-1)
    OPTIONAL
            (interleaver shift)
```

```
        },
        nonInterleaved                          NULL
        },
        tci-StatesPDCCH                         SEQUENCE(SIZE (1..maxNrofTCI-
StatesPDCCH)) OF TCI-StateId                    OPTIONAL,
        (QCL configuration information)
        tci-PresentInDCI                        ENUMERATED {enabled}
                        OPTIONAL,    -- Need S

}
```

In Table 11, tci-StatesPDCCH (simply referred to as a transmission configuration indication (TCI) state) configuration information may include information associated with the index of one or multiple SS/PBCH blocks that are in QCL relationship with a DMRS transmitted in a corresponding control region or information associated with a channel state information reference signal (CSI-RS) index.

For example, each control information included in DCI format 1_1 that is scheduling control information (DL grant) for downlink data may be as follow.

- Carrier indicator: indicates a carrier on which data scheduled by DCI is to be transmitted - 0 or 3 bits
- Identifier for DCI formats: an indicator indicating a DCI format, and specifically, indicating whether the corresponding DCI is for a downlink or for an uplink - [1] bits
- Bandwidth part indicator: indicates a change of a bandwidth part when there is a change - 0, 1 or 2 bits
- Frequency domain resource assignment: resource allocation information that indicates frequency domain resource allocation, and expresses a different resource depending on whether a resource allocation type is 0 or 1.
- Time domain resource assignment: resource allocation information indicating time-domain resource allocation, which may indicate a configuration of a predetermined PDSCH time-domain resource allocation list or higher layer signaling - 1, 2, 3, or 4 bits
- VRB-to-PRB mapping: indicates a mapping relationship between a virtual resource block (VRB) and a physical resource block (PRB) - 0 or 1 bit
- PRB bundling size indicator: indicates the size of a physical resource block bundling that is assumed to have the same precoding applied - 0 or 1 bit
- Rate matching indicator: indicates a rate match group to be applied to a PDSCH among rate match groups configured via a higher layer - 0, 1, or 2 bits
- ZP CSI-RS trigger: triggers a zero-power channel state information reference signal - 0, 1, or 2 bits
- Transport block (TB)-related configuration information: indicates a modulation and coding scheme (MCS), a new data indicator (NDI), and a redundancy version (RV) for one or two TBs.
- Modulation and coding scheme (MCS): indicates a modulation scheme and a coding rate used for data transmission. That is, the MCS indicates a TBS and a coding rate value indicating channel coding information, together with information indicating QPSK, 16QAM, 64QAM, or 256QAM.
- New data indicator: indicates HARQ initial transmission or HARQ retransmission.
- Redundancy version: indicates the redundancy version of HARQ.
- HARQ process number: indicates an HARQ process number applied to a PDSCH - 4 bits
- Downlink assignment index: an index for producing a dynamic HARQ-ACK codebook when reporting an HARQ-ACK associated with a PDSCH - 0 or 2 or 4 bits
- TPC command for scheduled PUCCH: power control information applied to a PUCCH for reporting an HARQ-ACK associated with a PDSCH- 2 bits
- PUCCH resource indicator: information indicating a resource of a PUCCH for reporting an HARQ-ACK associated with a PDSCH - 3 bits
- PDSCH-to-HARQ_feedback timing indicator: configuration information associated with a slot in which a PUCCH for reporting an HARQ-ACK associated with a PDSCH is transmitted - 3 bits
- Antenna ports: information indicating an antenna port of a PDSCH DMRS and a DMRS CDM group in which a PDSCH is not transmitted - 4, 5 or 6 bits
- Transmission configuration indication: information indicating beam-related information of a PDSCH- 0 or 3 bits
- SRS request: information requesting SRS transmission - 2 bits
- CBG transmission information: information indicating data corresponding to which code block group (CBG) is to be transmitted via a PDSCH in case that code block group-based retransmission is configured - 0, 2, 4, 6, or 8 bits
- CBG flushing out information: information indicating whether a code block group that a UE previously receives is usable for HARQ combining - 0 or 1 bit
- DMRS sequence initialization: indicates a DMRS sequence initialization parameter - 1 bit

In the case of data transmission via a PDSCH or a PUSCH, time domain resource assignment may be transferred via information associated with a slot in which a PDSCH/PUSCH is transmitted, a start symbol location S of the corresponding slot, and the number L of symbols to which the PDSCH/PUSCH is mapped. Herein, S denotes a relative location from the start of a slot. L denotes the number of consecutive symbols. S and L may be determined based on a start and length indicator value (SLIV) defined by Equation 1 below.

[Equation 1]

if $(L-1) \leq 7$ then

$$SLIV = 14 \cdot (L-1) + S$$

else

$$SLIV = 14 \cdot (14 - L + 1) + (14 - 1 - S)$$

where $0 < L \leq 14 - S$

In the NR system, information associated with an SLIV value, a PDSCH/PUSCH mapping type, and a slot in which a PDSCH/PUSCH is transmitted (e.g., the information may be configured in the form of a table) may be configured in a single line for a UE via an RRC configuration. Subsequently, in the time domain resource assignment of the DCI, by indicating an index value in the configured table, a base station may transfer, to the UE, information associated with an SLIV value, a PUSCH mapping type, and a slot in which a PDSCH/PUSCH is transmitted.

In the NR system, a PDSCH mapping type may include type A and type B. According to PDSCH mapping type A, a first symbol of DMRS symbols is located at a second or third OFDM symbol in a slot. According to PDSCH mapping type B, a first symbol of DMRS symbols is located at a first OFDM symbol in the time domain resource allocated via PUSCH transmission.

Downlink data may be transmitted on a PDSCH which is a physical channel for downlink data transmission. The PDSCH may be transmitted after the control channel transmission interval. Scheduling information such as a detailed mapping location in the frequency domain, a modulation scheme, and the like may be determined based on DCI transmitted via the PDCCH.

Via an MCS in the control information included in the DCI, a base station reports a modulation scheme applied to a PDSCH to be transmitted to a UE, and the size (transport block size (TBS)) of data to be transmitted. In an embodiment, the MCS may include 5 bits or may include more or fewer bits than 5 bits. The TBS corresponds to a size before channel coding for error correction is applied to data (transport block (TB)) that the base station desires to transmit.

In the disclosure, a transport block (TB) may include a medium access control (MAC) header, a MAC control element, one or more MAC service data units (SDU), and padding bits. Alternatively, the TB may indicate a unit of data or a MAC protocol data unit (MAC PDU) that is delivered from a MAC layer to a physical layer.

A modulation scheme supported by the NR system includes quadrature phase shift keying (QPSK), 16 quadrature amplitude modulation (16QAM), 64QAM, and 256QAM. Modulation orders (Qm) thereof correspond to 2, 4, 6, and 8, respectively. That is, in the case of QPSK modulation, 2 bits are transmitted per symbol. In the case of 16QAM modulation, 4 bits are transmitted per symbol. In the case of 64QAM modulation, 6 bits are transmitted per symbol. In the case of 256QAM modulation, 8 bits are transmitted per symbol.

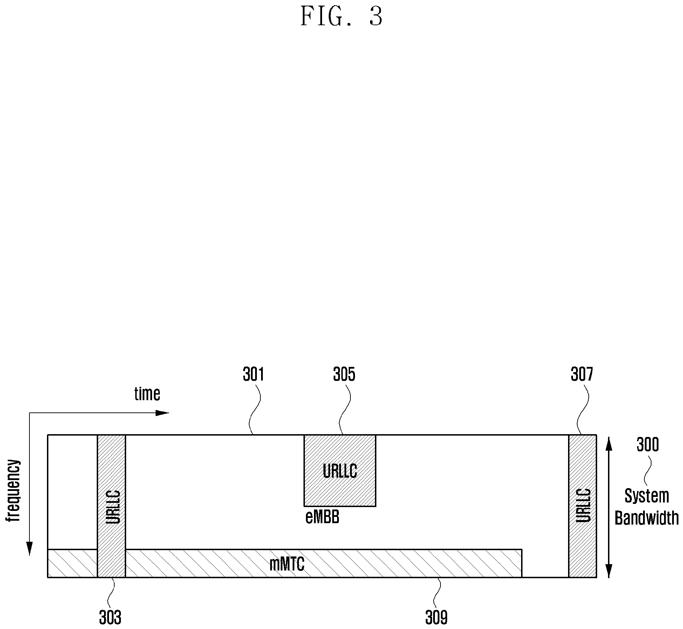

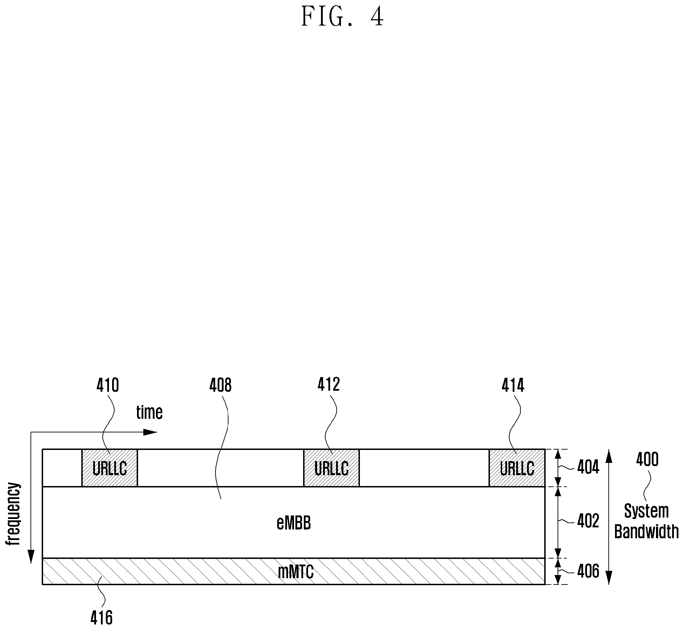

FIGS. 3 and 4 are diagrams illustrating examples in which data for eMBB, URLLC, and mMTC, which are services considered in a 5G or NR system, are allocated in the frequency-time resources.

Referring to FIGS. 3 and 4, there is provided a scheme of allocating frequency and time resources for transmitting information in each system.

FIG. 3 is a diagram illustrating an example in which eMBB, URLLC, and mMTC data are allocated in the entire system frequency band. FIG. 3 illustrates data for eMBB, URLLC, and mMTC that have been allocated in the entire system frequency band 300. If URLLC data 303, 305, and 307 is produced and needs to be transmitted, while eMBB 301 and mMTC 309 are allocated and transmitted in a predetermined frequency band, the eMBB 301 and the mMTC 309 may empty previously allocated parts or may not perform transmission, so that the URLLC data 303, 305, and 307 may be transmitted. Among the services, URLLC needs to reduce latency, and thus, the URLLC data may be allocated to a part of the resource 301 where eMBB is allocated, and may be transmitted. If URLLC is additionally allocated and transmitted in the resource to which eMBB is allocated, eMBB data may not be transmitted in the overlapping frequency-time resources. Accordingly, the performance of transmission of the eMBB data may be decreased. In other words, the transmission of the eMBB data may fail due to the allocation of URLLC.

FIG. 4 is a diagram illustrating an example in which eMBB, URLLC, and mMTC data are allocated in separate system frequency bands. In FIG. 4, the entire system frequency band 400 may be divided, and each sub-band 402, 404, and 406 may be used for transmitting a service and data. Information related to a configuration of the sub-bands may be determined in advance, and the information may be transmitted from a base station to a UE via higher signaling. Alternatively, a base station or a network node may arbitrarily determine sub-bands and provide services without separately transmitting sub-band configuration information to a UE. FIG. 4 illustrates that the sub-band 402 is used for transmission of eMBB data, the sub-band 404 is used for transmission of URCCL data, and the sub-band 406 is used for transmission of mMTC data.

In order to describe a method and device proposed in the embodiments, terms, "physical channel" and "signal" used in the NR system may be used. However, the disclosure may be applicable to a wireless communication system other than the NR system.

Hereinafter, embodiments of the disclosure will be described in detail with reference to the accompanying drawings. In the following description of the disclosure, a detailed description of known functions or configurations incorporated herein will be omitted when it may make the subject matter of the disclosure rather unclear. The terms to be described below are terms defied by taking into consideration functions in the disclosure, and may be changeable by a user, intention of an operator, custom, or the like. Therefore, the definitions of the terms should be made based on the contents throughout the specification.

In the disclosure, a downlink (DL) is a wireless transmission path of a signal that a base station transmits to a UE. An uplink is a wireless transmission path of a signal that a LTE transmits to a base station.

Hereinafter, although an embodiment of the disclosure is described by taking the NR system as an example, the embodiment of the disclosure may be applicable to other communication systems having a similar technical background or a similar channel type. In addition, the embodiments of the disclosure may be modified by those skilled in the art without departing from the scope of the disclosure, and may be applied to other communication systems.

In the disclosure, terms "physical channel" and "signal" conventionally used may be interchangeably used with the term "data" or "control signal". For example, although a PDSCH is a physical channel that delivers data, a PDSCH may be considered as data in the description provided below.

Hereinafter, higher signaling is signal transferring from a base station to a LTE via a downlink data channel of a physical layer, or signal transferring from a LTE to a base station via an uplink data channel of a physical layer, which may also be referred to as RRC signaling or MAC control element (MAC CE).

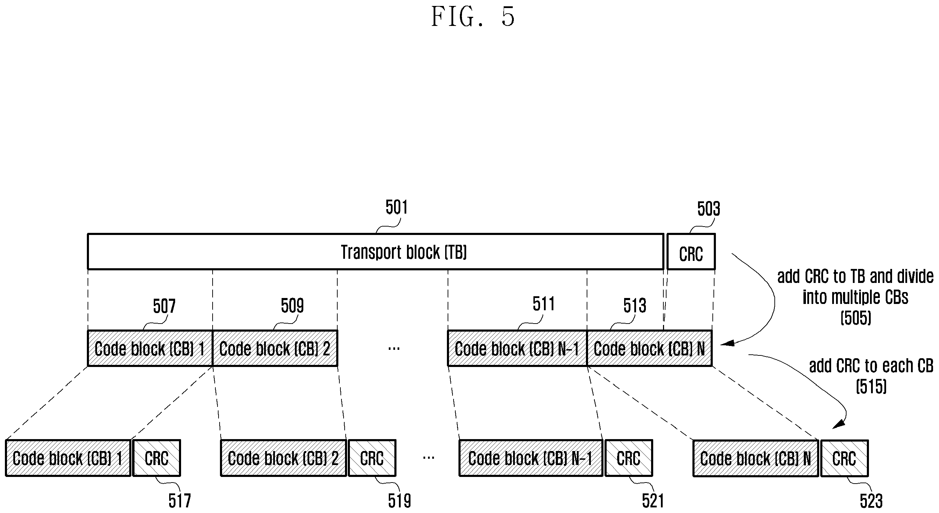

FIG. 5 is a diagram illustrating an example of a process in which a single transport block is divided into multiple code blocks, and CRCs are added thereto.

Referring to FIG. 5, a CRC 503 may be added to the end or the front part of a single transport block (TB) 501 to be transmitted in an uplink or a downlink. The CRC 503 may have 16 bits, 25 bits, or a predetermined number of bits, or may have bits, the number of which is variable depending on a channel condition or the like. The CRC 503 may be used for determining whether channel coding is successfully performed. A block including the TB 501 and the CRC 503 may be divided into multiple code blocks (CB) 507, 509, 511, and 513 as shown in diagram 505. Here, the maximum size for a codeblock is predetermined and is used for division. In this instance, the last codeblock 513 may be smaller than the other codeblocks 507, 509, and 511. However, this is merely an example, and according to another example, by inserting 0, a random value, or 1 to the last codeblock 513, the last code block 513 and the other codeblocks 507 and 509, and 511 may be adjusted to have the same length.

In addition, CRCs 517, 519, 521, and 523 may be added to the code blocks 507, 509, 511, and 513, respectively, as shown in the diagram 515. The CRC may have 16 bits, 24 bits, or a predetermined number of bits, and may be used for determining whether channel coding is successfully performed.

In order to produce the CRC 503, the TB 501 and a cyclic generator polynomial may be used. The cyclic generator polynomial may be defined by various methods. For example, if it is assumed that cyclic generator polynomial for 24-bit CRC is gCRC24A(D) = $D24 + D23 + D18 + D17 + D14 + D11 + D10 + D7 + D6 + D5 + D4 + D3 + D + 1$, and L=24, a value that has a remainder of 0 obtained by dividing $a_0D^{A+23} + a_1D^{A+22} + ... + a_{A-1}D^{24} + p_0D^{23} + p_1D^{22} + ... + p_{22}D^{1} + p_{23}$ by gCRC24A(D) may be determined as $p_0, p_1, p_2, p_3, ... , p_{L-1}$, in case of the CRC $p_0, p_1, p_2, p_3, ... , p_{L-1}$ for

TB data $a_0, a_1, a_2, a_3, \ldots, a_{A-1}$. Although the above-described example has been described on the assumption that the length L of a CRC is 24, the length L of a CRC may be determined variously, such as 12, 16, 24, 32, 40, 48, 64, and the like.

A CRC is added to a TB according to the described process, and the TB+CRC may be divided into N CBs 507, 509, 511, and 513. CRCs 517, 519, 521, and 523 may be added to the CBs 507, 509, 511, and 513 obtained via division, respectively, as shown in the diagram 515. A CRC added to a CB may have a length different from a length of a CRC added to a TB, or another cyclic generator polynomial may be used for producing a CRC. In addition, the CRC 503 added to the TB and the CRCs 517, 519, 521, and 523 added to the codeblocks may be omitted depending on the types of channel codes to be applied to the codeblocks. For example, in case that an LDPC code, instead of a turbo code, is applied to a code block, the CRCs 517, 519, 521, 523 to be respectively added to code blocks may be omitted.

However, although an LDPC is applied, the CRCs 517, 519, 521, and 523 may be added to code blocks, as usual. In case that a polar code is used, a CRC may be added or may be omitted.

As described in FIG. 5, the maximum length of a single code block may be determined based on the type of channel coding to be applied to a TB desired to be transmitted, and the TB and a CRC to be added to the TB may be divided into code blocks based on the maximum length of a code block.

In the legacy LTE system, a CRC for a CB may be added to a CB obtained via division. A data bit of a CB and a CRC may be encoded into a channel code and coded bits are determined. The number of rate match bits may be determined as previously determined for each coded bit.

The size of a TB (TBS) in the NR system may be calculated via the following steps.

Step 1: calculates the number $N'_{RE}$ of REs allocated to PDSCH mapping in a single PRB within an allocated resource. $N'_{RE}$ may be calculated via $N^{RB}_{sc} \cdot N^{sh}_{symb} - N^{PRB}_{DMRS} - N^{PRB}_{oh}$ . Here, $N^{RB}_{sc}$ is 12, and $N^{sh}_{symb}$ denotes the number of OFDM symbols allocated to a PDSCH. $N^{PRB}_{DMRS}$ denotes the number of REs in a single PRB that a DMRS of the same CDM group occupies. $N^{PRB}_{oh}$ denotes the number of REs occupied by overhead in a single PRB configured via higher signaling, and may be configured as one of 0, 6, 12, and 18. Subsequently, a total number $N_{RE}$ of REs allocated to a PDSCH may be calculated $N_{RE}$ may be calculated based on $\min(156, N'_{RE}) \cdot n_{PRB}$ , and $n_{PRB}$ may denote the number of PRBs allocated to a UE.

Step 2: the number $N_{info}$ of temporary information bits may be calculated via $N_{RE} * R * Q_m * v$. Here, R denotes a code rate, and $Q_m$ denotes a modulation order. Information associated with the value may be transferred via an MCS bit field of DCI and a predetermined Table. In addition, v denotes the number of allocated layers. In the case of $N_{info} \leq 3824$, a TBS may be calculated according to step 3 described below. In other cases, a TBS may be calculated according to step 4.

Step 3: $N'_{info}$ may be calculated by using equations $N'_{info} = \max\left(24, 2^n * \left\lfloor \frac{N_{info}}{2^n} \right\rfloor\right)$ and $n = \max(3, \lfloor \log_2(N_{info}) \rfloor - 6)$ . A value that is closest to $N'_{info}$ among values not less than $N'_{info}$ in Table 12 shown below may be determined as a TBS.

[Table 12]

| Index | TBS | Index | TBS | Index | TBS | Index | TBS |
|-------|-----|-------|-----|-------|------|-------|------|
| 1 | 24 | 31 | 336 | 61 | 1288 | 91 | 3624 |
| 2 | 32 | 32 | 352 | 62 | 1320 | 92 | 3752 |
| 3 | 40 | 33 | 368 | 63 | 1352 | 93 | 3824 |
| 4 | 48 | 34 | 384 | 64 | 1416 | | |
| 5 | 56 | 35 | 408 | 65 | 1480 | | |
| 6 | 64 | 36 | 432 | 66 | 1544 | | |
| 7 | 72 | 37 | 456 | 67 | 1608 | | |
| 8 | 80 | 38 | 480 | 68 | 1672 | | |

(continued)

| Index | TBS | Index | TBS | Index | TBS | Index | TBS |
|-------|-----|-------|-----|-------|------|-------|-----|
| 9 | 88 | 39 | 504 | 69 | 1736 | | |
| 10 | 96 | 40 | 528 | 70 | 1800 | | |
| 11 | 104 | 41 | 552 | 71 | 1864 | | |
| 12 | 112 | 42 | 576 | 72 | 1928 | | |
| 13 | 120 | 43 | 608 | 73 | 2024 | | |
| 14 | 128 | 44 | 640 | 74 | 2088 | | |
| 15 | 136 | 45 | 672 | 75 | 2152 | | |
| 16 | 144 | 46 | 709. | 76 | 2216 | | |
| 17 | 152 | 47 | 736 | 77 | 2280 | | |
| 18 | 160 | 48 | 768 | 78 | 2408 | | |
| 19 | 168 | 49 | 808 | 79 | 2472 | | |
| 20 | 176 | 50 | 848 | 80 | 2536 | | |
| 21 | 184 | 51 | 888 | 81 | 2600 | | |
| 22 | 192 | 52 | 928 | 82 | 2664 | | |
| 23 | 208 | 53 | 984 | 83 | 2728 | | |
| 24 | 224 | 54 | 1032 | 84 | 2792 | | |
| 25 | 240 | 55 | 1064 | 85 | 2856 | | |
| 26 | 256 | 56 | 1128 | 86 | 2976 | | |
| 27 | 272 | 57 | 1160 | 87 | 3104 | | |
| 28 | 288 | 58 | 1192 | 88 | 3240 | | |
| 29 | 304 | 59 | 1224 | 89 | 3368 | | |
| 30 | 320 | 60 | 1256 | 90 | 3496 | | |

Step 4: $N'_{\text{info}}$ may be calculated by using equations $N'_{\text{info}} = \max(3840, 2^n \times \text{round}(\frac{N_{\text{info}}-24}{2^n}))$ and $n = \lfloor \log_2(N_{\text{info}} - 24) \rfloor - 5$. A TBS may be determined based on a $N'_{\text{info}}$ value and [pseudo-code 1]. C shown below denotes the number of codeblocks included in a single TB.

[Pseudo-code 1 start]

if $R \leq 1/4$

$$TBS = 8 * C * \left\lceil \frac{N'_{info} + 24}{8 * C} \right\rceil - 24, \text{ where } C = \left\lceil \frac{N'_{info} + 24}{3816} \right\rceil$$

else

if $N'_{info} > 8424$

$$TBS = 8 * C * \left\lceil \frac{N'_{info} + 24}{8 * C} \right\rceil - 24, \text{ where } C = \left\lceil \frac{N'_{info} + 24}{8424} \right\rceil$$

else

$$TBS = 8 * \left\lceil \frac{N'_{info} + 24}{8} \right\rceil - 24$$

end if

end if

In the NR system, in case that a single CB is input into an LDPC encoder, parity bits may be added thereto and may be output. In this instance, the number of parity bits may differ depending on an LDCP base graph. A method of sending all parity bits produced via LDPC coding for a predetermined input may be referred to as full buffer rate matching (FBRM), and a method of limiting the number of transmittable parity bits may be referred to as a limited buffer rate matching (LBRM). In case that resources are allocated for data transmission, an LDPC encoder output is produced to be a circular buffer, and bits of the produced buffer are transmitted repeatedly as many times as the allocated resources allow. In this instance, the length of the circular buffer is referred to as Ncb.

In case that the number of all parity bits produced by LDPC coding is N, it is determined that Ncb = N according to the FBRM method. In the LBRM method, Ncb is min($N$, $N_{ref}$), $N_{ref}$ is given as $\left\lfloor \frac{TBS_{LBRM}}{C \cdot R_{LBRM}} \right\rfloor$, and $R_{LBRM}$ is determined to be 2/3. To obtain $TBS_{LBRM}$, the above-described method of obtaining a TBS may be used. In this instance, calculation may be performed by assuming the maximum number of layers and the maximum modulation order that a UE supports in a corresponding cell. The maximum modulation order Qm may be assumed to be 8 in case that the corresponding cell is configured to use an MCS table that supports 256QAM for at least one BWP. Otherwise, the maximum modulation order Qm may be assumed to be 6 (64QAM). A code rate may be assumed to be a maximum code rate of 948/1024. $N_{RE}$ is assumed to be $156 \cdot n_{PRB}$. $n_{PRB}$ is assumed to be $n_{PRB,LBRM}$. $n_{PRB,LBRM}$ may be given as shown in Table 13 below.

[Table 13]

| Maximum number of PRBs across all configured DL BWPs and UL BWPs of a carrier for DL-SCH and UL-SCH, respectively | $n_{PRB,LBRM}$ |
|---|---|
| Less than 33 | 32 |
| 33 to 66 | 66 |
| 67 to 107 | 107 |
| 108 to 135 | 135 |
| 136 to 162 | 162 |
| 163 to 217 | 217 |
| Larger than 217 | 273 |

The maximum data rate that a UE supports in the NR system may be determined according to Equation 2 below.

[Equation 2]

$$\text{data rate (in Mbps)} = 10^{-6} \cdot \sum_{j=1}^{J} \left( v_{Layers}^{(j)} \cdot Q_m^{(j)} \cdot f^{(j)} \cdot R_{max} \cdot \frac{N_{PRB}^{BW(j),\mu} \cdot 12}{T_s^{\mu}} \cdot (1 - OH^{(j)}) \right)$$

In Equation 2, J is the number of carriers bound by carrier aggregation, Rmax = 948/1024, $v_{Layers}^{(j)}$ denotes the maximum number of layers, $Q_m^{(j)}$ denotes the maximum modulation order, $f^{(j)}$ denotes a scaling index, and $\mu$ denotes a subcarrier spacing. One of 1, 0.8, 0.75, and 0.4 may be reported by the LTE as $f^{(j)}$, and $\mu$ may be given as shown in Table 14 below.

[Table 14]

| $\mu$ | $\Delta f = 2^{\mu} \cdot 15$[kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

In addition, $T_s^{\mu}$ denotes an average OFDM symbol length, $T_s^{\mu}$ may be calculated based on $\frac{10^{-3}}{14 \cdot 2^{\mu}}$, and $N_{PRB}^{BW(j),\mu}$ denotes the maximum number of RBs in BW(j). $OH^{(j)}$ is an overhead value, and may be 0.14 in a downlink and 0.18 in an uplink of FR1 (a 6GHz or lower band), and may be 0.08 in a downlink and 0.10 in an uplink of FR2 (a band higher than 6GHz). In a cell having a frequency bandwidth of 100MHz with a subcarrier spacing of 30kHz, the maximum data rate in a downlink may be calculated by using Equation 2, as shown in Table 15 below.

[Table 15]

| $f^{(j)}$ | $v_{Layers}^{(j)}$ | $Q_m^{(j)}$ | Rmax | $N_{PRB}^{BW(j),\mu}$ | $T_s^{\mu}$ | $OH^{(j)}$ | data rate |
|---|---|---|---|---|---|---|---|
| 1 | 4 | 8 | 0.92578125 | 273 | 3.57143E-05 | 0.14 | 2337.0 |
| 0.8 | 4 | 8 | 0.92578125 | 273 | 3.57143E-05 | 0.14 | 1869.6 |
| 0.75 | 4 | 8 | 0.92578125 | 273 | 3.57143E-05 | 0.14 | 1752.8 |
| 0.4 | 4 | 8 | 0.92578125 | 273 | 3.57143E-05 | 0.14 | 934.8 |

Conversely, an actual data rate measurable by a LTE in actual data transmission may be a value obtained by dividing the amount of data by a data transmission time. This may be a value obtained by dividing, by a TTI length, a TBS in case of 1 TB transmission or the sum of TBSs in case of 2 TB transmission. For example, in a cell having a frequency bandwidth of 100MHz with a subcarrier spacing of 30kHz, which is the same condition used for obtaining Table 15, the actual maximum data rate in a downlink may be determined based on the number of allocated PDSCH symbols, as shown in Table 16 below.

[Table 16]

| $N_{symb}^{sh}$ | $N_{DMRS}^{PRB}$ | $N_{RE}$ | $N_{RE}$ | $N_{info}$ | n | $N'_{info}$ | C | TBS | TTI length (ms) | data rate (Mbps) |
|---|---|---|---|---|---|---|---|---|---|---|
| 3 | 8 | 28 | 7644 | 2261153.5 | 12 | 225,280 | 27 | 225,180 | 0.107113 | 2,104.48 |
| 4 | 8 | 40 | 10920 | 323505.0 | 13 | 319,488 | 38 | 319,784 | 0.142857 | 2.238.49 |
| 5 | 8 | 52 | 14196 | 420556.5 | 13 | 417,792 | 50 | 417,976 | 0.178571 | 2,340.67 |
| 6 | 8 | 64 | 17472 | 517608.0 | 13 | 516,096 | 62 | 516,312 | 0.214286 | 2,409.46 |
| 7 | 8 | 76 | 20748 | 611659.5 | 14 | 622,592 | 74 | 622,760 | 0.250000 | 2.491.04 |
| 8 | 8 | 88 | 24024 | 711711.0 | 14 | 704,512 | 84 | 704,904 | 0.285714 | 2.467.16 |
| 9 | 8 | 100 | 27300 | 808762.5 | 14 | 802.816 | 96 | 803,304 | 0.321429 | 2,499.17 |
| 10 | 8 | 112 | 30576 | 905814.0 | 14 | 901,120 | 107 | 901,344 | 0.357143 | 2.523.76 |
| 11 | 8 | 124 | 33852 | 1002860.5 | 14 | 999,424 | 119 | 999,576 | 0.392857 | 2,544.38 |
| 12 | 8 | 136 | 37128 | 1099917.0 | 15 | 1.114,112 | 133 | 1,115,048 | 0.128571 | 2.601.78 |
| 13 | 8 | 148 | 40404 | 1196968.5 | 15 | 1,212,416 | 144 | 1,213,032 | 0.161286 | 2.612.68 |
| 14 | 8 | 160 | 43680 | 1294020.0 | 15 | 1,277.952 | 152 | 1.277,992 | 0.500000 | 2.555.98 |

The maximum data rate that a UE supports may be identified via Table 15, and an actual data rate based on an allocated TBS may be identified via Table 16. In this instance, an actual data rate may happen to be higher than the maximum data rate depending on scheduling information.

In a wireless communication system, particularly, in the new radio (NR) system, a data rate supportable by a UE may be mutually agreed upon between a base station and the UE. That may be calculated using the maximum frequency band, the maximum modulation order, the maximum number of layers, and the like supported by the UE. However, the calculated data rate may be different from a value calculated based on a transport block (TB) size (TBS) and the length of a transmission time interval (TTI) used for actual data transmission.

Accordingly, the UE may happen to be assigned with a larger TBS than a value corresponding to a data rate supported by the UE itself. To prevent the situation, there may be the restriction of a schedulable TBS depending on a data rate supported by the UE.

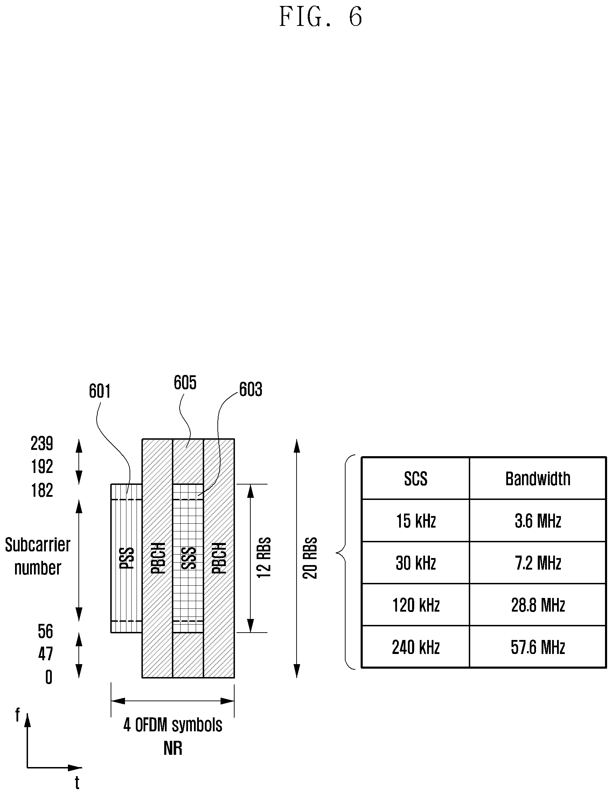

FIG. 6 is a diagram illustrating a synchronization signal (SS) of the NR system and a physical broadcast channel (PBCH) which are mapped in the frequency and time domain.

A primary synchronization signal (PSS) 601, a secondary synchronization signal (SSS) 603, and PBCHs are mapped to 4 OFDM symbols. Each of the PSS and the SSS is mapped to 12 RBs and the PBCHs are mapped to 20 RBs. The table in FIG. 6 shows the frequency band of 20 RBs that varies depending on a subcarrier spacing (SCS). A resource area in which the PSS, SSS, and PBCHs are transmitted is referred to as an SS/PBCH block (SS/PBCH block). In addition, the SS/PBCH block may be referred to as an SSB block.

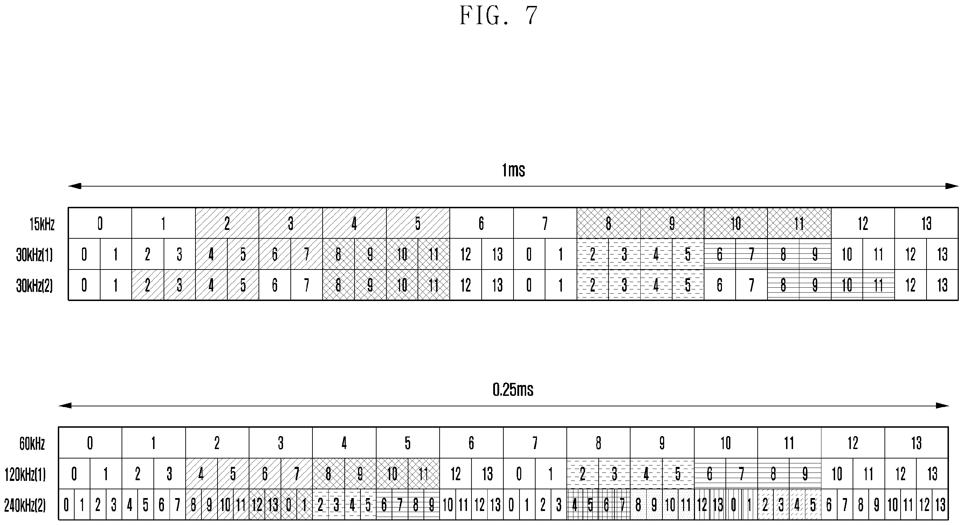

FIG. 7 is a diagram illustrating symbols in which an SS/PBCH block is capable of being transmitted based on a subcarrier spacing.

Referring to FIG. 7, a subcarrier spacing may be set to 15kHz, 30kHz, 120kHz, 240kHz, or the like, and the location of a symbol in which an SS/PBCH block (or an SSB block) is capable of being located may be determined based on each subcarrier spacing. FIG. 7 illustrates the location of a symbol in which an SSB is capable of being transmitted based on a subcarrier spacing in symbols within 1ms, but it is not that an SSB is always transmitted in the area marked in FIG. 7. Therefore, the location in which an SSB block is transmitted may be configured for a UE via system information or dedicated signaling.

Generally, a UE is distant from a base station and thus, a signal transmitted from the UE may be received by the base station after a propagation delay time (propagation delay). The propagation delay time is a value obtained by dividing, by the speed of light, a path in which an electromagnetic wave is transferred from the UE to the base station. Generally, the propagation delay time may be a value obtained by dividing the distance from the UE to the base station by the speed of light. According to an embodiment, in case of a UE located 100km away from a base station, a signal transmitted from the UE may be received by the base station in approximately 0.34 msec. Conversely, a signal transmitted from the base station is also received by the UE in approximately 0.34 msec. As described above, depending on the distance between the UE and the base station, a time that a signal transmitted from the UE arrives at the base station may differ. Therefore, in case that multiple UEs located in different locations simultaneously transmit signals, times that the signals arrive at a base station may be different from one another. In order to solve the problem and to enable signals transmitted from multiple UEs to arrive at a base station at the same time, a time at which an uplink signal is to be transmitted may be set to be different for each LTE depending on a location. In the 5G, NR, and LTE systems, that is referred to as timing advance.

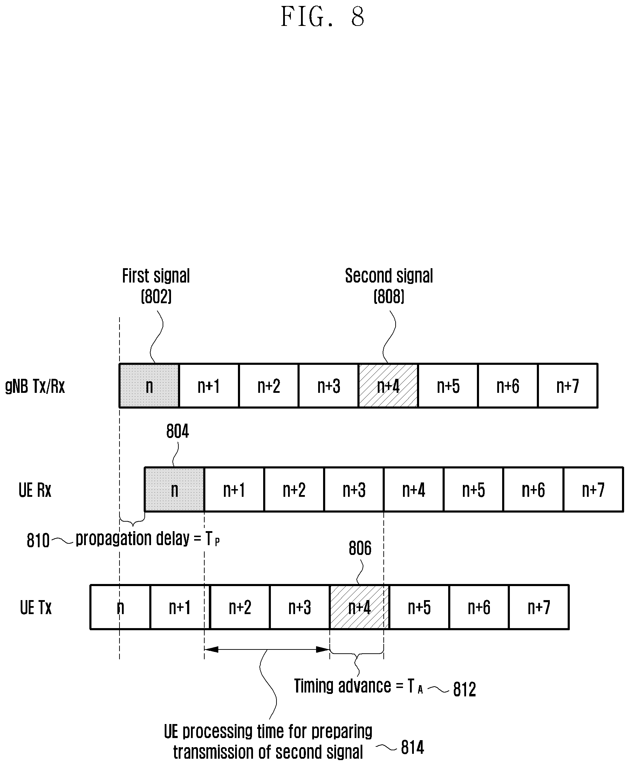

FIG. 8 is a diagram illustrating a UE processing time based on timing advance when the LTE receives a first signal and transmits a second signal in response thereto in the 5G or NR system according to an embodiment.

Hereinafter, a UE processing time based on timing advance will be described in detail. In case that a base station transmits an uplink scheduling grant (LTL grant) or a downlink control signal and data (DL grant and DL data) to a UE in slot n 802, the UE may receive the uplink scheduling grant or the downlink control signal and the data in slot n 804. In this instance, the UE may receive a signal a propagation delay time (Tp) 810 later than a time at which the base station transmits the signal. In the embodiment, in case that the UE receives a first signal in slot n 804, the LTE transmits a corresponding second signal in slot n+4 806. In the case of signal transmission by the LTE to the base station, to enable a signal to arrive at the base station at a predetermined time, the UE may transmit uplink data or an HARQ ACK/NACK associated with downlink data at a timing 806 that is timing advance (TA) 812 earlier than slot n+4 based on a signal received by the UE. Therefore, in the embodiment, a period of time 814 allowed for the LTE to prepare transmission of uplink data after receiving an uplink scheduling grant or to prepare transferring an HARQ ACK or NACK after receiving downlink data may be a time excluding a TA from a time corresponding to three slots.

In order to determine the above-described timing, the base station may calculate the absolute value of a TA of the corresponding UE. The base station may calculate the absolute value of a TA by adding, to a TA value that the base station initially transmits to the UE at a random access stage at the initial access, a change in the TA value transferred via higher signaling or by subtracting the change therefrom. In the disclosure, the absolute value of the TA may be a value obtained by subtracting the start time of an $n^{th}$ TTI received by the UE from the start time of an $n^{th}$ TTI transmitted by the UE.

One of the important criteria for determining the performance of a cellular wireless communication system is packet data latency. To this end, in the LTE system, a signal is transmitted or received in units of subframes, each subframe having a transmission time interval (TTI) of 1ms. In the LTE system that operates as described above, a LTE (a short-TTI LTE) that has a transmission time interval shorter than 1ms may be supported. In the 5G or NR system, a transmission time interval may be shorter than 1ms. The short-TTI LTE is suitable for a service that takes latency as an important factor, such as a voice over LTE (VoLTE) service, a remote control service, or the like. In addition, the short-TTI UE is a device that is capable of implementing mission-critical Internet of Things (IoT) based on a cellular network.

In the 5G or NR system, in case that the base station transmits a PDSCH including downlink data, DCI that schedules a PDSCH may indicate a K1 value corresponding to timing information associated with a timing at which the LTE transmits HARQ-ACK information associated with the PDSCH. The UE may transmit HARQ-ACK information to the base station in case it is not indicated to transmit HARQ-ACK information before symbol L1 by including timing advance. That is, the HARQ-ACK information may be transmitted from the UE to the base station at the same time of or after symbol L1, by including timing advance. In case that it is indicated to transmit HARQ-ACK information before symbol L1 by including timing advance, HARQ-ACK information may not be valid HARQ-ACK information in HARQ-ACK transmission from the UE to the base station.

Symbol L1 may be a first symbol in which a cyclic prefix (CP) starts $T_{proc,1}$ after the last point of a PDSCH. $T_{proc,1}$ may be calculated as given in Equation 3 below.

[Equation 3]

$$T_{proc,1} = \left( (N_1 + d_{1,1} + d_{1,2})(2048 + 144) \cdot \kappa 2^{-\mu} \right) \cdot T_C$$

In the above-described Equation 3, N1, d1,1, d1,2, κ, μ, and TC may be defined as described below.

- In case that HARQ-ACK information is transmitted via a PUCCH (uplink control channel), d1,1=0. In case that HARQ-ACK information is transmitted via a PUSCH (uplink shared channel, data channel), d1,1=1.
- In case that the UE is configured with a plurality of activated component carriers or carriers, the maximum timing difference between carriers may be applied to second signal transmission.
- In case of PDSCH mapping type A, that is, in case that the location of a first DMRS symbol is a third or fourth symbol in a slot, if the location index i of the last symbol of a PDSCH is less than 7, it is defined that d1,2=7-i.
- In case of PDSCH mapping type B, that is, in case that the location of a first DMRS symbol is a first symbol of a PDSCH, when the length of the PDSCH is 4 symbols, d1,2=3, and when the length of the PDSCH is 2 symbols, d1,2=3+d. d is the number of symbols in which a PDSCH overlaps a PDCCH including a control signal that schedules the corresponding PDSCH.
- N1 may be defined based on μ as shown in Table 17 below. μ=0, 1, 2, 3 denote subcarrier spacings 15 kHz, 30 kHz, 60 kHz, and 120 kHz, respectively.

[Table 17]

| μ | PDSCH decoding time $N_l$ [symbols] | |
|---|---|---|
| | No additional PDSCH DM-RS configured | Additional PDSCH DM-RS configured |
| 0 | 8 | 13 |
| 1 | 10 | 13 |
| 2 | 17 | 20 |
| 3 | 20 | 24 |

- Instead of the N1 value provided in the above-described Table 17, another value may be used depending on UE capability.
- It is defined that $T_c = 1/(\Delta f_{max} \cdot N_f)$, $\Delta f_{max} = 480 \cdot 10^3$ Hz, $N_f = 4096$, $\kappa = T_s/T_c = 64$, $T_s = 1/(\Delta f_{ref} \cdot N_{f,ref})$, $\Delta f_{ref} = 15 \cdot 10^3$ Hz, $N_{f,ref} = 2048$

, respectively.

In addition, in the 5G or NR system, in case that the base station transmits control information including an uplink scheduling grant, the UE may indicate a K2 value corresponding to timing information of a timing at which the LTE transmits uplink data or a PUSCH.

The LTE may transmit a PUSCH to the base station in case that it is not indicated to transmit the PUSCH before symbol L2 by including timing advance. That is, by including timing advance, the PUSCH may be transmitted from the UE to the base station at the same time of or after symbol L2. In case that it is indicated to transmit a PUSCH before symbol L2 by including timing advance, the LTE may disregard an uplink scheduling grant control information obtained from the base station.

The symbol L2 may be a first symbol in which a CP of a PUSCH symbol starts, wherein the PUSCH symbol needs to be transmitted $T_{proc,2}$ after the last point of a PDCCH including a scheduling grant. $T_{proc,2}$ may be calculated as given in Equation 4 below.

[Equation 4]

$$T_{proc,2} = \left( (N_2 + d_{2,1})(2048 + 144) \cdot \kappa 2^{-\mu} \right) \cdot T_C$$

In the above-described Equation 4, N2, d2, 1, $\kappa$, $\mu$, and TC may be defined as below.

- In case that a first symbol among the symbols to which a PUSCH is allocated includes only a DMRS, d2,1=0. Otherwise, d2,1=1.
- In case that a LTE is configured with a plurality of activated component carriers or carriers, the maximum timing difference between carriers may be applied to second signal transmission.
- N2 may be defined based on $\mu$ as shown in Table 18 below. $\mu$=0, 1, 2, 3 denote subcarrier spacings 15 kHz, 30 kHz, 60 kHz, and 120 kHz, respectively.

[Table 18]

| $\mu$ | PUSCH preparation time $N_2$ [symbols] |
|---|---|
| 0 | 10 |
| 1 | 12 |
| 2 | 23 |
| 3 | 36 |

- Instead of the N2 value provided in the above-described Table 18, another value may be used depending on UE capability.
- It is defined that

$$T_c = 1/(\Delta f_{max} \cdot N_f) \;, \quad \Delta f_{max} = 480 \cdot 10^3 \; Hz, \quad N_f = 4096 \;, \quad \kappa = T_s / T_c = 64 \;, \quad T_s = 1/(\Delta f_{ref} \cdot N_{f,ref}) \;,$$

$$\Delta f_{ref} = 15 \cdot 10^3 \, Hz \;, \quad N_{f,ref} = 2048$$

, respectively.

The 5G or NR system may configure a frequency band part (BWP) in a single carrier and may designate a predetermined UE to perform transmission or reception in the configured BWP. This is to reduce the amount of power consumed by a UE. A base may configure a plurality of BWPs, and may change activated BWP using control information. A period of time that the UE is capable of spending in changing a BWP may be defined as shown in Table 19 below.

[Table 19]

| Frequency Range | Scenario | Type 1 delay (us) | Type 2 delay (us) |
|---|---|---|---|
| 1 | 1 | 600 | 2000 |
| | 2 | 600 | 2000 |
| | 3 | 600 | 2000 |
| | 4 | 400 | 950 |
| 2 | 1 | 600 | 2000 |
| | 2 | 600 | 2000 |
| | 3 | 600 | 2000 |
| | 4 | 400 | 950 |

In Table 19, frequency range 1 denotes a 6GHz or lower frequency band, and frequency range 2 denotes a 6GHz or higher frequency band. In the above-described embodiment, type 1 and type 2 may be determined based on UE capability. In the above-described embodiments, scenarios 1, 2, 3, and 4 may be given as shown in Table 20 below.

[Table 20]

| | change in center frequency | no change in center frequency |
|---|---|---|
| change in frequency bandwidth | scenario 3 | scenario 2 |
| no change in frequency bandwidth | scenario 1 | scenario 4 in case that subcarrier spacing is changed |

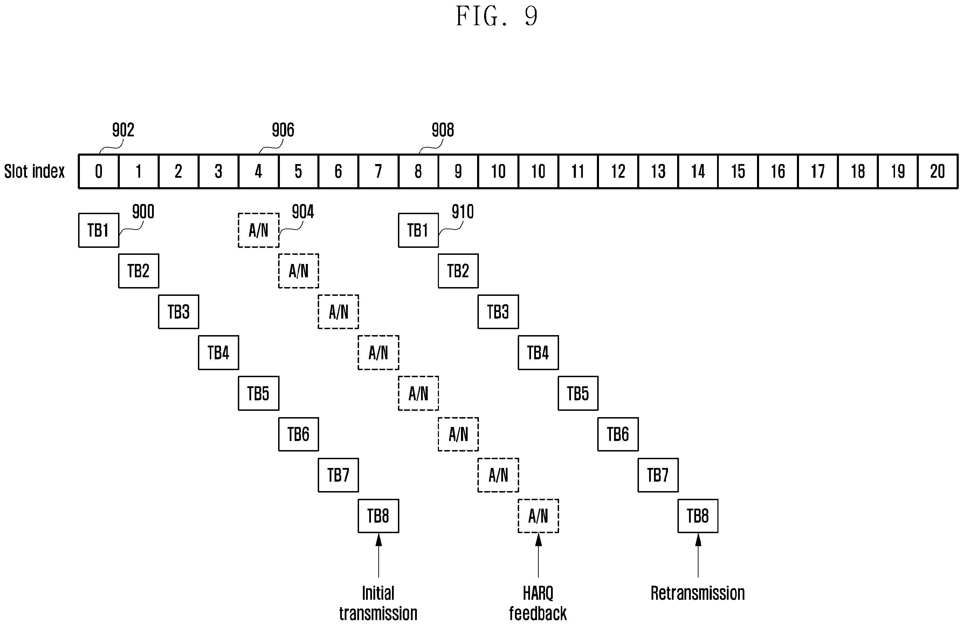

FIG. 9 is a diagram illustrating an example of scheduling and transmitting data (e.g., TBs) in slots, receiving a HARQ-ACK feedback associated with the corresponding data, and performing retransmission based on the feedback. In FIG. 9, TB 1 900 is transmitted initially in slot 0 902, and an ACK/NACK feedback 904 thereto is transmitted in slot 4 906. In case that the initial transmission of TB1 fails and a NACK is received, retransmission 910 of TB 1 may be performed in slot 8 908. The point in time at which the ACK/NACK feedback is transmitted and the point in time at which retransmission is performed may be determined in advance, or may be determined based on a value indicated by control information and/or a higher layer signaling.

FIG. 9 illustrates an example in which TB1 to TB8 are sequentially scheduled in slots from slot 0. That may be the case in which HARQ process IDs 0 to 7 are assigned to TB1 to TB8, respectively, and transmission is performed. In case that the number of HARQ process IDs that a base station and a LTE are capable of using is only four, eight different TBs may not be successfully transmitted.

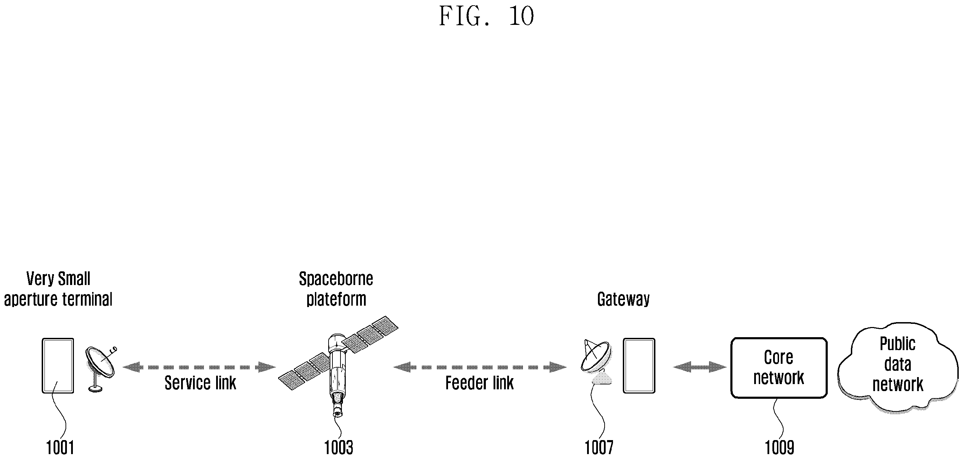

FIG. 10 is a diagram illustrating an example of a communication system that uses a satellite. For example, in case that a UE 1001 transmits a signal to a satellite 1003, the satellite 1003 may transfer the signal to a base station 1005, and the base station 1005 may process the received signal and transmit the signal including a request for a subsequent operation to be performed thereon to the UE 1001. This may be transmitted via the satellite 1003, again. In the above description, the distance between the UE 1001 and the satellite 1003 is long and the distance between the satellite 1003 and the base station 1005 is also long and thus, a period of time spent in data transmission or reception between the LTE 1001 and the base station 1005 may be long.

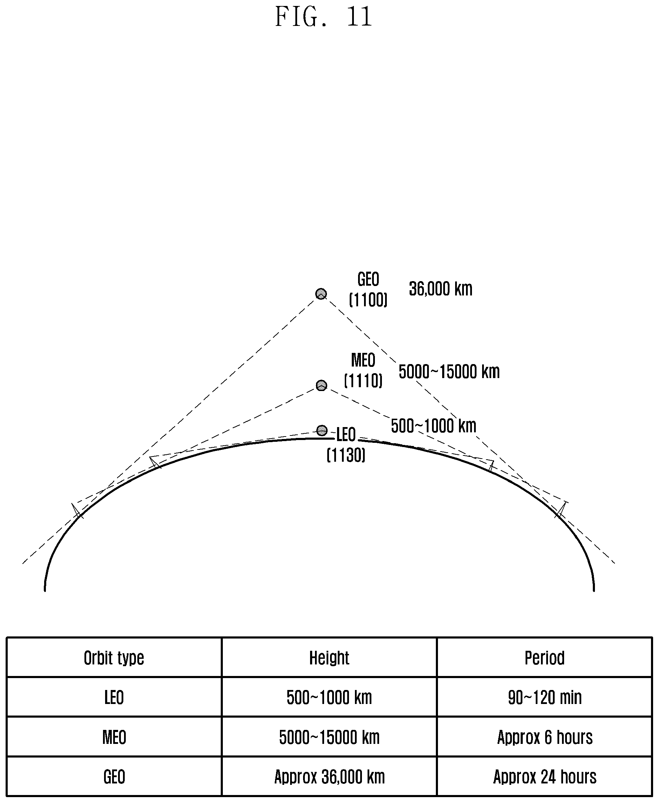

FIG. 11 is a diagram illustrating a revolution cycle of a communication satellite around the earth based on the altitude or height of the satellite. Satellites for communication may be classified based on the orbit of a satellite, such as a low Earth orbit (LEO), a middle Earth orbit (MEO), a geostationary Earth orbit (GEO), and the like. Generally, a GEO 1100 is a satellite located at an altitude of approximately 36000km, an MEO 1110 a satellite located at an altitude in the range of 5000 to 15000km, and an LEO is a satellite located at an altitude in the range of 500 to 1000km. The revolution cycle of a satellite around the earth differs depending on an altitude. In the case of the GEO 1100, a revolution cycle is approximately 24 hours. In case of the MEO 1110, a revolution cycle is approximately 6 hours. In case of the LEO 1130, a revolution cycle is approximately 90 to 120 minutes. A LEO (~2,000km) satellite has a relatively low altitude and thus, a propagation delay time (a period of time spent when a signal transmitted from a transmitter arrives at a receiver) and a loss may be lower than a GEO (36,000km) satellite. A thing that is not a GEO satellite is referred to as a non-geostationary orbit (NGSO).

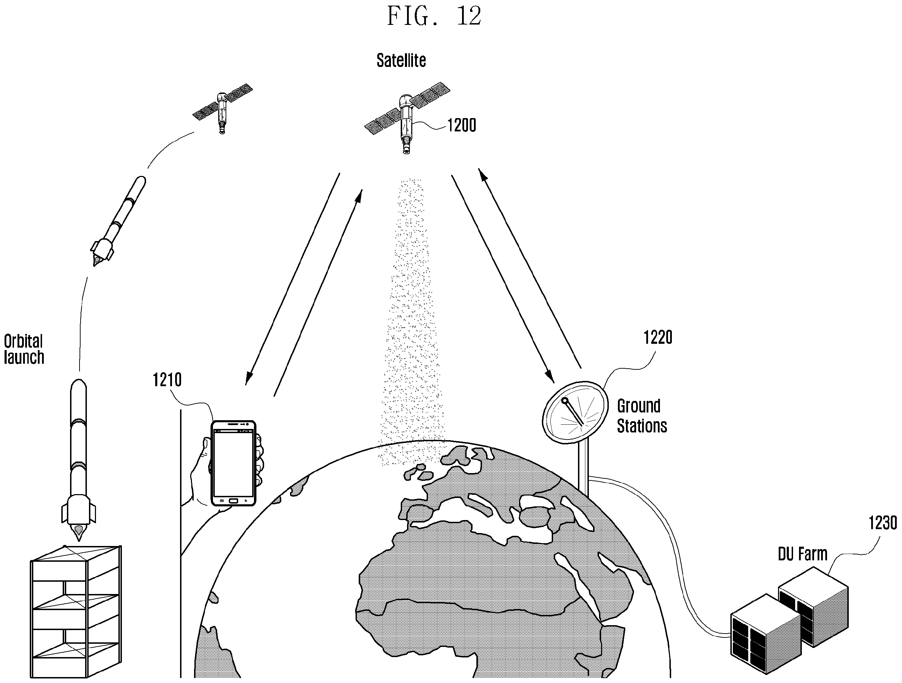

FIG. 12 is a conceptual diagram of satellite-UE direct communication. A satellite 1200 located at an altitude higher than 100km via a rocket may perform signal transmission or reception with a UE 1210 on the earth, and may also perform signal transmission or reception with a ground station 1220 connected to a base station on the earth (DU farms) 1230.

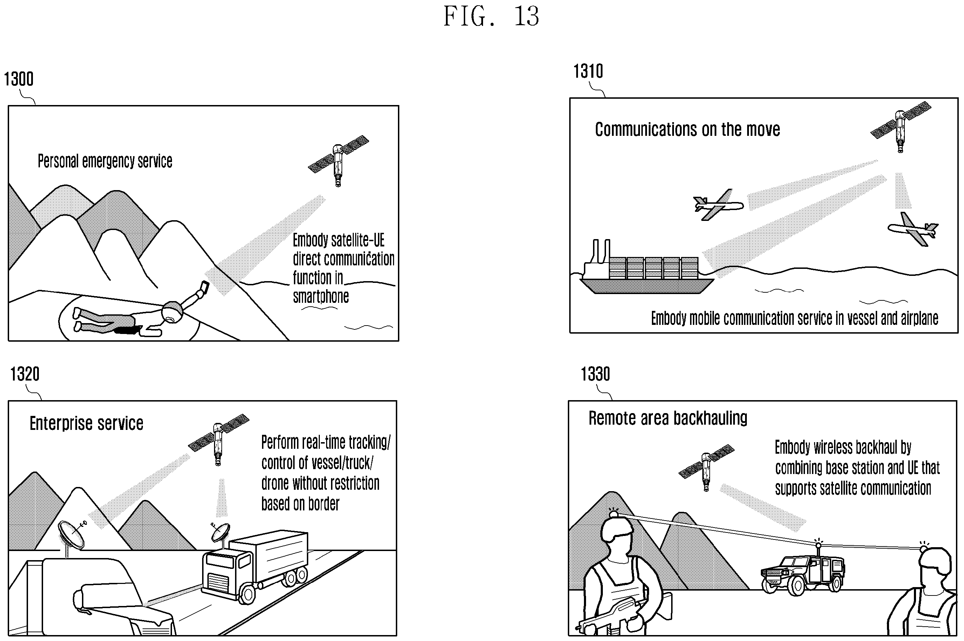

FIG. 13 is a diagram illustrating a scenario of utilizing satellite-UE direct communication. The satellite-UE direct communication may support a communication service that is specialized in complementing the limit of coverage of a terrestrial network. For example, by embodying a satellite-UE direct communication function in a UE, a user emergency signal and/or disaster signal may be transmitted or received beyond a terrestrial communication coverage area as shown in diagram 1300, a mobile communication service may be provided to a user in an area where terrestrial network communication is unavailable such as a vessel and/or an airplane as shown in diagram 1310, the location of a vessel, a truck, and/or a drone may be traced and controlled in real time without restriction based on a border as shown in diagram 1320. Also, the UE may function as a backhaul of the base station by supporting a satellite communication function to a base station, and may utilize satellite communication so as to perform a backhaul function in case that the base station is physically far away as shown in diagram 1330.

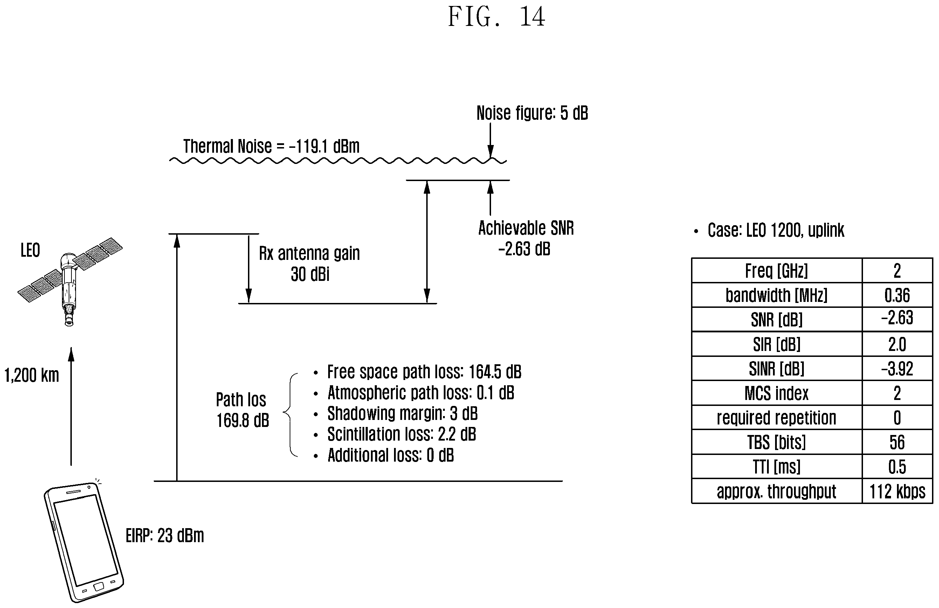

FIG. 14 is a diagram illustrating an example of calculation of an expected data transmission rate (throughput) in an uplink in case that an LEO satellite located at an altitude of 1200 km and a UE on the earth perform direct communication. In case that, in an uplink, transmission power effective isotropic radiated power (EIRP) of a UE on the earth is 23 dBm, a path loss of a wireless channel to a satellite is 169.8 dB, and a satellite reception antenna gain is 30 dBi, an attainable signal to-noise ratio (SNR) may be estimated to be -2.63 dB. In this instance, the pathloss may include a pathloss in space, a loss in the atmosphere, and the like. On the assumption that a signal-to-interference ratio (SIR) is 2 dB, a signal-to-interference and noise ratio (SINR) is calculated to be -3.92 dB. In this instance, in case that a subcarrier spacing of 30 kHz and a frequency resource of 1 PRB are used, a transmission speed of 112 kbps may be attainable.

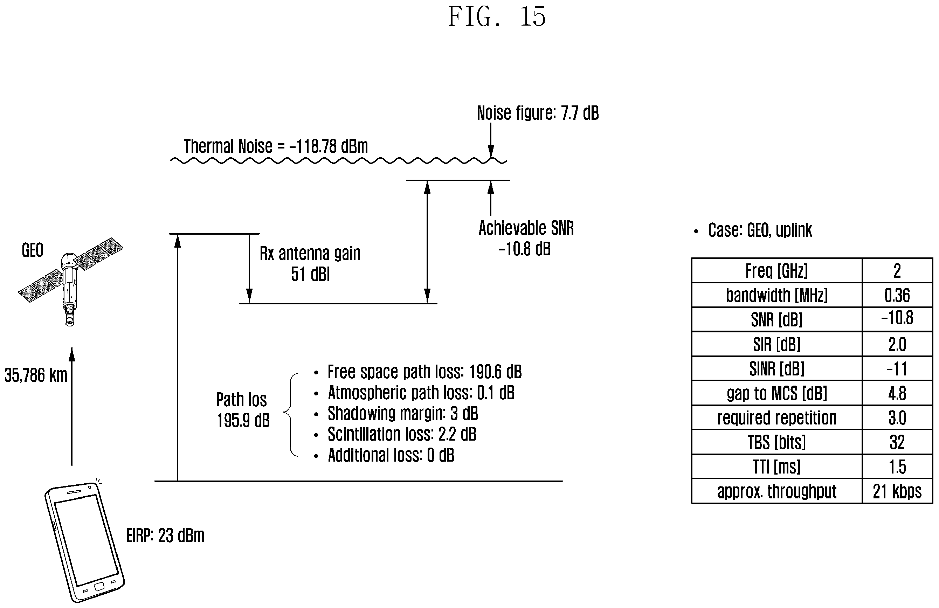

FIG. 15 is a diagram illustrating an example of calculation of an expected data transmission rate (throughput) in an uplink in case that a GEO satellite located at an altitude of 35,786 km and a UE on the earth perform direct communication. In case that, in an uplink, transmission power EIRP of a UE on the earth is 23 dBm, a path loss of a wireless channel to a satellite is 195.9 dB, and a satellite reception antenna gain is 51 dBi, an attainable SNR may be estimated to be -10.8 dB. In this instance, the pathloss may include a pathloss in space, a loss in the atmosphere, and the like. On the assumption that an SIR is 2 dB, an SINR is calculated to be -11 dB. In this instance, in case that a subcarrier spacing of 30 kHz and a frequency resource of 1 PRB are used, a transmission speed of 21 kbps may be attainable. This may be a result of repetitively performing transmission three times.

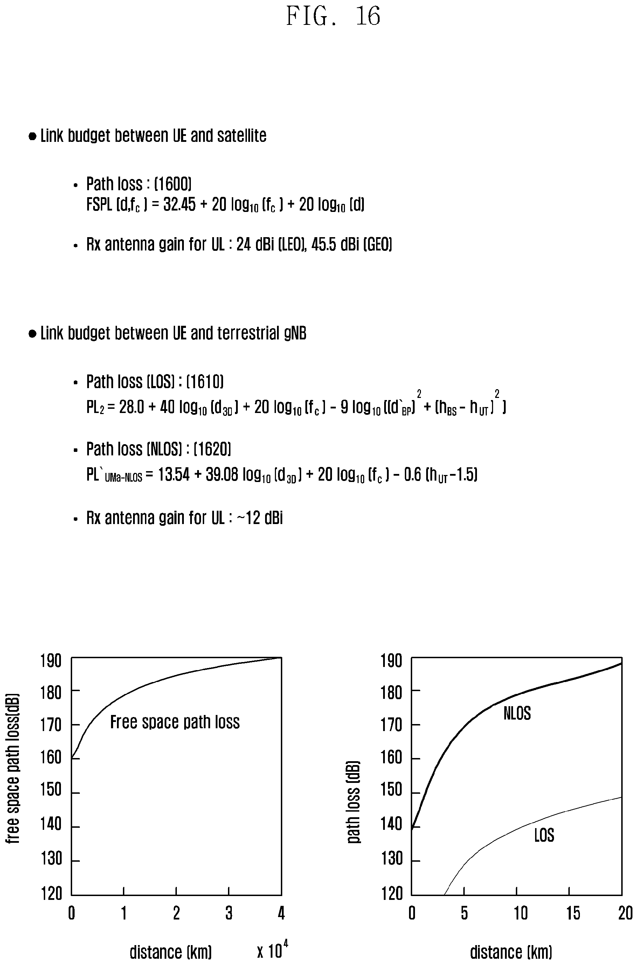

FIG. 16 is a diagram illustrating a pathloss value based on a pathloss model between a UE and a satellite, and a pathloss based on a pathloss model between a UE and a terrestrial base station. In FIG. 16, d denotes a distance, and $f_c$ denotes the frequency of a signal. In free space where communication between a UE and a satellite is performed, a pathloss (FSPL) 1600 is inversely proportional to the square of a distance. A path loss ($PL_2$, $PL'_{Uma-NLOS}$) 1610 and 1620 on the earth where air is present and communication between the UE and the terrestrial base station (terrestrial gNB) is performed is inversely proportional to approximately the $4^{th}$ power of a distance. $d_{3D}$ denotes the direct distance between a UE and a base station, has denotes the height of a base station, and $h_{UT}$ denotes the height of a UE. It is calculated that $d'_{BP}$ = 4 x has x $h_{UT}$ x $f_c$ / c. fc denotes a center frequency in Hz, and c denotes the speed of light in m/s.

In satellite communications (or non-terrestrial network (NTN)), Doppler shift, that is, a frequency movement (offset) of a transmitted signal, is incurred since a satellite continuously moves fast.

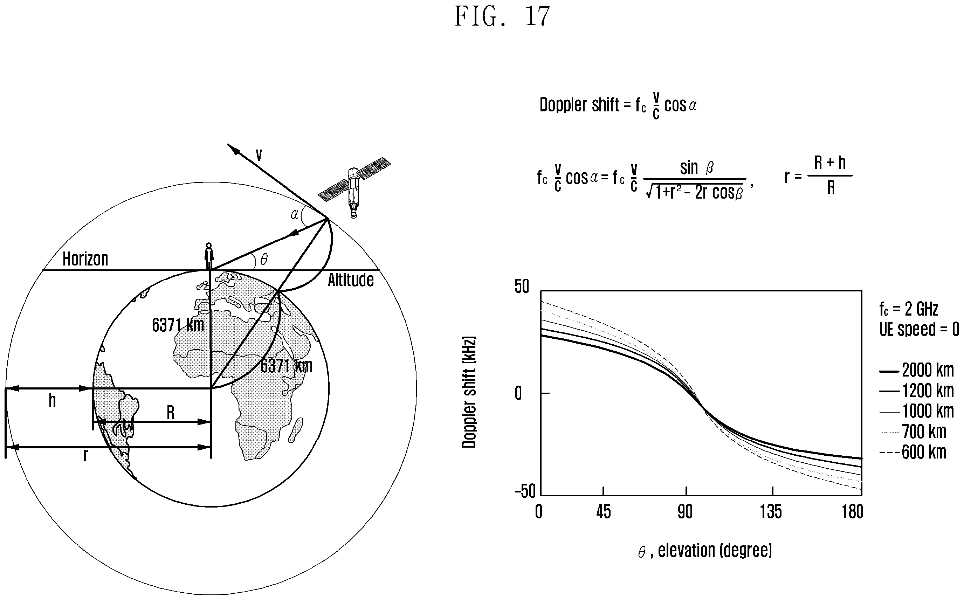

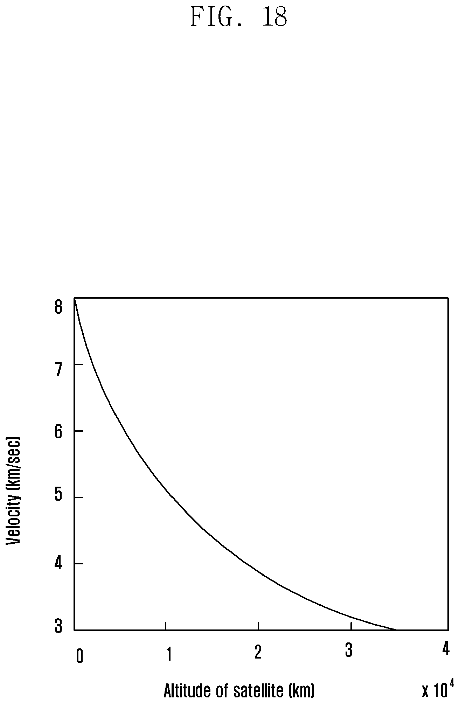

FIG. 17 is a diagram illustrating a calculation equation and a calculation result in associated with the amount of Doppler shift that a signal experiences when the signal transferred from a satellite is received by a user on the earth according to the altitude and location of the satellite and the location of the user of a UE on the earth. R denotes the radius of the earth, h denotes the altitude of a satellite, v denotes the speed of the revolution of a satellite around the earth, and $f_c$ denotes the frequency of a signal. The speed of a satellite may be calculated based on the altitude of the satellite, and may be a speed at which gravity, the force of the earth pulling the satellite, is equal to centripetal force incurred when the satellite revolves. This may be calculated as described in FIG. 18.

FIG. 18 is a diagram illustrating the speed of a satellite calculated at the altitude of the satellite. As identified in FIG. 17, angle $\alpha$ is determined based on an angle of altitude (elevation angle) $\theta$ and thus, a Doppler shift value may be determined based on the elevation angle $\theta$.

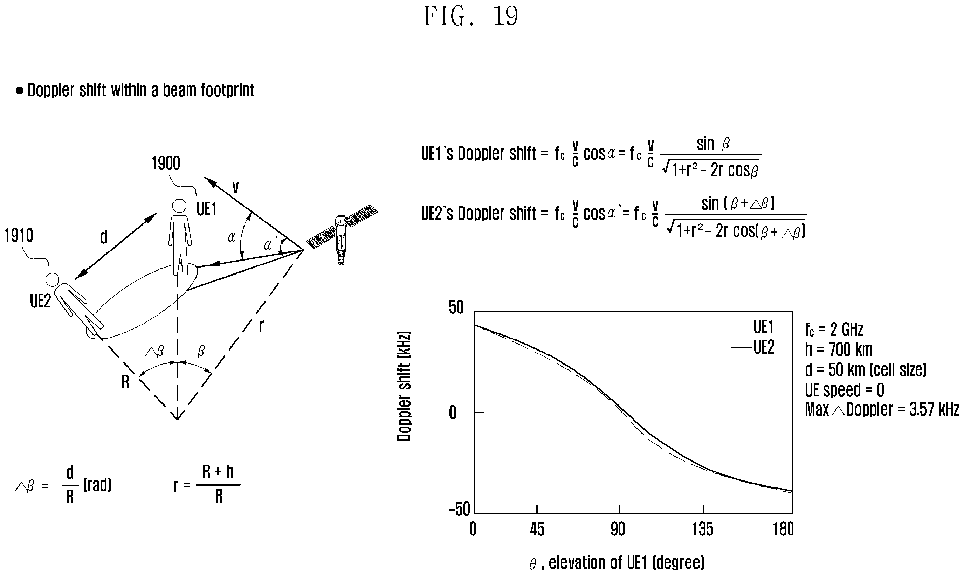

FIG. 19 is a diagram illustrating Doppler shift that different UEs experience in a single beam that a satellite transmits to the earth. In FIG. 19, Doppler shift that each of UE 1 1900 and UE 2 1910 goes through is calculated based on the elevation angle $\theta$. That is a result obtained on the assumption of a center frequency of 2 GHz, a satellite altitude of 700 km, a single beam's diameter of 50km on the earth, and a UE speed of 0. In addition, in the disclosure, the Doppler shift is calculated by disregarding an effect of the rotation speed of the earth, which is considered as a minimal effect since it is slower than the speed of the satellite.

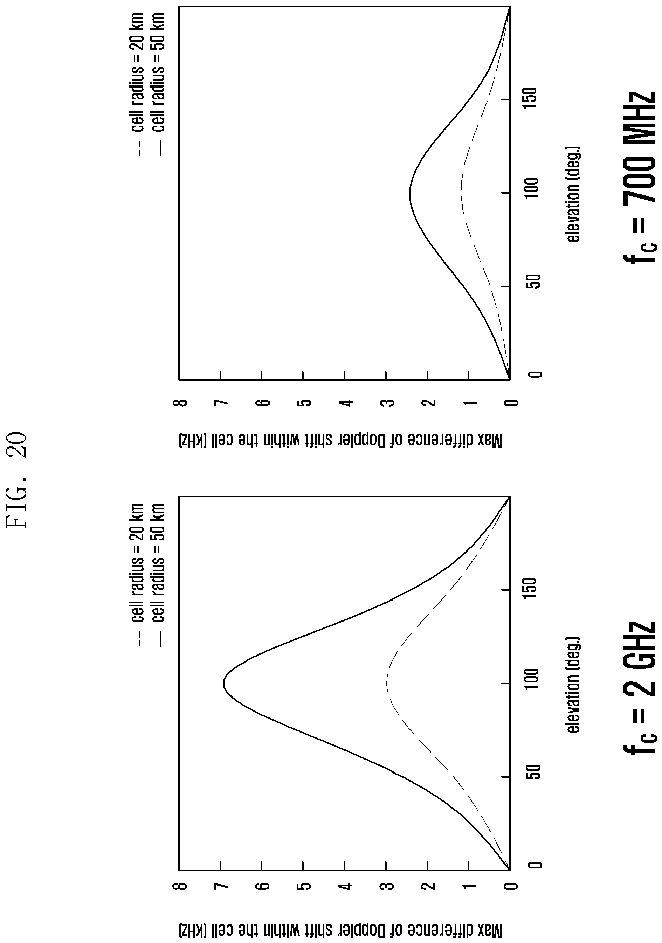

FIG. 20 is a diagram illustrating a difference in Doppler shift incurred in a single beam, depending on the location of a satellite determined based on an elevation angle. In case that the satellite is located right above a beam, that is, in the case of an elevation angle of 90 degrees, the difference in Doppler shift in the beam (or cell) is the highest. When the satellite is located in the center, Doppler shift values at one end and the other end of the beam have a positive value and a negative value, respectively.

In satellite communication, the distance from the satellite to a user on the earth is long and thus, a long delay may be incurred when compared to terrestrial network communication.

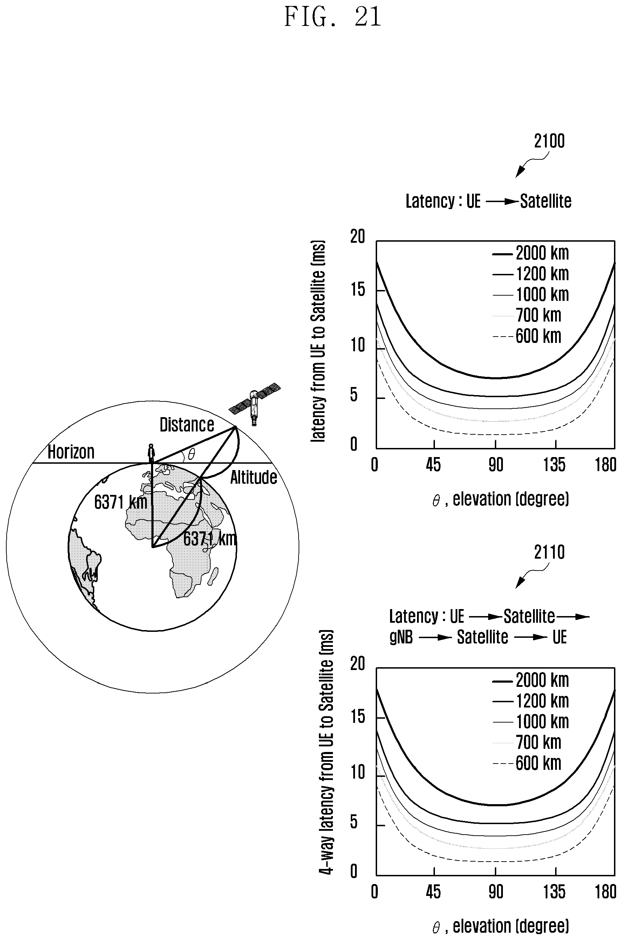

FIG. 21 is a diagram illustrating a latency taken from a LTE to a satellite and a round trip latency among UE-satellite-base station, depending on the location of a satellite determined based on an elevation angle. Graph 2100 shows a latency taken from a UE to a satellite, and graph 2110 shows a round trip latency among a LTE, a satellite, and a base station. In this instance, the latency between the satellite and base station is assumed to be the same as the latency between the UE and the satellite.

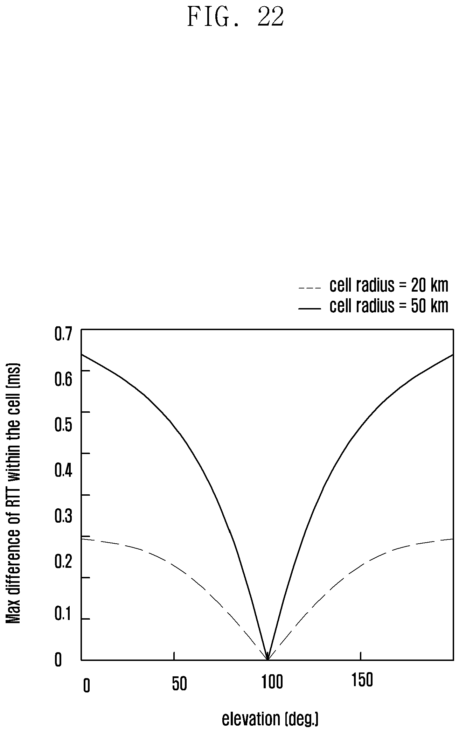

FIG. 22 is a diagram illustrating the maximum difference value in a round trip latency that differs depending on the location of a user in a single beam. For example, in case that a beam radius (or a cell radius) is 20 km, the difference in latency of a round trip to the satellite between UEs at different locations within a beam, the latency varying depending on the location of the satellite, may be less than or equal to approximately 0.28 ms.

The situation in which a UE performs signal transmission or reception with a base station in satellite communication may be the situation in which the signal is transferred via a satellite. That is, in a downlink, the satellite receives a signal that the base station transmits to the satellite, and the satellite transfers the same to the UE. In an uplink, the satellite receives a signal that the UE transmits, and transfers the same to the base station. In the above description, the satellite receives a signal and may transmit the same as it is by only shifting a frequency, or may perform signal processing based on the received signal such as decoding and re-encoding and transfer the same.

In the case of LTE or NR, a UE may access a base station via the following procedure.

- Step 1: A LTE receives a synchronization signal (or synchronization signal block (SSB), which includes a broadcasting signal) from a base station. The synchronization signal may include a primary synchronization signal (PSS), a secondary synchronization signal (SSS), and a physical broadcast channel (PBCH). The synchronization signal may include information associated with a boundary of a slot of a signal transmitted by a base station, a frame number, a downlink configuration, an uplink configuration, and the like. In addition, via a synchronization signal, a LTE may obtain a subcarrier offset and scheduling information for transmitting system information.
- Step 2: The LTE receives system information (system information block (SIB)) from the base station. The SIB may include information for performing initial access and random access. The information for performing random access may include resource information associated with a resource used for transmitting a random access preamble.
- Step 3: In a random access resource configured in step 2, a random access preamble (or message 1, msg1) is transmitted. The preamble may be a signal determined based on information configured in step 2 by using a predetermined numerical progression. The base station may receive the preamble transmitted by the UE. The base station attempts reception of a preamble configured in a resource configured by the base station, without knowing which UE transmits the preamble, and in case that reception is successfully performed, the base station may be aware that at least one UE transmits the preamble.
- Step 4: In case that the preamble is received in step 3, the base station transmits a random access response (RAR, or message 2, msg2) that is a response thereto. The UE that transmits the random access preamble in step 3 may attempt to receive the RAR transmitted by the base station in this step. The RAR is transmitted on a PDSCH, and a PDCCH that schedules the PDSCH is transmitted together or in advance. A CRC scrambled by an RA-RNTI value is added to DCI that schedules the RAR. The DCI (and CRC) may be channel coded and mapped to a PDCCH, and may be transmitted. The RA-RNTI may be determined based on time and frequency resources in which the preamble of step 3 is transmitted.

The maximum limited time in which the UE that transmits the random access preamble in step 3 receives the RAR in the step may be configured by the SIB transmitted in step 2. For example, this may be limitingly configured as a maximum of 10ms, a maximum of 40ms, or the like. That is, in case that the LTE that transmits the preamble in step 3 fails to receive an RAR, for example, within a time determined based on the configured maximum time of 10 ms, the UE may transmit a preamble again. The RAR may include scheduling information that allocates a resource for a signal to be transmitted by the UE in step 5 which is a subsequent step.

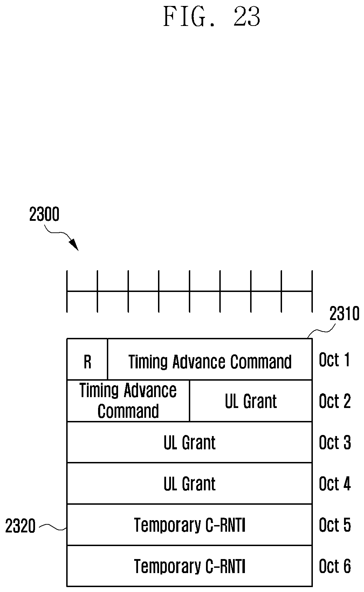

FIG. 23 is a diagram illustrating an example of the structure of information of an RAR. An RAR 2300 may be, for example, a MAC PDU, and may include information 2310 associated with timing advance (TA) to be applied by the UE and a temporary C-RNTI value 2320 to be used from the next step.

- Step 5: The LTE that receives the RAR in step 4 transmits message 3 (msg3) to the base station according to the scheduling information included in the RAR. The UE may include its unique ID value in msg3 and transmit the same.

The base station may attempt to receive msg3 according to the scheduling information that the base station transmits in step 4.

- Step 6: The base station receives msg3, identifies ID information of the UE, produces message 4 (msg4) including the ID information of the UE, and transmits the same to the UE. Upon transmission of msg3 in step 5, the UE may attempt to receive msg4 to be transmitted in step 6. The UE having received msg4 performs decoding and compares an ID value included in msg4 with an ID value that the LTE transmits in step 5, and identifies whether the base station receives msg3 that the UE transmits. A period of time for receiving msg4 in this step after the UE transmits msg3 in step 5 may be limited, and the maximum time may be configured via the SIB in step 2.

In case that the initial access procedure using this step is applied to satellite communication, a propagation delay incurred in satellite communication may be a problem. For example, a period (random access window) in which the UE is capable of receiving an RAR in step 4 after transmitting the random access preamble (or PRACH preamble) in step 3, that is, the maximum time for reception may be configured via *ra-ResponseWindow*. In the legacy LTE or 5G NR system, the maximum time may be configured as a maximum of 10 ms.

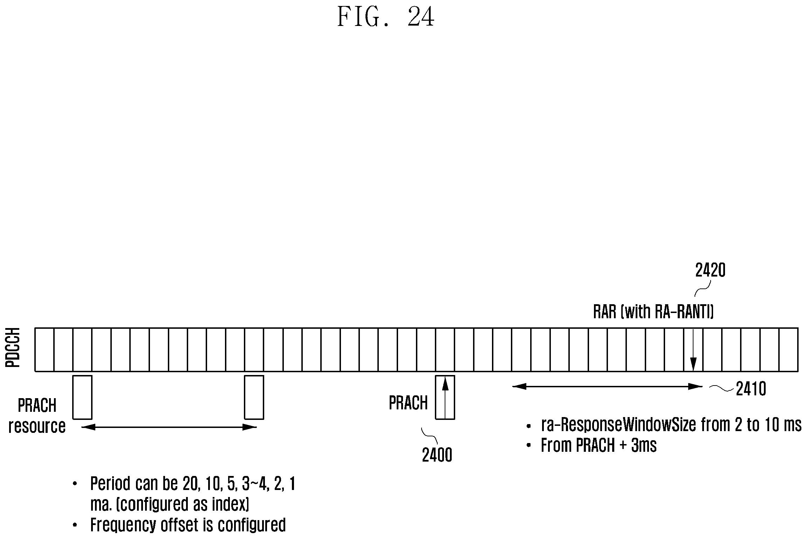

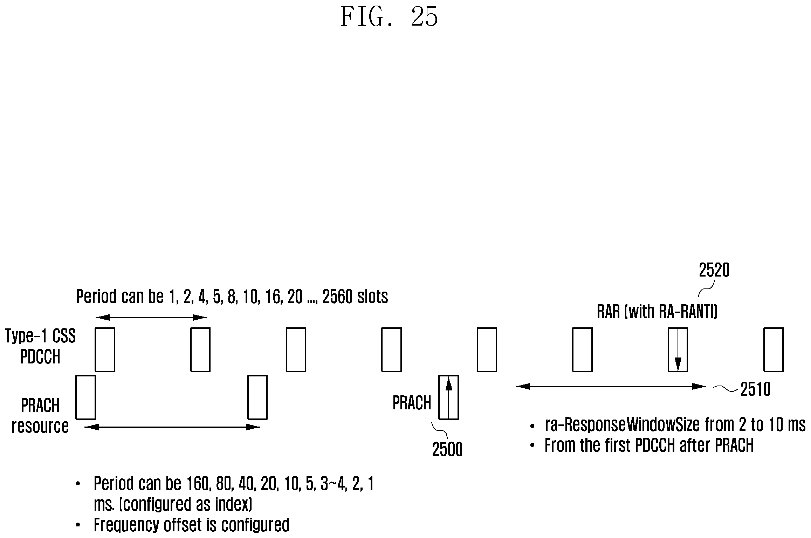

FIG. 24 is a diagram illustrating an example of a relationship between a reception point of an PRACH preamble configuration resource and a reception point of an RAR in the LTE system. FIG. 25 is a diagram illustrating an example of a relationship between a reception point of a PRACH preamble configuration resource and a reception point of an RAR in the 5G NR system. Referring to FIG. 24, in the case of LTE, from 3ms after the transmission 2400 of a PRACH (random access preamble), a random access window 2410 starts. In case that the LTE performs reception 2420 of an RAR in the random access window, the UE may determine that the preamble is successfully transmitted.

Referring to FIG. 25, in the case of NR, a random access window 2510 start from a control information area for RAR scheduling that appears for the first time after transmission 2500 of a PRACH (random access preamble). In case that the UE performs reception 2520 of an RAR in the random access window, the UE may determine that the PRACH preamble is successfully transmitted.

For example, TA for an uplink transmission timing in the 5G NR system may be determined as follows. First, $T_c = 1/(\Delta f_{max} \cdot N_f)$ is defined. Here, $\Delta f_{max} = 480 \cdot 10^3$ Hz and $N_f = 4096$. In addition, $\kappa = T_s/T_c = 64$ and $T_s = 1/(\Delta f_{ref} \cdot N_{f,ref})$, $\Delta f_{ref} = 15 \cdot 10^3$ Hz, $N_{f,ref} = 2048$ are defined.

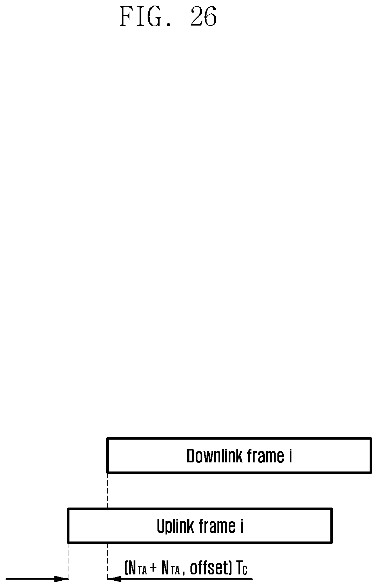

FIG. 26 is a diagram illustrating an example of timing of a downlink frame and an uplink frame from the perspective of a UE. The LTE may perform uplink transmission by shifting back an uplink frame by $T_{TA} = (N_{TA} + N_{TA,offset})T_c$ from the point of a downlink frame. $N_{TA}$ in the above may be transferred via an RAR or may be determined based on a MAC CE. $N_{TA,offset}$ may be a value configured for the LTE or a value determined based on a predetermined value.

The RAR of the 5G NR system may indicate a $T_A$ value. In this instance, $T_A$ may indicate one value among 0, 1, 2, ..., 3846. In this instance, in case that a subcarrier spacing (SCS) of the RAR is $2^\mu \cdot 15$ kHz, $N_{TA}$ may be determined to be $N_{TA} = T_A \cdot 16 \cdot 64/2^\mu$. After completion of a random access process, a changed value of TA may be indicated to the UE by the base station, and this may be indicated via an MAC CE or the like. $T_A$ information indicated via the MAC CE may indicate one of 0, 1, 2, ..., 63. This may be used for calculating a new TA value by being added to or subtracted from the existing TA value. Accordingly, the TA value may be newly calculated as shown in $N_{TA\_new} = N_{TA\_old} + (T_A - 31) \cdot 16 \cdot 64/2^\mu$. The UE may apply the TA value indicated as described above to uplink transmission, after a predetermined period of time elapses.

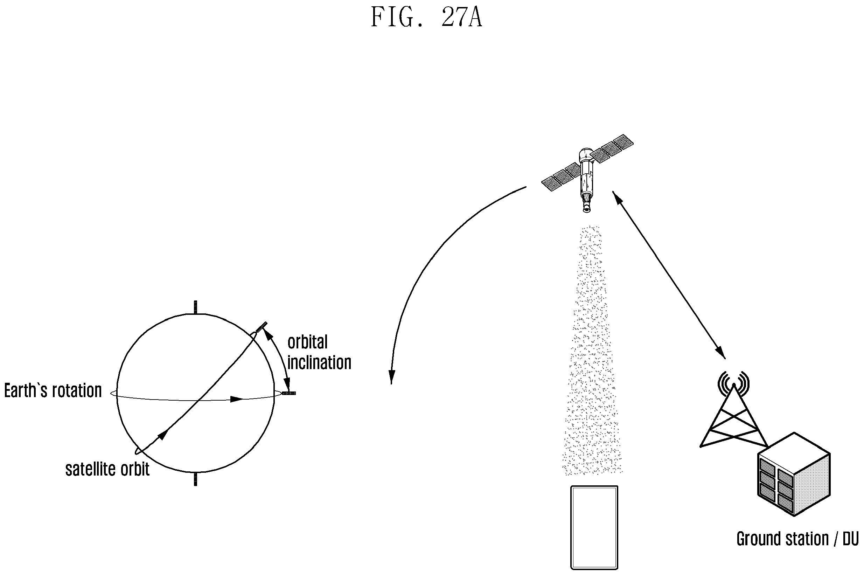

FIG. 27A is a diagram illustrating an example of continuous movement of a satellite from the perspective of a UE located on the ground of the earth or on the earth, as the satellite revolves around the earth along a satellite orbit. The distance between the UE and the satellite differs depending on an elevation angle at which the UE faces the satellite and thus, a latency (propagation delay) between the UE and the satellite and the base station may be changed.

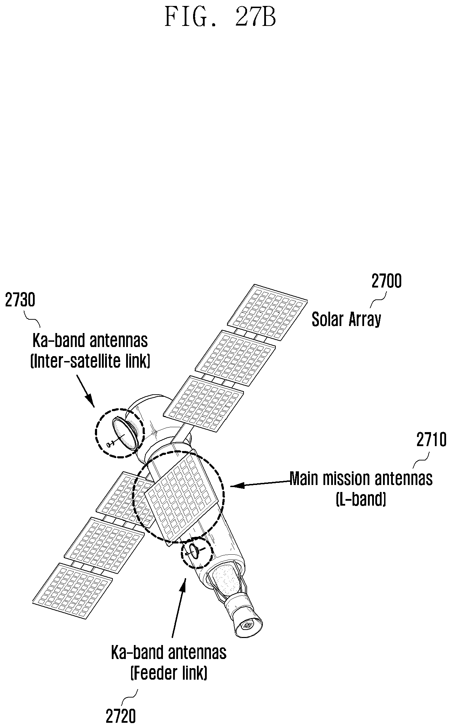

FIG. 27B is a diagram illustrating an example of the structure of an artificial satellite. A satellite may include a solar panel or solar array 2700 for sunlight or solar power generation, a transmission or reception antenna (main mission antenna) 2710 for communicating with a UE, a transmission or reception antenna (feeder link antenna) 2720 for communicating with a terrestrial station, an a transmission or reception antenna (inter-satellite link) 2730 for inter-satellite communication, a processor for controlling transmission or reception and performing signal processing, and the like. In case that inter-satellite communication is not supported in some cases of a satellite, an antenna for inter- satellite signal transmission or reception may not be disposed. Although FIG. 27B illustrates that an L band of 1 to 2GHz is used for communication with the UE, K band (in the range of 18 to 26.5 GHz), Ka band (in the range of 26.5 to 40 GHz), and Ku band (in the range of 12 to 18 GHz) which are high-frequency bands may also be usable.

In various embodiments of the disclosure, TA may be transmitted via a MAC control element (MAC CE), for example, timing advance command MAC CE, an absolute timing advance command MAC CE, or the like.

A message transferred from the MAC layer to the physical layer, for example, a MAC PDU may include one or more MAC sub-PDUs. Each MAC sub-PDU may include one of the following information.

. only a MAC sub-header (including padding)

. a MAC sub-header and a MAC SDU
. a MAC sub-header and a MAC CE
. a MAC sub-header and padding

MAC SDUs may be provided in variable sizes. Each MAC sub-header may correspond to a MAC SDU, a MAC CE, or padding.

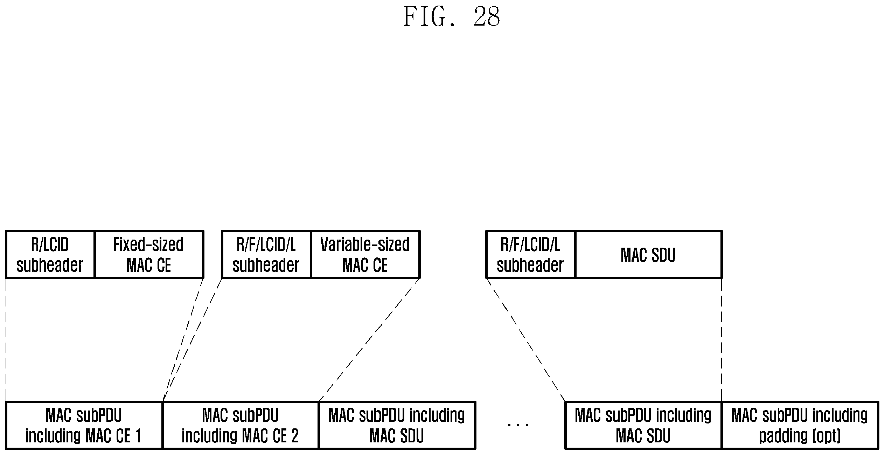

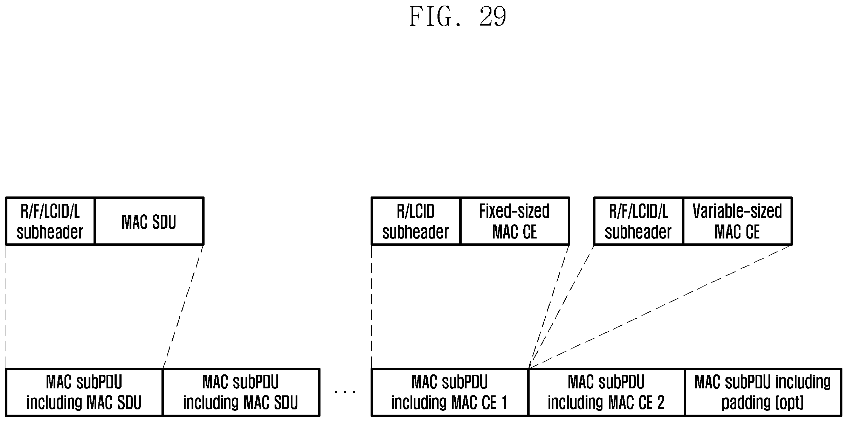

A message transferred from the MAC layer to the physical layer, for example, a MAC PDU, may be configured as shown in FIG. 28 in the case of a downlink, and as shown in FIG. 29 in the case of an uplink.

First, with reference to FIG. 28, there is provide a description in association with an example of a message transferred from the MAC layer to the physical layer in a downlink in a communication system according to various embodiments of the disclosure.

FIG. 28 is a diagram schematically illustrating an example of a message transferred from the MAC layer to the physical layer in a downlink in a communication system according to various embodiments of the disclosure.

Referring to FIG. 28, an example of a message transferred from the MAC layer to the physical layer in the downlink may be a downlink MAC PDU (DL MAC PDU). In FIG. 28, a MAC sub-PDU including MAC CE 1 may include an R/LCID sub-header and a fixed-sized MAC CE, and a MAC sub-PDU including MAC CE 2 may include an R/F/LCID/L sub-header and a variable-sized MAC CE. In addition, a MAC sub-PDU including a MAC SDU may include an R/F/LCID/L sub-header and a MAC SUD.

In FIG. 28, an LCID denotes a logical channel ID field. The LCID field may indicate the instance of a corresponding MAC SDU or the type of a corresponding MAC CE, or padding. This will be described with reference to Table 21 and Table 22 in detail. Here, Table 21 lists an LCID value for a DL-SCH. Table 22 lists an LCID value for an UL-SCH. One LCID field is present for each MAC sub-header, and the size of the LCID field is 6 bits. In case that the LCID field is configured as, for example, "34", one additional octet is present in a MAC sub-header including an eLCID field, and this may comply with the octet including the LCID field. In case that the LCID field is configured as, for example, "33", two additional octets are present in a MAC sub-header including an eLCID field, and the two octets may comply with the octet including the LCID field.

In addition, the eLCID denotes an extended logical channel ID field, and may indicate a logical channel instance of a corresponding MAC SDU or the type of a corresponding MAC CE. The size of the eLCID field may be 8 bits or 16 bits.

In addition, L denotes a length field, and the length field may indicate the length of a corresponding MAC SDU or the length of a variable-sized MAC CE. A single length field is present for each MAC sub-header, excluding sub-headers corresponding to MAC SDUs including the fixed-sized MAC CEs, padding, or UL common control channel (CCCH). The size of the length field may be indicated by an F field.

In addition, F denotes a format field, and indicates the size of a length field. A single F field may be present for each MAC sub-header, excluding MAC SDUs including fixed MAC CEs, padding, and a LTL CCCH. The size of the F field is 1 bit. For example, a value of 0 indicates 8 bits of the length field. As another example, a value of 1 indicates 16 bits of the length field.

In addition, R denotes a reserved bit and, for example, may be configured as "0".

As illustrated in FIG. 28, MAC CEs, for example, MAC CE 1 and MAC CE 2 are disposed together, and a MAC sub-PDU(s) including a MAC CE(s) may be disposed before a MAC sub-PDU including a MAC SDU and a MAC sub-PDU including padding. Here, the size of the padding may be zero.

Subsequently, with reference to FIG. 29, there is provide a description in association with an example of a message transferred from the MAC layer to the physical layer in an uplink in a communication system according to various embodiments of the disclosure.

FIG. 29 is a diagram schematically illustrating an example of a message transferred from the MAC layer to the physical layer in an uplink in a communication system according to various embodiments of the disclosure.

Referring to FIG. 29, an example of a message transferred from the MAC layer to the physical layer in the uplink may be an uplink MAC PDU (UL MAC PDU). In FIG. 29, a MAC sub-PDU including MAC CE 1 may include an R/LCID sub-header and a fixed-sized MAC CE, and a MAC sub-PDU including MAC CE 2 may include an R/F/LCID/L sub-header and a variable-sized MAC CE. In addition, a MAC sub-PDU including a MAC SDU may include an R/F/LCID/L sub-header and a MAC SUD.

As illustrated in FIG. 29, MAC CEs, for example, MAC CE 1 and MAC CE 2 are disposed together, and a MAC sub-PDU(s) including a MAC CE(s) may be disposed after a MAC sub-PDU including a MAC SDU and before a MAC sub-PDU including padding. Here, the size of the padding may be zero.

In FIG. 28 and FIG. 29, an LCID included in the sub-header of the MAC layer, that is, a logical channel ID or an extended logical channel ID (eLCID) may indicate the type of a MAC SDU or MAC CE transmitted, or the like. An example of mapping between an LCID index and the type of a MAC SDU or MAC CE or the like may be listed as shown in Table 21 below. An example of mapping between an eLCID index and the type of a MAC SDU or MAC CE or the like may be listed as shown in Table 22 below.

In various embodiments of the disclosure, an LCID may indicate the instance of a logical channel of a MAC SDU, the type of a MAC CE, or padding information of a downlink shared channel (DL-SCH) and an uplink shared channel (UL-SCH). A single LCID is mapped for each MAC sub-header and, for example, an LCID may be embodied as 6 bits.

[Table 21] LCID value for DL-SCH

| Codepoint/Index | LCID values |
|---|---|
| 0 | CCCH |
| 1-32 | Identity of the logical channel |
| 33 | Extended logical channel ID field (two-octet eLCID field) |
| 34 | Extended logical channel ID field (one-octet eLCID field) |
| 35-46 | Reserved |
| 47 | Recommended bit rate |
| as | SP ZP CSI-RS Resource Set Activation/Deactivation |
| 49 | PUCCH spatial relation Activation/Deactivation |
| 50 | SP SRS Activation/Deactivation |
| 51 | SP CSI reporting on PUCCH Activation/Deactivation |
| 52 | TCI State Indication for UE-specific PDCCH |
| 53 | TCI States Activation/Deactivation for UE-specific PDSCH |
| 54 | Aperiodic CSI Trigger State Subselection |
| 55 | SP CSI-RS/CSI-IM Resource Set Activation/Deactivation |
| 56 | Duplication Activation/Deactivation |
| 57 | SCell Activation/Deactivation (four octets) |
| 58 | SCell Activation/Deactivation (one octet) |
| 59 | Long DRX Command |
| 60 | DRX Command |
| 61 | Timing Advance Command |
| 62 | UE Contention Resolution Identity |
| 63 | Padding |

[Table 22] eLCID value for DL-SCH

| Codepoint | Index | LCID values |
|---|---|---|
| 0 to 244 | 64 to 308 | Reserved |
| 245 | 309 | Serving Cell Set based SRS Spatial Relation Indication |
| 246 | 310 | PUSCH Path loss Reference RS Update |
| 247 | 311 | SRS Pathloss Reference RS Update |
| 248 | 312 | Enhanced SP/AP SRS Spatial Relation Indication |
| 249 | 313 | Enhanced PUCCH Spatial Relation Activation/Deactivation |
| 250 | 314 | Enhanced TGI States Activation/Deactivation for UE-specific PDSCH |
| 251 | 315 | Duplication RLC Activation/Deactivation |
| 252 | 316 | Absolute Timing Advance Command |

(continued)

| Codepoint | Index | LCID values |
|---|---|---|
| 253 | 317 | SP Positioning SRS Activation/Deactivation |
| 254 | 318 | Provided Guard Symbols |
| 255 | 319 | Timing Delta |

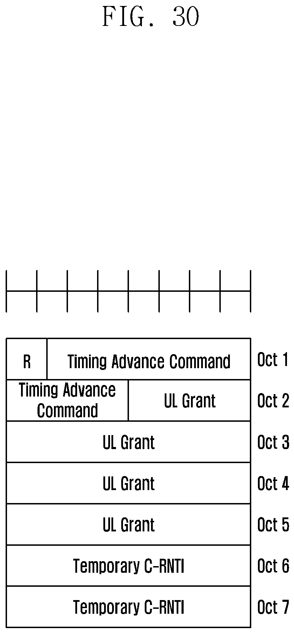

Subsequently, an example of the format of a MAC payload of an RAR or a MAC payload of MsgB (fallback RAR) in a communication system according to various embodiments of the disclosure will be described with reference to FIG. 30.

FIG. 30 is a diagram schematically illustrating an example of the format of the MAC payload of an RAR or the MAC payload of MsgB in a communication system according to various embodiments of the disclosure.

Referring to FIG. 30, for example, the MAC payload of an RAR may be referred to as a MAC RAR, and the MAC RAR may include the following fields.

. R field: a reserved bit that may be configured as, for example, "0"
. Timing advanced command field: a timing advanced command field indicates an index value $T_A$ used for controlling the amount of timing adjustment that a MAC entity needs to apply. The size of the timing advance command field is, for example, 12 bits.
. UL grant field: indicates resources to be used in an uplink, and the size of the UL grant field is, for example, 27 bits.
. Temporary C-RNTI field: indicates a temporary identity used by an MAC entity during random access, and the size of the temporary C-RNTI field is, for example, 16 bits.

In addition, in various embodiments of the disclosure, the term "base station (BS)" may be a component (or a component set) configured to provide radio access, such as a transmit point (TP), a transmit-receive point (TRP), an enhanced node B (eNodeB or eNB), a 5G base station (gNB), a macrocell, a femtocell, a WiFi access point (AP), or other wireless-enable devices based on a wireless communication system type. Base stations may provide radio access based on one or more radio protocols, for example, a 5G 3GPP new radio interface/access (NR), a long term evolution (LTE), an LTE advanced (LTE-A), a high speed packet access (HSPA), Wi-Fi 802.11a/b/g/n/ac, or the like.

In addition, in various embodiments of the disclosure, the term "terminal" may be a component such as a "user equipment (LTE)", a "mobile station", a "subscriber station", a "remote terminal", a "wireless terminal", a "receive point", or a "user device". For ease of description, the term "terminal" is used for indicating a device that accesses a base station in various embodiments of the disclosure, irrespective of whether the terminal is a mobile device (a mobile phone or smartphone) or whether the terminal is considered as a stationary device (e.g., a desktop computer or a vending machine). A satellite in various embodiments of the disclosure may be an object located at a height from the ground, and may be a concept including an airplane, an aircraft, or the like.

In addition, in various embodiments of the disclosure, the term "TA" may be interchangeably used with the term "TA information", "TA value", or "TA index".

In various embodiments of the disclosure, data or control information that a base station transmits to a UE is referred to as a first signal, and an uplink signal associated with the first signal is referred to as a second signal. For example, the first signal may include DCI, a UL grant, a PDCCH, a PDSCH, an RAR, and the like, and the second signal associated with the first signal may include a PUCCH, a PUSCH, msg 3, and the like.

In addition, there may be association between the first signal and the second signal. For example, in case that the first signal is a PDCCH including an LTL grant for uplink data scheduling, the second signal corresponding to the first signal may be a PUSCH including uplink data. A difference (gap) in the point in time of transmission or reception between the first signal and the second signal may be a value predetermined between a LTE and a base station Unlike the above, the difference in the point in time for transmission or reception between the first signal and the second signal may be determined via indication by a base station or may be determined based on a value transferred via higher signaling.

A satellite navigation system may be referred to as a GNSS, and the GNSS may include, for example, GPS in the U.S., GLONASS in Russia, Galileo in EU, Beidou in China, and the like. The GNSS may include a regional navigation satellite system (RNSS), and the RNSS may include, for example, IRNSS in India, QZSS in Japan, KPS in Korea, and the like. A signal transmitted in the GNSS may include at least one information among supplementary navigation information, normal operation state of a satellite, a satellite time, a satellite ephemeris, the altitude of a satellite, a reference time, and various correction data.

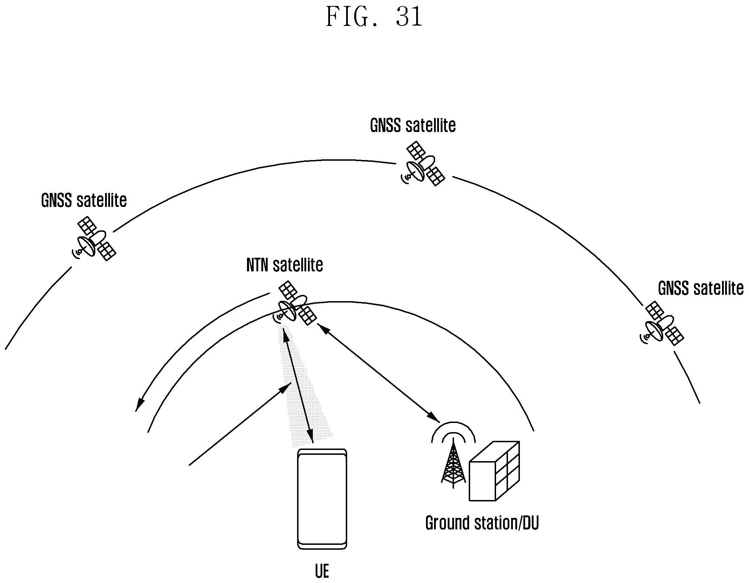

First, with reference to FIG. 31, a description will be provided in association with an uplink transmission operation in case that a UE directly calculates a TA value in a communication system according to various embodiments of the disclosure. FIG. 31 is a diagram schematically illustrating an uplink transmission operation in case that a UE directly calculates a TA value in a communication system according to various embodiments of the disclosure.

Referring to FIG. 31, a UE may perform estimation of a propagation delay between a satellite and a UE based on the location of the UE and the location of the satellite, may correct the estimated propagation delay for itself, and may perform uplink transmission. For example, the satellite may transmit information related to the location of the satellite via broadcast information, and the UE may receive the information related to the location of the satellite transmitted by the satellite, and may compare the location of the satellite and the location of the UE itself. The UE may identify the location of the UE itself by utilizing, for example, a global positioning system (GPS) or the like. The scheme of identifying the location of the LTE may be embodied in various formats, and a detailed description thereof will be omitted.

Based on a result obtained from the comparison between the location of the satellite and the location of the UE, the UE may estimate a propagation delay incurred when an electromagnetic wave is transferred from the UE to the satellite, and may calculate an uplink transmission time based on the estimated propagation delay. For example, on the assumption that the UE receives a downlink signal in slot n at a predetermined point in time in a downlink, and the UE needs to transmit an uplink signal corresponding to the received downlink signal in slot n+k, the UE may transmit the uplink signal a predetermined period of time, for example, 2*Td, earlier than the slot n+k. Here, Td may correspond to a propagation delay taken from the UE to the satellite calculated based on the location of the satellite and the location of the UE. Here, the propagation delay Td may be, for example, a value obtained by dividing, by the speed of light, the distance between the UE and the satellite. In addition, the location of the satellite may be a value calculated based on the slot n+k in which the UE transmits an uplink signal, and the location of the satellite in the slot n and the location of the satellite in the slot n+k may be changed as the satellite moves.

In various embodiments of the disclosure, the satellite navigation system such as a GPS may include one or more satellites, and each of the one or more satellites may transmit a signal including information such as a time, a location, and the like. The UE may receive a signal from each of one or more satellites of the satellite navigation system, and may identify the location of the UE itself based on the signal received from each of the one or more satellites.

In various embodiments of the disclosure, an NTN satellite may be a communication satellite that performs a function of transferring a signal in order to connect the UE to the base station. In addition, in various embodiments of the disclosure, a GNSS satellite may be a satellite for transmitting a signal of a satellite navigation system. It should be construed that the UE is expressed as a UE, and a base station is expressed as a ground station/DU, or the like in FIG. 31.

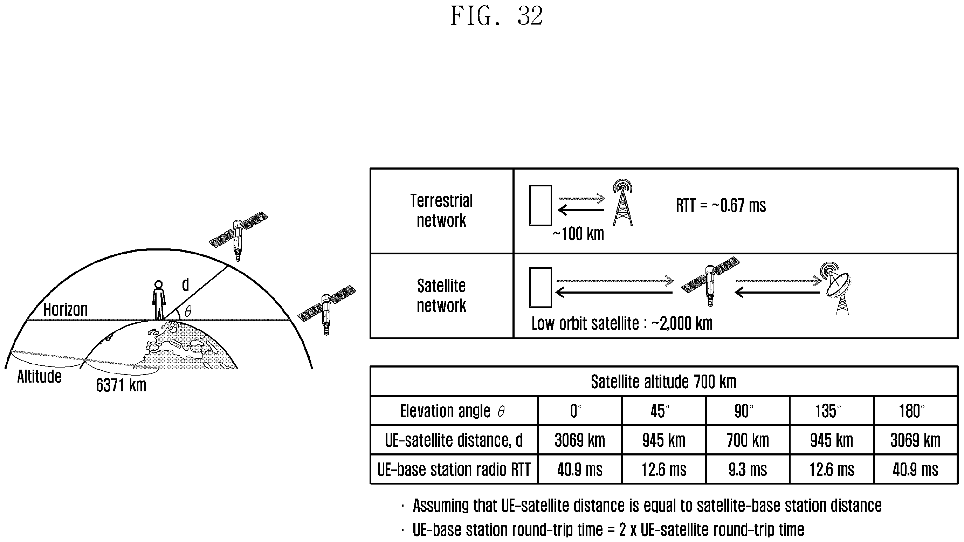

Subsequently, with reference to FIG. 32, a description will be provided in association with an example of a difference in propagation delay time between a terrestrial network and a satellite network in a communication system according to various embodiments of the disclosure.

FIG. 32 is a diagram schematically illustrating an example of a difference in propagation delay time between a terrestrial network and a satellite network in a communication system according to various embodiments of the disclosure.

Referring to FIG. 32, the distance between a UE and a base station in a terrestrial network is considered as, for example, approximately a maximum of 100 km and thus, a propagation delay less than or equal to 1 ms may be incurred between the UE and the base station.

However, the distance between the UE and a satellite in the satellite network may be thousands of km, and the distance between the satellite and the base station may be also thousands km and thus, a propagation delay in the satellite network may be significantly higher than a propagation delay in the terrestrial network.

A propagation delay may differ depending on the altitude and elevation angle of the satellite in the satellite network communication. FIG. 32 illustrates a UE-satellite distance and a round trip latency (round trip time (RTT)) of an electromagnetic wave depending on an elevation angle in case that the altitude of the satellite is 700 km. In addition, in the satellite network illustrated in FIG. 32, a low orbit satellite is assumed. In case that an elevation angle is in the range from 0° to 180°, a radio round trip latency (radio round trip time (radio RTT)) in the range of 40.9 ms to 9.3 ms may be incurred. Here, the radio RTT may include a round trip time spent in signal transmission or reception between a transmitter and a receiver, and a processing time taken in a counterpart node.

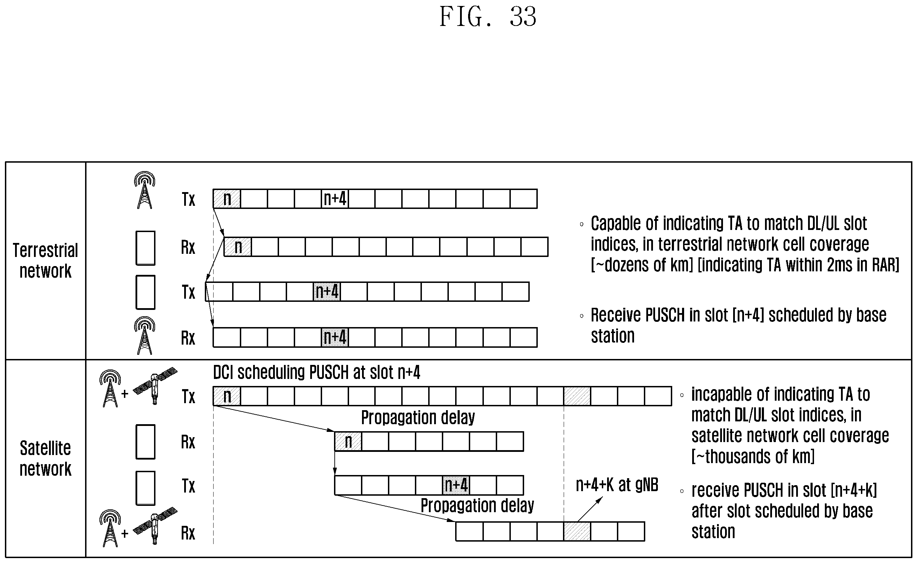

Subsequently, with reference to FIG. 33, a description will be provided in association with an example of applying TA in a terrestrial network and a satellite network in a communication system according to various embodiments of the disclosure. FIG. 33 is a diagram schematically illustrating an example of applying TA to a terrestrial network and a satellite network in a communication system according to various embodiments of the disclosure.

Referring to FIG. 33, the maximum propagation delay time in the terrestrial network is within 1 or 2 ms and thus, from the perspective of a base station, a slot timing at which a downlink signal is transmitted and a slot timing at which an uplink signal is received may be matched by using an TA function provided in the LTE and 5G NR systems (i.e., matching the index of a downlink slot and the index of an uplink slot). That is, in case that a UE transmits an uplink signal as much time as a TA value, indicated by the base station, earlier than a downlink time point, the point in time at which the base station receives the uplink signal transmitted by the LTE may match the downlink time point of the base station. FIG. 33 illustrates that the base station indicates a TA value via an RAR, and the UE transmits, based on the TA value, a PUSCH signal in slot n+4 scheduled by the base station, and the base station receives the PUSCH signal transmitted by the LTE in the slot n+4 in the terrestrial network.

In the satellite network, from the perspective of the base station, there may be difficulty in matching the slot timing of downlink signal transmission and the slot timing of uplink signal reception by using TA provided from the legacy LTE and 5G NR systems. A propagation delay incurred in the satellite network is approximately dozens of ms and is significantly higher than a propagation delay incurred in the terrestrial network, and the propagation delay is higher than the maximum value of TA considered in the legacy LTE and 5G NR systems. FIG. 33 illustrates the case in which the base station receives a PUSCH signal that the UE transmits in slot n+4+K including a delay of slot K, as opposed to receiving the PUSCH signal in the scheduled slot n+4, since the base station is incapable of indicating a TA value to the LTE in the satellite network.

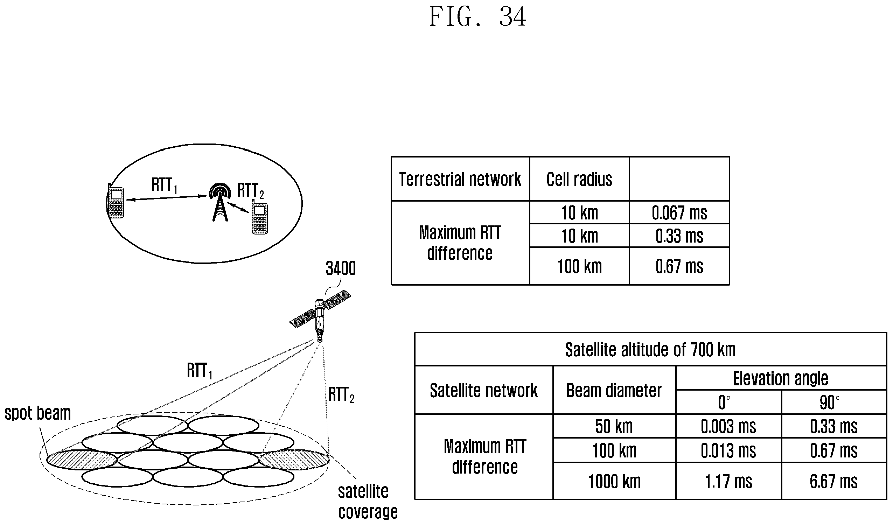

Subsequently, with reference to FIG. 34, a description will be provided in association with an example of the maximum difference in round trip latency in case that a plurality of LTEs are located in a single beam that a satellite supports in a communication system according to various embodiments of the disclosure.

FIG. 34 is a diagram schematically illustrating an example of the maximum difference in round trip latency in case that a plurality of UEs are located in a single beam that a satellite supports in a communication system according to various embodiments of the disclosure.

Referring to FIG. 34, a satellite 3400 may support a plurality of beams, and a plurality of UEs may be located in one of the plurality of beams supported by the satellite 3400. In this instance, FIG. 34 illustrates an example of the maximum difference value among differences in round trip latency incurred among the LTE, the satellite, and the base station.

As illustrated in FIG. 34, in a satellite network, as the size of a beam is small, for example, as the diameter of a beam is small, the maximum difference value of the round trip latency that the UE may have depending on an elevation angle is decreased.

Unlike the above, in the terrestrial network, the maximum difference value of the round trip latency depending on the radius of a cell may be decreased.

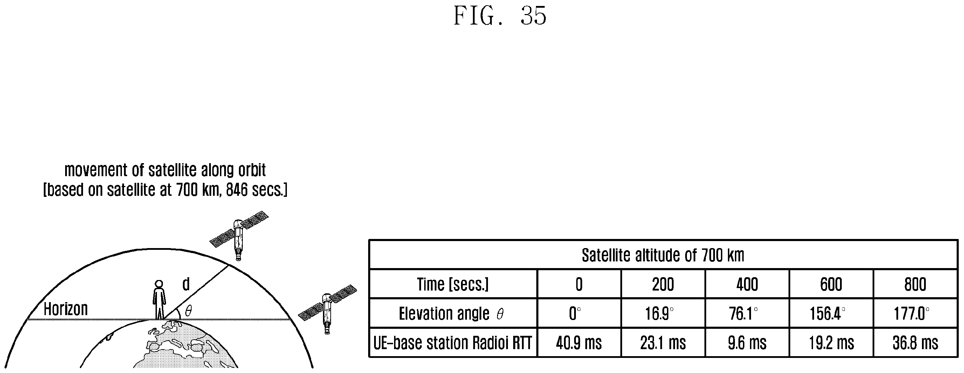

Subsequently, with reference to FIG. 35, a description will be provided in associated with an example of a wireless round trip latency between a LTE and a base station, which varies depending on the movement of a satellite in a communication system according to various embodiments of the disclosure.

FIG. 35 is a diagram schematically illustrating an example of a wireless round trip latency between a UE and a base station, which varies depending on the movement of a satellite in a communication system according to various embodiments of the disclosure.

Referring to FIG. 35, a satellite moves along its orbit, and as the satellite moves, a round trip latency between a UE and a base station may also change. As illustrated in FIG. 35, the satellite moves along its orbit and thus, the round trip latency between the UE and the base station may change over time. That is, in the case of a terrestrial network, generally, a round trip latency between the UE and the base station changes less than a predetermined period of time although time elapses and thus, the change is low. Conversely, in the case of a satellite network, a round trip latency between the LTE and the base station significantly highly changes over time and thus, the change in the round trip latency between the UE and the base station is significantly high.

The UE may receive a signal from each of one or more GNSS satellites, may calculate the location of the UE based on the signal received from each of the one or more GNSS satellites, and may also identify a reference time at each of the one or more GNSS satellites. In case that the LTE calculates the location of the LTE variously based on signals received from the plurality of GNSS satellites, the LTE may calculate the actual location of the LTE based on the average of the plurality of locations, a location corresponding to a received signal having the strongest intensity among the plurality of locations, an average value of the plurality of locations based on signal intensities (e.g., a method of applying a weight to a location corresponding to a signal having a high intensity), and the like. Here, the method of calculating the location of the LTE based on signals received from the plurality of GNSS satellites may be embodied in various ways, and a detailed description thereof will be omitted.

In various embodiments of the disclosure, a time obtained from a GNSS or a base station's time that the base station transfers may be based on, for example, a coordinated universal time (UTC), and this is based on a time from 00 seconds, 00 minutes, and 00 hours on January 1st, 1900 of the Gregorian calendar. This may differ depending on the type of GNSS system, and a reference time zone shown in Table 23 below may be used.

[Table 23]

| - *gnss-DayNumber*<br>- This field specifies the sequential number of days (with day count starting at 0) from the origin of the GNSS System Time as follows:<br>- GPS, QZSS, SBAS - Days from January 6th 1980 00:00:00 UTC (USNO); |
| --- |

(continued)

> - Galileo - Days from Galileo System Time (GST) start epoch, defined as 13 seconds before midnight between 21st August and 22nd August 1999; i.e., GST was equal to 13 seconds at August 22nd 1999 00:00:00 UTC;
> - GLONASS - Days from December 31st 1995 21:00:00 UTC (SU), which is local UTC Moscow
> - January 1st 1996 00:00:00, defined as UTC(SU) + 3 hours in [9];
> - BDS - Days from January 1st 2006 00:00:00 UTC (NTSC).
> - NavIC - Days from NavIC System Time start epoch, defined as 13 seconds before midnight between 21st
> - August and 22nd August 1999; i.e., NaviC System Time was equal to 00:00:00 at August 21 st, 1999
> - 23:55:47 UTC (BIPM).

In Table 23, NavIC denotes a navigation with Indian constellation, QZS denotes a Quasi Zenith satellite, QZSS denotes a Quasi-Zenith satellite system, QZST denotes a Quasi-Zenith system time, SBAS denotes a space based augmentation system, and BDS denotes a Beidou navigation satellite system.

In addition, via a satellite, the base station may indicate the type of GNSS system which is the reference of location or time information that the base station uses, and may use an indicator as shown in Table 24 below.

[Table 24]

| Value of *gnss-TO-ID* | Indication |
|---|---|
| 1 | GPS |
| 2 | Galileo |
| 3 | QZSS |
| 4 | GLONASS |
| 5 | BDS |
| 6 | NavIC |
| 7-15 | reserved |

As described above, based on the location of the UE calculated by the UE and the location of an NTN satellite received from the NTN satellite, the LTE may calculate a period of time to be spent in transferring a signal from the NTN satellite to the LTE, and based thereon, may determine a TA value. To determine the TA value, the UE may take into consideration the distance from the NTN satellite to the base station on the earth, or together with the distance from the NTN satellite to another NTN satellite in case a corresponding signal is transferred to the base station on the earth via the other NTN satellite.

Unlike the above, the LTE may obtain reference time information from information transferred from the GNSS satellite, may compare time information transmitted from the NTN satellite and the reference time information obtained from the GNSS satellite, and may calculate, based on a comparison result, a period of time (propagation delay) taken from the NTN satellite to the UE.

A method and device provided in various embodiments of the disclosure may be applicable to a terrestrial communication system, in addition to a satellite communication system.

Various embodiments of the disclosure provide a method and device for configuring or indicating the number of HARQ processes, and transferring and indicating an HARQ process ID value in a communication system.

<First embodiment>

In the first embodiment, there is provided a method and device for configuring the number of HARQ processes.

A base station may allow a large number of HARQ processes to a UE for successive scheduling. In this instance, a method and a device for configuring and indicating the number of HARQ processes are needed, which may be implemented by at least one of or a combination of at least one of the following methods. Hereinafter, unless otherwise mentioned in association with a downlink or an uplink, the following methods may be applicable to both the downlink and the uplink.

- Method A1: performs determination or configuration based on LTE capability. In this method, the maximum number of HARQ processes supported by a UE may be fixed and used based on UE capability. That is, in case that the UE supports 32 HARQ processes, 32 HARQ processes are always used.

- Method A2: indicates, via system information broadcasting (system information block (SIB)), the number of HARQ processes to be used for scheduling a corresponding base station.

- Method A3: a base station provides a configuration for a LTE by using an RRC message. For example, the configuration may be transferred via a parameter included in a configuration of a PDSCH or PUSCH per serving cell. For example, the parameter may be as follow.

```
PDSCH-ServingCellConfig ::=            SEQUENCE {
        nrofHARQ-ProcessesForPDSCH-R17            ENUMERATED {n2, n4, n6, n10, n12,
n16, n18, n20, n22, n24, n26, n28, n30, n32}
...}
```

- Method A4: a base station provides a configuration for a LTE by using a MAC CE.

- Method A5: a base station provides an indication to a UE via a predetermined bit field value of DCI.

- Method A6: In case that the number of HARQ processes greater than 16 is enabled, the corresponding number of HARQ processes may be used. For example, in case that 32_HARQ_processs parameter is configured to be enabled, a UE may use 32 HARQ processes.

- Method A7: in the case of access to a base station for a NTN or in the case of access to a base station via a satellite, 32 HARQ processes may be used. In case that a UE attempts access in a frequency band for an NTN, a parameter related to an NTN is transferred to an SIB, a value greater than or equal to at least a predetermined value is applied as TA, or the like, the UE may determine the case as the access to a base station for an NTN or the access to a base station via a satellite.

- Method A8: in case that the number of uplink HARQ processes is not configured separately, a UE assumes 16 HARQ processes for an uplink. That is, the default value of the number of uplink HARQ processes may be 16. In the above, 16 may be merely an example, and another value determined in advance may be used as the default value or the default value may be less than 32. This may be described as follow.

(For uplink, a maximum of 32 HARQ processes per cell is supported by the UE if the UE indicates *Extended-HARQProcess,* and a maximum of 16 HARQ processes per cell is supported, otherwise. The number of processes the LTE may assume will at most be used for the uplink is configured to the UE for each cell separately by higher layer parameter *nrofHARQ-ProcessesForPUSCH,* and when no configuration is provided the UE may assume a default number of 16 processes.)

The above configuration applies different methods in an uplink and a downlink, respectively. Although, for ease of description, it is described that the number of HARQ processes is increased to 32 in the disclosure, the disclosure may be applicable to the case in which the number of HARQ processes is increased to another value, which may be determined to be 64, 128, or the like.

In addition, one or more of the above-described methods A1 to A8 may be combined with one or more other methods and may be applied.

<Second embodiment>

In the second embodiment, there is provided a method and device for indicating an HARQ process ID. After a base station configures a plurality of HARQ processes for a UE, the base station needs to indicate an HARQ process ID in case of data scheduling. This may be implemented by at least one of or a combination of at least one of the following methods. Hereinafter, unless otherwise mentioned in association with a downlink or an uplink, the following methods may be applicable to both the downlink and the uplink. The method provides a method and device for determining the number of bits of a bit field of an indicator included in DCI for indicating an HARQ process ID.

- Method B1: an HARQ process ID may be calculated by performing the addition on or performing the addition of a modulo operation on an offset value (N_offset) transferred via an SIB, an RRC message, or a MAC CE and a value transferred via an HARQ process number bit field of DCI. That is, in case that a value transferred via DCI is N_DCI and the number of HARQ processes to be used is N_HARQ, HARQ process ID (N_ID) may be determined based on $N\_ID = \mathrm{mod}(N\_DCI + N\ offset, N\_HARQ)$. In the above-description, N_HARQ may be determined according to the method provided in the first embodiment of the disclosure. In the above-description, a mod(x, y) operation is a modulo operation that indicates a remainder obtained by dividing x by y.

- Method B2: the size of an HARQ process number bit field provided in DCI may be configured via higher signaling shown below.

```
harq-ProcessNumberSizeDCI-1-2-r17      INTEGER (0..5)
```

In case that a harq-ProcessNumberSizeDCI-1-2-r17 value configured above is N, this indicates that a bit field included in DCI that indicates an HARQ process number is N bits. In this instance, 0 to (2^N)-1 may be used for HARQ processes, or as another example, N_offset to N_offset+(2^N)-1 based on an offset value (N_offset) transferred via an SIB, an RRC message, or a MAC CE, may be used for HARQ processes. In case that an HARQ process ID reaches the predetermined number of HARQ processes, this means HARQ process 0 again. Such an offset value may be configured for each BWP, CORESET, or search space. That is, this is to enable scheduling by differently allocating an HARQ process ID for each a control information area (CORESET or search space) in which DCI is detected.

- Method B3: in case that the number of HARQ processes configured for use is N_HARQ ($N_{HARQ}$), N_HARQ may be determined according to the method provided in the first embodiment of the disclosure. In this instance, in DCI, a bit field for indicating an HARQ process number may include $\lceil \log_2 N_{HARQ} \rceil$ bits.
- Method B4: depending on a DCI format, the size of a bit field for indicating an HARQ process number may be different. For example, although 32 HARQ processes are configured to be used, DCI format 0_0 and 1_0 may have a 4-bit HARQ process number bit field, and DCI format 0_1 and 1_1 may have a 5-bit HARQ process number bit field. In this instance, via DCI format 0_0 and 1_0, uplink and downlink data scheduling may be performed by using HARQ processes 0 to 15. In addition, via DCI format 0_1 and 1_1, uplink and downlink data scheduling may be performed by using HARQ processes 0 to 31. Also, in this instance, via DCI format 0_0 and 1_0 based on an N_offset value separately configured by a base station, uplink and downlink data scheduling may be performed by using HARQ processes N_offset to mod(15+N_offset, 32). This is for scheduling using another HARQ process in case that satellite communication is supported in a carrier, such as terrestrial network communication.

In addition, one or more of the above-described methods B1 to B4 may be combined with one or more other methods and may be applied.

<Third embodiment>

The third embodiment provides a method and device for allocating an HARQ process ID in case of scheduling multiple PDSCHs or PUSCHs using a single DCI. Although the embodiment provides a description with reference to scheduling and transmission/reception of a PUSCH, the embodiment may be equally applied to the case of transmitting a PDSCH. In the disclosure, an HARQ process number and an HARQ process ID value may be interchangeably used.
In case that a single DCI schedules multiple successive PUSCHs, the corresponding DCI may indicate a single HARQ process ID. The indicated HARQ process ID may be used for a first scheduled PUSCH. Here, the problem is which HARQ process ID is to be used for the scheduled PUSCHs from the second PUSCH. To solve the problem, the legacy NR system increases an HARQ process ID value by one from the second PUSCH, and when the HARQ process ID reaches 16, the HARQ process ID returns to 0, and an HARQ process ID value increased by one for each time may be allocated. This may be described as follow.

> When the UE is scheduled with multiple PUSCHs by a DCI, HARQ process ID indicated by this DCI applies to the first PUSCH, as described in clause 6.1.2.1 of TS38.214, HARQ process ID is then incremented by 1 for each subsequent PUSCH(s) in the scheduled order, with modulo 16 operation applied.

However, in case that the above-described method is used in a system such as an NTN in which the number of HARQ processes is increased, or in case that the number of HARQ processes is configurable, the above-described method may cause a problem. For example, in case that a total of 32 HARQ processes are configured for use, HARQ process IDs 16 to 31 may not be used according to the above-described method. In addition, in case that DCI indicates a value greater than or equal to 16 as an HARQ process ID, operation may be abnormally performed. In addition, in case that the number of HARQ processes is configurable, an unavailable HARQ process may be incurred or an error that allocates an unavailable HARQ process ID may be incurred.
In order to solve the problem, in a system, such as an NTN in which the number of HARQ processes is increased, an HARQ process ID indicated by DCI that performs scheduling is used for a first scheduled PUSCH, and in case that 32 HARQ processes are configured for use, an HARQ process ID value may be increased by one for each time from a second PUSCH. When the HARQ process ID value reaches 32, the HARQ process ID returns to an HARQ process ID value of 0 and an HARQ process ID increased by one for each time may be assigned In case that 32 HARQ processes are not configured for use, the HARQ process ID value may be increased by one from a second PUSCH. When the HARQ process ID value reaches 16, the HARQ process ID value returns to an HARQ process ID value of 0 and an HARQ process ID increased by one for each may be assigned. This may be described as follow.

> When the UE is scheduled with multiple PUSCHs by a DCI, HARQ process ID indicated by this DCI applies to the first PUSCH, as described in clause 6.1.2.1 of TS38.214, HARQ process ID is then incremented by 1 for each subsequent PUSCH(s) in the scheduled order, with modulo 32 operation applied, if 32 HARQ processes are configured (*extendedHARQprocesses* is configured as *Enabled*), and with modulo 16 operation applied otherwise.

In the above-description, *extendedHARQprocesses* may be a configuration parameter for configuring 32 HARQ processes for use.

In case that the number of HARQ processes is configured and $N_{HARQ}$ HARQ processes are configured for use, an HARQ process ID indicated by DCI that performs scheduling may be used for a first scheduled PUSCH. In case that $N_{HARQ}$ HARQ processes are configured for use, the HARQ process ID value may be increased by one from a second PUSCH. When the HARQ process ID value reaches $N_{HARQ}$ the HARQ process ID value returns to an HARQ process ID value of 0 and an HARQ process ID increased by one for each may be assigned.

This may be described as follow.

> When the UE is scheduled with multiple PUSCHs by a DCI, HARQ process ID indicated by this DCI applies to the first PUSCH, as described in clause 6.1.2.1 of TS38.214, HARQ process ID is then incremented by 1 for each subsequent PUSCH(s) in the scheduled order, with modulo $N_{HARQ}$ operation applied.

<Fourth embodiment>

- Unlike the above-described disclosure, a method in which a base station informs a K_offset value via a MAC CE may be applicable.

In various embodiments of the disclosure, a method in which a LTE determines whether a serving cell is a serving cell provided via a satellite network or a serving cell provided via a terrestrial network may be embodied in various ways. For example, based on a frequency, an SIB, or an explicit indicator, the UE may identify whether the serving cell is a serving cell provided via a satellite network or a serving cell provided via a terrestrial network.

For example, in case that an SBI that provides parameters needed for satellite network transmission or reception is assumed to be an SIB-NTN or SIB-xx and the SIB-NTN or SIB-xx is provided from a base station in a corresponding serving cell, the UE may identify that the corresponding serving cell as a serving cell provided in the satellite network. Conversely, in case that the SIB-NTN or SIB-xx is not provided from the base station in the corresponding serving cell, the UE may identify that the corresponding serving cell as a serving cell provided in a terrestrial network.

As another example, as an explicit indicator, a parameter indicating whether the serving cell of a UE is an NTN network (satellite network) or a terrestrial network may be transmitted via an SIB. Here, the parameter indicating whether the serving cell is the NTN network or the terrestrial network may be embodied as a predetermined number of bits, for example, one bit. Here, it is assumed that the parameter indicating the NTN network or the terrestrial network is embodied as one bit. In case that the base station transmits a signal to a UE or receive a signal from a UE via a satellite network, the base station may configure the value of the parameter as, for example, 1. In case that the base station performs signal transmission or reception with the UE via a terrestrial network without using a satellite network, the base station may configure the value of the parameter as, for example, 0.

In case that the UE receives the parameter, and in case that the value of the parameter is 1, the LTE may identify that the serving cell is a serving cell provided via a satellite network. Conversely, in case that the value of the parameter is 0, the UE may identify that the serving cell is a serving cell provided via a terrestrial network. Here, the parameter may be a parameter transmitted via an MIB or an SIB. Alternatively, the UE may receive at least one of an MIB, a PBCH, a synchronization signal, or an SIB, and may identify the parameter value based on at least one of the received MIB, PBCH, synchronization signal, or SIB.

Signal transmission or reception via a satellite (a satellite network) in various embodiments of the disclosure may include the case in which a signal transmitted from a LTE is transferred to a satellite, and the signal is transferred from the satellite to a base station, and may include the case in which a signal transmitted from the base station is transferred to the satellite and the signal is transferred from the satellite to the UE.

Although a method and a device for configuring and indicating an HARQ process in a communication system according to various embodiment of the disclosure have been described with reference to various examples for ease of description, the various examples include mutually related operations and thus, two or more examples may be surely combined and used. Methods of the examples are not exclusive of one another, and one or more methods may be surely combined and implemented. In addition, as a matter of course, one or more embodiments may be combined and implemented.

Each of a base station, a satellite, and a UE for implementing the embodiments of the disclosure may function as a transmission end or a reception end. Each of the base station, satellite, and UE may include a receiver, a processor, and a transmitter, and each of the base station, satellite, and UE may operate according to embodiments of the disclosure.

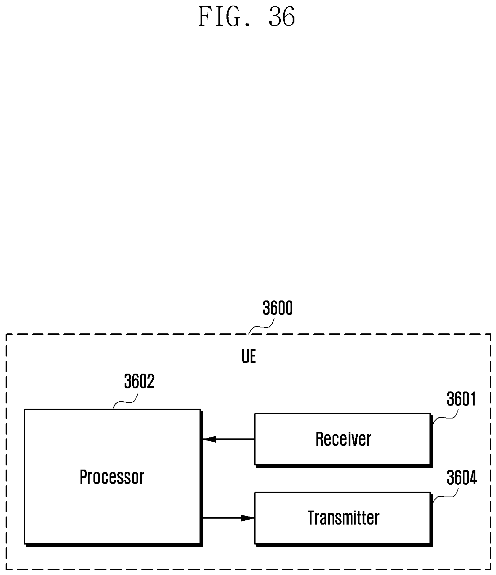

Here, with reference to FIG. 36, the internal structure of a LTE according to various embodiments of the disclosure will be described.

FIG. 36 is a block diagram schematically illustrating the internal structure of a LTE according to various embodiments of the disclosure.

As illustrated in FIG. 36, a UE 3600 may include a receiver 3601, a transmitter 3604, and a processor 3602. The receiver 3601 and the transmitter 3604 are commonly called a transceiver in the embodiments of the disclosure. The transceiver may perform signal transmission or reception with a base station. The signal may include control information and data. To this end, the transceiver may include an RF transmitter that up-converts and amplifies a frequency of a transmitted signal, an RF receiver that low-noise amplifies a received signal and down-converts a frequency, and the like. In addition, the transceiver may output, to the processor 3602, a signal received via a wireless channel, and may transmit a signal output from the processor 3602 via a wireless channel. The processor 3602 may control a series of processes so that the UE 3600 operates according to the above-described embodiments of the disclosure.

The processor 3602 may control overall operation related to an operation of configuring the number of HARQ processes, as described in the first embodiment, or an operation of indicating an ID value. For example, the receiver 3601 may receive a signal from a satellite or a base station on the earth, the processor 3602 may perform control so as to transmit a signal to the base station according to various embodiments of the disclosure, and to receive a signal from the base station. In addition, the transmitter 3604 may transmit a determined signal at a determined point in time.

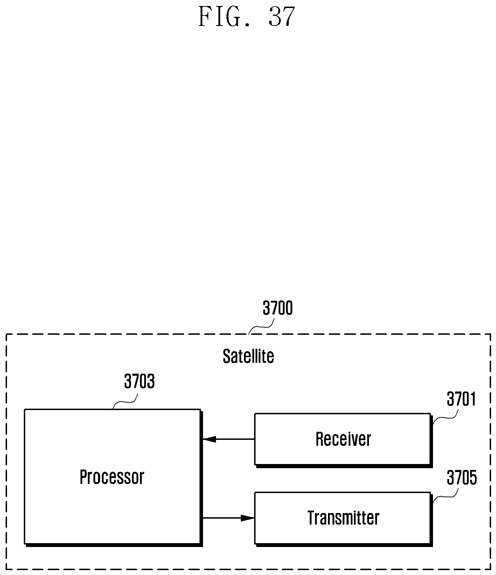

Subsequently, with reference to FIG. 37, the internal structure of a satellite according to various embodiments of the disclosure will be described.

FIG. 37 is a block diagram schematically illustrating the internal structure of a satellite according to various embodiments of the disclosure.

As illustrated in FIG. 37, a satellite 3700 may include a receiver 3701, a transmitter 3705, and a processor 3703. Although FIG. 37 illustrates that a receiver, a transmitter, and a processor are embodied as single entities such as a receiver 3701, a transmitter 3705, and a processor 3703 for ease of description, the receiver, the transmitter, and the processor may be embodied as multiple receivers, transmitters, and processors. For example, a receiver and a transmitter for signal transmission and reception with a LTE, a receiver and a transmitter for signal transmission and reception with a base station (and a receiver and a transmitter for signal transmission and reception with another satellite) may be embodied.

The receiver 3701 and the transmitter 3703 are commonly called a transceiver in the embodiments of the disclosure. The transceiver may perform signal transmission or reception with a UE and a base station. The signal may include control information and data. To this end, the transceiver may include an RF transmitter that up-converts and amplifies a frequency of a transmitted signal, an RF receiver that low-noise amplifies a received signal and down-converts a frequency, and the like. In addition, the transceiver may output, to the processor 3703, a signal received via a wireless channel, and may transmit a signal output from the processor 3703 via a wireless channel.

The processor 3703 may include a compensator (pre-compensator) for compensating a frequency offset or Doppler shift, and may include a device for tracking the location from a GPS or the like. In addition, the processor 3703 may include a frequency shift function that may shift the center frequency of a received signal. The processor 3703 may control a series of processes such that a satellite, a base station, and a UE operate according to the above-described embodiments of the disclosure.

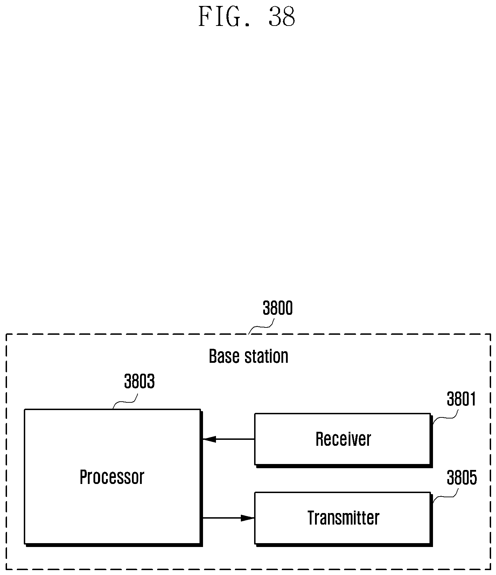

Subsequently, with reference to FIG. 38, the internal structure of a base station according to various embodiments of the disclosure will be described.

FIG. 38 is a block diagram schematically illustrating the internal structure of a base station according to various embodiments of the disclosure.

As illustrated in FIG. 38, a base station 3800 may include a receiver 3801, a transmitter 3805, and a processor 3803. The base station 3800 may be a base station on the earth or may be a part of a satellite. The receiver 3801 and the transmitter 3805 are commonly called a transceiver in the embodiments of the disclosure. The transceiver may perform signal transmission or reception with a UE. The signal may include control information and data. To this end, the transceiver may include an RF transmitter that up-converts and amplifies a frequency of a transmitted signal, an RF receiver that low-noise amplifies a received signal and down-converts the frequency, and the like. In addition, the transceiver may output, to the processor 3803, a signal received via a wireless channel, and may transmit a signal output from the processor 3803 via a wireless channel.

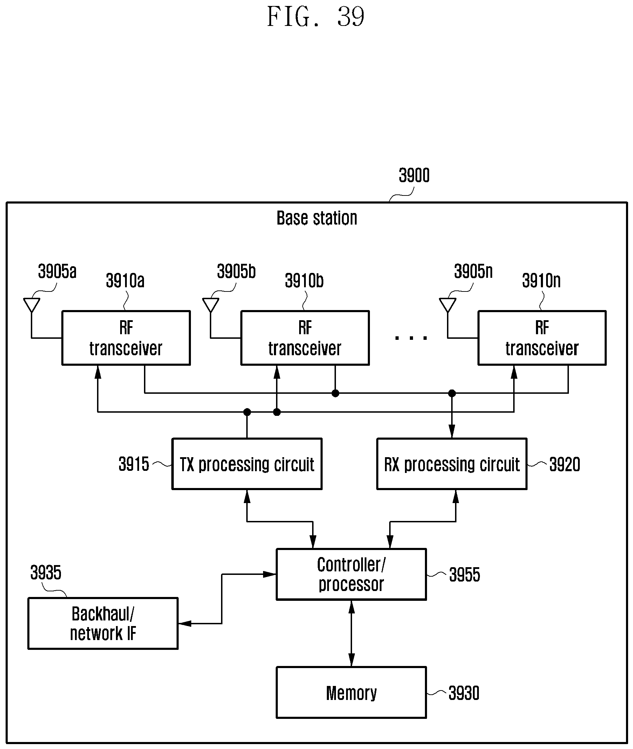

Subsequently, with reference to FIG. 39, the structure of a base station according to various embodiments of the disclosure will be described.

FIG. 39 is a diagram schematically illustrating the structure of a base station according to various embodiments of the disclosure. The embodiment of a base station illustrated in FIG. 39 is merely an example and thus, FIG. 39 does not limit the scope of the disclosure to a predetermined embodiment of a base station.

As illustrated in FIG. 39, a base station 3900 may include a plurality of antennas 3905 a to 3905n, a plurality of RF transceivers 3910a to 3910n, a transmit (TX) processing circuit 3915, and a receive (RX) processing circuit 3920. The base station may include a controller/processor 3925, a memory 3930, and a backhaul or network interface 3935.

The RF transceivers 3910a to 3910n may receive, via the antennas 3905a to 3905n, input RF signals, such as signals transmitted by UEs over network. The RF transceivers 3910a to 3910n may down-convert the input RF signals so as to produce IF or baseband signals. The IF or baseband signals may be transmitted to the RX processing circuit 3920, and the RX processing circuit 3920 may perform filtering, decoding, and/or digitalization on the baseband or IF signals so as to produce processed baseband signals. The RX processing circuit 3920 may transmit the processed baseband signals to the controller/processor 3925 for additional processing.

The TX processing circuit 3915 may receive analog or digital data (sound data, web data, e-mail, interactive video game data, or the like) from the controller/processor 3925. The TX processing circuit 3915 may encode, multiplex, and/or digitalize the output baseband data so as to produce processed baseband or IF signals. The RF transceiver 3910a to 3910n may receive the processed baseband or IF signal output from the TX processing circuit 3915, and may up-convert the baseband or IF signals to RF signals to be transmitted via the antennas 3905a to 3905n.

The controller/processor 3925 may include one or more processors or other processing devices for controlling overall operation of the base station. For example, the controller/processor 3925 may control reception of forward direction channel signals and transmission of reverse direction channel signals via the RF transceiver 3910a to 3910n, the RX processing circuit 3920, and the TX processing circuit 3915 according to the well-known principals. The controller/processor 3925 may support additional functions such as more advanced wireless communication functions.

In various embodiments of the disclosure, the controller/processor 3925 may control, for example, the overall operation related to an uplink timing adjustment operation based on a TA as described in the first embodiment. In various embodiments of the disclosure, the controller/processor 3925 may control, for example, the overall operation related to an operation of updating a TA by a UE, as described in the second embodiment.

In addition, the controller/processor 3925 may support beamforming or directional routing operations differently weighted in order to effectively steer signals in a desired direction, the signals being outputted from the plurality of antennas 3905a to 3905n. Any one of the various functions may be supported by the controller/processor 3925 in the base station.

The controller/processor 3925 may execute programs stationed in the memory 3930, such as an OS, and other processes. The controller/processor 3925 may move data needed by a process being implemented to the memory 3930 or outside the memory 3930.

The controller/processor 3925 may also be connected to the backhaul or network interface 3935. The backhaul or network interface 3935 may allow the base station to communicate with other devices or systems via a backhaul connection or a network. The interface 3935 may support communication via arbitrarily appropriate wired or wireless connection(s). For example, in case that the base station is embodied as a part of a cellular communication system (such as a cellular communication system that supports 5G, LTE, or LTE-A), the interface 3935 may allow the base station to communicate with other base stations via a wired or wireless backhaul connection. In case that the base station is embodied as an access point, the interface 3935 may allow the base station to perform communication over a larger network (such as the Internet) via a wired or wireless short distance communication network (local area network) or a wired or wireless connection. The interface 3935 may include a structure appropriate for supporting communication via a wired or wireless connection such as Ethernet or an RF transceiver.

The memory 3930 may be connected to the controller/processor 3925. A part of the memory 3930 may include a RAM, and another part of the memory 3930 may include a flash memory or another ROM.

Although FIG. 39 illustrates an example of a base station, various modifications of the example of FIG. 39 may be made. For example, the base station may include a predetermined number of components illustrated in FIG. 39. As a particular example, an access point may include a plurality of interfaces 3935, and the controller/processor 3925 may support routing functions that route data among different network addresses. As another particular example, it is illustrated that a single instance of the TX processing circuit 3915 and a single instance of the RX processing circuit 3920 are included. However, the base station may include a plurality of instances (e.g., one for each RF transceiver). In addition, in FIG. 39, various components may be combined, may be additionally divided again, or may be omitted, or additional components may be added depending on particular needs.

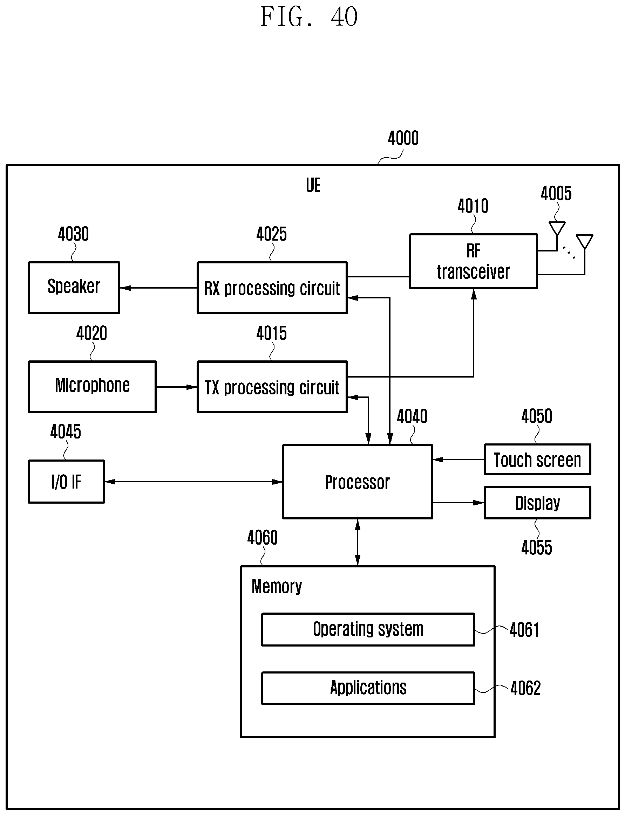

Subsequently, with reference to FIG. 40, the structure of a LTE according to various embodiments of the disclosure will be described.

FIG. 40 is a diagram schematically illustrating the structure of a LTE according to embodiments of the disclosure.

The embodiment of the UE illustrated in FIG. 40 is merely an example and thus, FIG. 40 does not limit the scope of the disclosure to a predetermined embodiment of a LTE.

As illustrated in FIG. 40, a UE 4000 may include an antenna 4005, a radio frequency (RF) transceiver 4010, a TX processing circuit 4015, a microphone 4020, and a receive (RX) processing circuit 4025. In addition, the LTE may include a speaker 4030, a processor 4040, an input/output (I/O) interface (IF) 4045, a touch screen 4050, a display 4055, and a memory 4060. The memory 4060 may include an operating system (OS) 4061 and one or more applications 4062.

The RF transceiver 4010 may receive an input RF signal, which is transmitted by a base station of a network, from the antenna 4005. The RF transceiver 4010 may down-convert the input RF signal so as to produce an intermediate frequency (IF) or a baseband signal. The IF or baseband signal may be transmitted to the RX processing circuit 4025, and the RX processing circuit 4025 may perform filtering, decoding, and/or digitalization on the baseband or IF signal so as to produce processed baseband signals. The RX processing circuit 4025 may transmit the processed baseband signal to the speaker 4030 (for sound data) or to the processor 4040 (for web browsing data) in order to perform additional processing.

The TX processing circuit 4015 may receive analog or digital sound data from the microphone 4020, or may receive another output baseband data (e.g., web data, e-mail, or interactive video game data) from the processor 4040. The TX processing circuit 4015 may encode, multiplex, and/or digitalize the output baseband data so as to produce a processed baseband or IF signal. The RF transceiver 4010 may receive the processed baseband or IF signal output from the TX processing circuit 4015, and may up-convert the baseband or IF signal into an RF signal to be transmitted via the antenna 4005.

The processor 4040 may include one or more processors or other processing devices, and may implement the OS 4061 stored in the memory 4060 in order to control the overall operation of the UE. For example, the processor 4040 may control reception of downlink channel signals and transmission of uplink channel signals via the RF transceiver 4010, the RX processing circuit 4025, and the TX processing circuit 4015 according to the well-known principals. In some embodiments, the processor 4040 may include at least one microprocessor or microcontroller.

In various embodiments of the disclosure, the processor 4040 may control, for example, the overall operation related to an operation of configuring or indicating the number of HARQ processes or indicating an HARQ process ID as described in the first embodiment.

The processor 4040 may implement other processes and programs contained in the memory 4060. The processor 4040 may move data to the memory 4060 or may move data from the memory 4060 when requested by a process being implemented. In some embodiments, based on the OS program 4061 or in response to signals received from base stations or operators, the processor 4040 may be configured to implement the applications 4062. In addition, the processor 4040 may be connected to the I/O interface 4045, and the I/O interface 4045 may provide capability of connecting to other devices such as laptop computers and handheld computers. The I/O interface 4045 may be a communication path between these accessories and the processor 4040.

The processor 4040 may be connected to the touch screen 4050 and the display unit 4055. An operator of the UE may input data to the UE by using the touch screen 4050. The display 4055 may be a liquid crystal display, a light emitting diode display, or other displays capable of rendering text and/or at least restricted graphics from web sites or the like.

The memory 4060 may be connected to the processor 4040. A part of the memory 4060 may include a random access memory (RAM), and the remaining part of the memory 4060 may include a flash memory or other read-only memory (ROM).

Although FIG. 40 illustrates an example of a UE, various modifications of the example of FIG. 40 may be made. For example, various components of FIG. 40 may be combined, may be further divided, or may be omitted, or other components may be added in response to a particular need. In addition, as a particular example, the processor 4040 may be divided into a plurality of processors, such as one or more central processing units (CPU) and one or more graphics processing units (GPU). In addition, although the UE is embodied as a mobile phone or a smartphone in FIG. 40, the UE may be embodied to operate as different types of mobile or stationary devices.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Furthermore, the above respective embodiments may be employed in combination, as necessary. For example, embodiments 1 and 2 may be employed in combination, or a part of embodiment 1 and a part of embodiment 2 may be employed in combination. Moreover, other variants of the above embodiments, based on the technical idea of the embodiments, may be implemented in LTE and 5G systems.

Although the disclosure has been described with exemplary embodiments, various changes and modifications may be suggested to those skilled in the art. It is intended that the disclosure encompass such changes and modifications that fall within the scope of the appended claims. None of the description in this application should be read as implying that any particular element, step, or function is an essential element that must be included in the scope of the claims. The scope of the subject matter to be patented is defined by the claims.

**Claims**

1. A method by a user equipment (UE) in a wireless communication system, the method comprising:

   transmitting, to a base station, capability information indicating whether the UE supports a number of increased hybrid automatic repeat request (HARQ) process;
   in case that the UE supports the number of increased HARQ process, receiving, form the base station, configuration information for the number of increased HARQ process; and
   performing communication with the base station based on an HARQ process identifier (ID) according to the number of increased HARQ process, wherein the increased HARQ process is based on the configuration information.

2. The method of claim 1, wherein the number of increased HARQ processes is 32.

3. The method of claim 1, wherein the performing of communication comprises, based on the HARQ process ID, transmitting a plurality of physical uplink shared channels (PUSCH) or receiving a plurality of physical downlink shared channels (PDSCH),

   wherein an HARQ process ID for the plurality of PUSCHs is allocated while being increased by 1 sequentially according to a modulo operation based on the number of increased HARQ processes; and
   wherein an HARQ process ID for the plurality of PDSCHs is allocated while being increased by 1 sequentially according to a modulo operation based on the number of increased HARQ processes.

4. The method of claim 1, wherein the number of increased HARQ processes is for non-terrestrial network (NTN) communication.

5. A method by a base station in a wireless communication system, the method comprising:

   receiving, from a user equipment (UE), capability information indicating whether the UE supports a number of increased hybrid automatic repeat request (HARQ) process;
   in case that the LTE supports the number of increased HARQ process, transmitting, to the UE, configuration information for the number of increased HARQ process; and
   performing communication with the UE based on an HARQ process identifier (ID) according to the number of increased HARQ process, wherein the increased HARQ process is based on the configuration information.

6. The method of claim 5, wherein the number of increased HARQ processes is 32, and the number of increased HARQ processes is for non-terrestrial network (NTN) communication.

7. The method of claim 5, wherein the performing of communication comprises, based on the HARQ process ID, receiving a plurality of physical uplink shared channels (PUSCH) or transmitting a plurality of physical downlink shared channels (PDSCH),

   wherein an HARQ process ID for the plurality of PUSCHs is allocated while being increased by 1 sequentially according to a modulo operation based on the number of increased HARQ processes, and
   wherein an HARQ process ID for the plurality of PDSCHs is allocated while being increased by 1 sequentially according to a modulo operation based on the number of increased HARQ processes.

8. A user equipment (UE) in a wireless communication system, the LTE comprising:

   a transceiver configured to perform signal transmission or reception; and
   a controller connected to the transceiver,
   wherein the controller is configured to:

      transmit, to a base station, capability information associated with whether the UE supports a number of increased hybrid automatic repeat request (HARQ) processes;
in case that the LTE supports the number of increased HARQ process, receive, from the base station, configuration information for the number of increased HARQ process; and
perform communication with the base station based on an HARQ process identifier (ID) according to the number of increased HARQ process, wherein the increased HARQ process is based on the configuration information.

9. The UE of claim 8, wherein the number of increased HARQ processes is 32.

10. The UE of claim 8, wherein the controller is further configured to, based on the HARQ process ID, transmit a plurality of physical uplink shared channels (PUSCH) or receive a plurality of physical downlink shared channels (PDSCH),

   wherein an HARQ process ID for the plurality of PUSCHs is allocated while being increased by 1 sequentially according to a modulo operation based on the number of increased HARQ processes; and
   wherein an HARQ process ID for the plurality of PDSCHs is allocated while being increased by 1 sequentially according to a modulo operation based on the number of increased HARQ processes.

11. The LTE of claim 8, wherein the number of increased HARQ processes is non-terrestrial network (NTN) communication.

12. A base station in a wireless communication system, the base station comprising:

   a transceiver configured to perform signal transmission or reception; and
   a controller connected to the transceiver,
   wherein the controller is configured to:

      receive, from a user equipment (UE), capability information associated with whether the UE supports a number of increased hybrid automatic repeat request (HARQ) process;
      in case that the UE supports the number of increased HARQ process, transmit, to the UE, configuration information for the number of increased HARQ process; and
      perform communication with the UE based on an HARQ process identifier (ID) according to the number of increased HARQ process, wherein the increased HARQ process is based on the configuration information.

13. The base station of claim 12, wherein the number of increased HARQ processes is 32.

14. The base station of claim 12, wherein the controller is further configured to, based on the HARQ process ID, receive a plurality of physical uplink shared channels (PUSCH) or transmit a plurality of physical downlink shared channels (PDSCH),

   wherein an HARQ process ID for the plurality of PUSCHs is allocated while being increased by 1 sequentially according to a modulo operation based on the number of increased HARQ processes, and
   wherein an HARQ process ID for the plurality of PDSCHs is allocated while being increased by 1 sequentially according to a modulo operation based on the number of increased HARQ processes.

15. The base station of claim 12, wherein the number of increased HARQ processes is for non-terrestrial network (NTN) communication.

# FIG. 1

Radio frame (114)

Slot
(106)

$N_{BW}$ subcarriers (104)

$N_{RB}$ subcarriers (110)

Resource element (112)

Resource block (108)

$N_{symb}$ OFDM symbols (102)

# FIG. 2

Duration
[204]

Frequency
resources
[203]

UE
bandwidth
part
[210]

Slot [220]

Frequency

TIME

control resource set#1 [201]

control resource set#2 [202]

# FIG. 3

# FIG. 4

# FIG. 5

501 — Transport block (TB) | 503 — CRC

add CRC to TB and divide into multiple CBs (505)

add CRC to each CB (515)

507 — Code block (CB) 1 | 509 — Code block (CB) 2 | ... | 511 — Code block (CB) N-1 | 513 — Code block (CB) N

517 — Code block (CB) 1 | CRC | 519 — Code block (CB) 2 | CRC | ... | 521 — Code block (CB) N-1 | CRC | 523 — Code block (CB) N | CRC

# FIG. 6

| SCS | Bandwidth |
|---|---|
| 15 kHz | 3.6 MHz |
| 30 kHz | 7.2 MHz |
| 120 kHz | 28.8 MHz |
| 240 kHz | 57.6 MHz |

EP 4 319 005 A1

# FIG. 7

# FIG. 8

First signal (802)  Second signal (808)

gNB Tx/Rx | n | n+1 | n+2 | n+3 | n+4 | n+5 | n+6 | n+7

804

UE Rx | n | n+1 | n+2 | n+3 | n+4 | n+5 | n+6 | n+7

810 ⌢ propagation delay = $T_P$

806

UE Tx | n | n+1 | n+2 | n+3 | n+4 | n+5 | n+6 | n+7

Timing advance = $T_A$ ⌢ 812

UE processing time for preparing transmission of second signal ⌢ 814

# FIG. 9

EP 4 319 005 A1

FIG. 10

Very Small
aperture terminal

Spaceborne
plateform

Gateway

Core
network

Public
data
network

Service link

Feeder link

1001

1003

1007

1009

EP 4 319 005 A1

FIG. 11

| Orbit type | Height | Period |
|:---:|:---:|:---:|
| LEO | 500~1000 km | 90~120 min |
| MEO | 5000~15000 km | Approx 6 hours |
| GEO | Approx 36,000 km | Approx 24 hours |

FIG. 12

EP 4 319 005 A1

FIG. 13

1310 — Communications on the move — Embody mobile communication service in vessel and airplane

1300 — Personal emergency service — Embody satellite-UE direct communication function in smartphone

1330 — Remote area backhauling — Embody wireless backhaul by combining base station and UE that supports satellite communication

1320 — Enterprise service — Perform real-time tracking/control of vessel/truck/drone without restriction based on border

# FIG. 14

Noise figure: 5 dB

Thermal Noise = –119.1 dBm

Achievable SNR
-2.63 dB

LEO

Rx antenna gain
30 dBi

1,200 km

Path los
169.8 dB

- Free space path loss: 164.5 dB
- Atmospheric path loss: 0.1 dB
- Shadowing margin: 3 dB
- Scintillation loss: 2.2 dB
- Additional loss: 0 dB

EIRP: 23 dBm

- Case: LEO 1200, uplink

| Freq [GHz] | 2 |
|---|---|
| bandwidth [MHz] | 0.36 |
| SNR [dB] | -2.63 |
| SIR [dB] | 2.0 |
| SINR [dB] | -3.92 |
| MCS index | 2 |
| required repetition | 0 |
| TBS [bits] | 56 |
| TTI [ms] | 0.5 |
| approx. throughput | 112 kbps |

EP 4 319 005 A1

# FIG. 15

Noise figure: 7.7 dB

Thermal Noise = -118.78 dBm

Achievable SNR
-10.8 dB

GEO

Rx antenna gain
51 dBi

35,786 km

Path los
195.9 dB

- Free space path loss: 190.6 dB
- Atmospheric path loss: 0.1 dB
- Shadowing margin: 3 dB
- Scintillation loss: 2.2 dB
- Additional loss: 0 dB

EIRP: 23 dBm

- Case: GEO, uplink

| Freq [GHz] | 2 |
|---|---|
| bandwidth [MHz] | 0.36 |
| SNR [dB] | -10.8 |
| SIR [dB] | 2.0 |
| SINR [dB] | -11 |
| gap to MCS [dB] | 4.8 |
| required repetition | 3.0 |
| TBS [bits] | 32 |
| TTI [ms] | 1.5 |
| approx. throughput | 21 kbps |

# FIG. 16

- Link budget between UE and satellite

  - Path loss : (1600)
    $$FSPL (d, f_c) = 32.45 + 20 \log_{10} (f_c) + 20 \log_{10} (d)$$

  - Rx antenna gain for UL : 24 dBi (LEO), 45.5 dBi (GEO)

- Link budget between UE and terrestrial gNB

  - Path loss (LOS) : (1610)
    $$PL_2 = 28.0 + 40 \log_{10} (d_{3D}) + 20 \log_{10} (f_c) - 9 \log_{10} ((d`_{BP})^2 + (h_{BS} - h_{UT})^2)$$

  - Path loss (NLOS) : (1620)
    $$PL`_{UMa-NLOS} = 13.54 + 39.08 \log_{10} (d_{3D}) + 20 \log_{10} (f_c) - 0.6 (h_{UT} - 1.5)$$

  - Rx antenna gain for UL : ~12 dBi

# FIG. 17

$$\text{Doppler shift} = f_c \frac{v}{c} \cos \alpha$$

$$f_c \frac{v}{c} \cos \alpha = f_c \frac{v}{c} \frac{\sin \beta}{\sqrt{1+r^2 - 2r \cos\beta}} \,, \qquad r = \frac{R+h}{R}$$

EP 4 319 005 A1

FIG. 18

FIG. 19

● Doppler shift within a beam footprint

UE1`s Doppler shift $= f_c \frac{v}{c} \cos \alpha = f_c \frac{v}{c} \frac{\sin \beta}{\sqrt{1+r^2 - 2r \cos\beta}}$

UE2`s Doppler shift $= f_c \frac{v}{c} \cos \alpha` = f_c \frac{v}{c} \frac{\sin (\beta + \triangle\beta)}{\sqrt{1+r^2 - 2r \cos(\beta + \triangle\beta)}}$

$\triangle\beta = \frac{d}{R}$ (rad)    $r = \frac{R + h}{R}$

$f_c$ = 2 GHz
h = 700 km
d = 50 km (cell size)
UE speed = 0
Max $\triangle$Doppler = 3.57 kHz

θ, elevation of UE1 (degree)

EP 4 319 005 A1

FIG. 20

# FIG. 21

# FIG. 22

# FIG. 23

| | |
|---|---|
| R | Timing Advance Command | Oct 1 |
| Timing Advance Command | UL Grant | Oct 2 |
| UL Grant | | Oct 3 |
| UL Grant | | Oct 4 |
| Temporary C-RNTI | | Oct 5 |
| Temporary C-RNTI | | Oct 6 |

EP 4 319 005 A1

# FIG. 24

PDCCH

PRACH resource

- Period can be 20, 10, 5, 3~4, 2, 1 ma. (configured as index)
- Frequency offset is configured

PRACH

2400

RAR (with RA-RANTI)

2420

2410

- ra-ResponseWindowSize from 2 to 10 ms
- From PRACH + 3ms

EP 4 319 005 A1

# FIG. 25

**Period can be 1, 2, 4, 5, 8, 10, 16, 20 …, 2560 slots**

RAR (with RA-RANTI)                    2520

Type-1 CSS
PDCCH

PRACH
resource

PRACH                                  2510

2500

• ra-ResponseWindowSize from 2 to 10 ms
• From the first PDCCH after PRACH

• Period can be 160, 80, 40, 20, 10, 5, 3~4, 2, 1
  ms. (configured as index)
• Frequency offset is configured

FIG. 26

Downlink frame i

Uplink frame i

$(N_{TA} + N_{TA, offset}) T_c$

FIG. 27A

# FIG. 27B

2730

Ka-band antennas
(Inter-satellite link)

2700

Solar Array

2710

Main mission antennas
(L-band)

Ka-band antennas
(Feeder link)

2720

FIG. 28

| R/LCID subheader | Fixed-sized MAC CE | | R/F/LCID/L subheader | Variable-sized MAC CE | | R/F/LCID/L subheader | MAC SDU |
|---|---|---|---|---|---|---|---|

| MAC subPDU including MAC CE 1 | MAC subPDU including MAC CE 2 | MAC subPDU including MAC SDU | . . . | MAC subPDU including MAC SDU | MAC subPDU including padding (opt) |
|---|---|---|---|---|---|

# FIG. 29

| R/F/LCID/L subheader | MAC SDU |
|---|---|

| R/LCID subheader | Fixed-sized MAC CE | R/F/LCID/L subheader | Variable-sized MAC CE |
|---|---|---|---|

| MAC subPDU including MAC SDU | MAC subPDU including MAC SDU |
|---|---|

. . .

| MAC subPDU including MAC CE 1 | MAC subPDU including MAC CE 2 | MAC subPDU including padding (opt) |
|---|---|---|

EP 4 319 005 A1

# FIG. 30

| | | |
|---|---|---|
| R | Timing Advance Command | Oct 1 |
| Timing Advance Command | UL Grant | Oct 2 |
| UL Grant | | Oct 3 |
| UL Grant | | Oct 4 |
| UL Grant | | Oct 5 |
| Temporary C-RNTI | | Oct 6 |
| Temporary C-RNTI | | Oct 7 |

FIG. 31

GNSS satellite

GNSS satellite

GNSS satellite

NTN satellite

Ground station/DU

UE

EP 4 319 005 A1

# FIG. 32

| Terrestrial network | $\square \rightleftarrows$ 🗼  ~100 km | RTT = ~0.67 ms |
|---|---|---|
| Satellite network | $\square \rightleftarrows$ 🛰 $\rightleftarrows$ 📡  Low orbit satellite : ~2,000 km | |

| Satellite altitude 700 km | | | | | |
|---|---|---|---|---|---|
| Elevation angle $\theta$ | 0° | 45° | 90° | 135° | 180° |
| UE-satellite distance, d | 3069 km | 945 km | 700 km | 945 km | 3069 km |
| UE-base station radio RTT | 40.9 ms | 12.6 ms | 9.3 ms | 12.6 ms | 40.9 ms |

· Assuming that UE-satellite distance is equal to satellite-base station distance
· UE-base station round-trip time = 2 x UE-satellite round-trip time

EP 4 319 005 A1

# FIG. 33

**Terrestrial network**

Tx: n ... n+4 ...

Rx: n ...

Tx: n+4 ...

Rx: n+4 ...

- Capable of indicating TA to match DL/UL slot indices, in terrestrial network cell coverage [~dozens of km] [indicating TA within 2ms in RAR]

- Receive PUSCH in slot [n+4] scheduled by base station

**Satellite network**

DCI scheduling PUSCH at slot n+4

Tx: n ...

Propagation delay

Rx: n ...

Tx: n+4 ...

Propagation delay

n+4+K at gNB

Rx: ...

- incapable of indicating TA to match DL/UL slot indices, in satellite network cell coverage [~thousands of km]

- receive PUSCH in slot [n+4+k] after slot scheduled by base station

# FIG. 34

| Terrestrial network | Cell radius | |
|---|---|---|
| Maximum RTT difference | 10 km | 0.067 ms |
| | 10 km | 0.33 ms |
| | 100 km | 0.67 ms |

| Satellite altitude of 700 km | | | |
|---|---|---|---|
| Satellite network | Beam diameter | Elevation angle | |
| | | 0° | 90° |
| Maximum RTT difference | 50 km | 0.003 ms | 0.33 ms |
| | 100 km | 0.013 ms | 0.67 ms |
| | 1000 km | 1.17 ms | 6.67 ms |

EP 4 319 005 A1

FIG. 35

movement of satellite along orbit
[based on satellite at 700 km, 846 secs.]

| Satellite altitude of 700 km | | | | | |
|---|---|---|---|---|---|
| Time [secs.] | 0 | 200 | 400 | 600 | 800 |
| Elevation angle $\theta$ | 0° | 16.9° | 76.1° | 156.4° | 177.0° |
| UE-base station Radioi RTT | 40.9 ms | 23.1 ms | 9.6 ms | 19.2 ms | 36.8 ms |

FIG. 36

3600

UE

3602

Processor

3601

Receiver

3604

Transmitter

FIG. 37

3700

Satellite

3703

Processor

3701

Receiver

3705

Transmitter

FIG. 38

3800

Base station

3803

Processor

3801

Receiver

3805

Transmitter

FIG. 39

# FIG. 40

## INTERNATIONAL SEARCH REPORT

| International application No. |
| --- |
| **PCT/KR2022/005194** |

**A.    CLASSIFICATION OF SUBJECT MATTER**

**H04L 1/18**(2006.01)i; **H04L 5/00**(2006.01)i; **H04L 27/34**(2006.01)i; **H04B 7/185**(2006.01)i; **H04W 56/00**(2009.01)i

According to International Patent Classification (IPC) or to both national classification and IPC

**B.    FIELDS SEARCHED**

Minimum documentation searched (classification system followed by classification symbols)

H04L 1/18(2006.01); H04B 7/155(2006.01); H04L 5/00(2006.01); H04L 5/14(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 증가된 HARQ 프로세스 개수(enhanced HARQ process number), 캐퍼빌리티 (capability), 설정(configuration), HARQ 프로세스 ID(HARQ process ID)

**C.    DOCUMENTS CONSIDERED TO BE RELEVANT**

| Category* | Citation of document, with indication, where appropriate, of the relevant passages | Relevant to claim No. |
| --- | --- | --- |
| Y | SAMSUNG. Enhancements on HARQ for NTN. R1-2008166, 3GPP TSG RAN WG1 #103-e, e-Meeting. 01 November 2020.<br>　　　　See page 4. | 1-15 |
| Y | SONY. Enhancements on HARQ for NTN. R1-2008361, 3GPP TSG RAN WG1 #103-e, e-Meeting. 01 November 2020.<br>　　　　See page 2. | 1-15 |
| Y | QUALCOMM INCORPORATED. Enhancements on HARQ for NTN. R1-2009264, 3GPP TSG RAN WG1 #103-e, e-Meeting. 01 November 2020.<br>　　　　See page 1. | 3,7,10,14 |
| A | WO 2017-146294 A1 (LG ELECTRONICS INC.) 31 August 2017 (2017-08-31)<br>　　　　See paragraphs [0814]-[0867]; and figures 47a-48. | 1-15 |
| A | US 2016-0164660 A1 (LG ELECTRONICS INC.) 09 June 2016 (2016-06-09)<br>　　　　See claims 1-8. | 1-15 |

☐ Further documents are listed in the continuation of Box C.　　☑ See patent family annex.

| * | Special categories of cited documents: | | "T" | later document published after the international filing date or priority date and not in conflict with the application but cited to understand the principle or theory underlying the invention |
| --- | --- | --- | --- | --- |
| "A" | document defining the general state of the art which is not considered to be of particular relevance | | | |
| "D" | document cited by the applicant in the international application | | "X" | document of particular relevance; the claimed invention cannot be considered novel or cannot be considered to involve an inventive step when the document is taken alone |
| "E" | earlier application or patent but published on or after the international filing date | | | |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | | |
| "P" | document published prior to the international filing date but later than the priority date claimed | | "&" | document member of the same patent family |

| Date of the actual completion of the international search | Date of mailing of the international search report |
| --- | --- |
| **29 June 2022** | **29 June 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/005194**

| Patent document cited in search report | | | Publication date (day/month/year) | Patent family member(s) | | | Publication date (day/month/year) |
|---|---|---|---|---|---|---|---|
| WO | 2017-146294 | A1 | 31 August 2017 | US | 10833810 | B2 | 10 November 2020 |
| | | | | US | 10873422 | B2 | 22 December 2020 |
| | | | | US | 2019-0068331 | A1 | 28 February 2019 |
| | | | | US | 2020-0145140 | A1 | 07 May 2020 |
| | | | | WO | 2017-146287 | A1 | 31 August 2017 |
| US | 2016-0164660 | A1 | 09 June 2016 | CN | 103039031 | A | 10 April 2013 |
| | | | | CN | 103039031 | B | 03 February 2016 |
| | | | | CN | 105471556 | A | 06 April 2016 |
| | | | | CN | 105471556 | B | 04 December 2018 |
| | | | | EP | 2582081 | A2 | 17 April 2013 |
| | | | | EP | 2582081 | B1 | 05 August 2020 |
| | | | | JP | 2013-529862 | A | 22 July 2013 |
| | | | | JP | 2016-131398 | A | 21 July 2016 |
| | | | | JP | 5914468 | B2 | 11 May 2016 |
| | | | | JP | 6141578 | B2 | 07 June 2017 |
| | | | | KR | 10-1799273 | B1 | 20 December 2017 |
| | | | | KR | 10-2011-0134853 | A | 15 December 2011 |
| | | | | US | 2013-0077543 | A1 | 28 March 2013 |
| | | | | US | 2015-0172003 | A1 | 18 June 2015 |
| | | | | US | 8948066 | B2 | 03 February 2015 |
| | | | | US | 9281923 | B2 | 08 March 2016 |
| | | | | US | 9621329 | B2 | 11 April 2017 |
| | | | | WO | 2011-155785 | A2 | 15 December 2011 |
| | | | | WO | 2011-155785 | A3 | 16 February 2012 |

Form PCT/ISA/210 (patent family annex) (July 2019)